# EUROPEAN PATENT SPECIFICATION

(11) **EP 1 409 495 B1**
(45) Date of publication and mention of the grant of the patent: **21.11.2007**
(21) Application number: 01959144.5
(22) Date of filing: 23.07.2001
(51) Int. Cl.: C07F 9/6584, C07F 15/00, C07F 17/02, C07F 9/50

(54) **DIAZAPHOSPHACYCLES FOR THE PREPARATION OF TRANSITION METAL COMPLEXES**
DIAZAPHOSPHACYCLEN ZUR HERSTELLUNG VON ÜBERGANGSMETALLKOMPLEXEN
DIAZAPHOSPHACYCLES POUR LA PREPARATION DE COMPLEXES DE METAUX DE TRANSITION

(43) Date of publication of application: 21.04.2004
(60) Divisional application: 07016269.8
(73) Proprietor: Wisconsin Alumini Research Foundation, Madison, WI 53707-7365 (US)
(72) Inventor: LANDIS, Clark, R., Madison, WI 53705 (US); JIN, Wiechang, Madison, WI 53705 (US); OWEN, Jonathan S., Pasadena, CA 91125 (US); CLARK, Thomas P., Madison, WI 53704 (US)
(74) Representative: McCluskie, Gail Wilson
(86) International application number: PCT/US2001/023227
(87) International publication number: WO 2003/010174

(56) References cited:
- WO-A-91/17998
- WILHELM H ET AL: "ZUR REACTION VON PHOSPHORYL- UND THIOPHOSPHORYLISOTHIOCYANATEN MIT PHOSPHANEN-DIE KRISTALLSTRUKTUR DES (C6H5O)2P(O)-NH-C(S)P(C6H5)2" PHOSPHORUS, SULFUR AND SILICON AND THE RELATED ELEMENTS, GORDON AND BREACH SCIENCE PUBLISHERS, AMSTERDAM, GB, vol. 73, no. 1-4, 1992, pages 81-91, XP008001098 ISSN: 1042-6507
- MAERKL G ET AL: "1,5-Diaza-3-phospha-cycloheptane-N,N'-Bis -[phosphinomethyl]-ethylendi amine mit optisch aktiven Seitenketten" TETRAHEDRON LETTERS, ELSEVIER SCIENCE PUBLISHERS, AMSTERDAM, NL, vol. 21, no. 36, 1980, pages 3467-3470, XP002188900 ISSN: 0040-4039 cited in the application
- BAR-NIR B B-A ET AL: "Addition of borane-protected secondary phosphines to imines. A route to protected mono-N-substituted-alpha-aminophosphines" TETRAHEDRON LETTERS, ELSEVIER SCIENCE PUBLISHERS, AMSTERDAM, NL, vol. 41, no. 32, 5 August 2000 (2000-08-05), pages 6143-6147, XP004243530 ISSN: 0040-4039 cited in the application
- LANDIS C.R. ET AL: "Rapid access to diverse arrays of chiral 3,4-diaza- phospholanes" ANGEWANDTE CHEMIE. INTERNATIONAL EDITION., vol. 40, no. 18, - 17 September 2001 (2001-09-17) pages 3432-3434, XP002193427 VERLAG CHEMIE. WEINHEIM., DE ISSN: 0570-0833

## Description

### FIELD OF THE INVENTION

The invention relates generally to diazaphosphacycles and to methods for synthesizing them. The invention also relates to metal complexes that may be formed from the novel diazaphosphacycles and to their use as catalysts.

### BACKGROUND OF THE INVENTION

Phosphines are used as ligands in a large number of known transition metal complexes, and phosphine ligands are included in many transition metal complexes used as catalysts. One of the reasons is that phosphines are known to be one of the best ligands for stabilizing transition metals. Phosphine ligands are often included in transition metal complexes used to catalyze hydroformylation reactions where hydrogen, an alkene, and carbon monoxide are converted to the corresponding aldehyde.

Phosphines are also included as ligands in various transition metal complexes used to catalyze hydrogenation reactions. In many of these reactions, inexpensive phosphines such as triphenylphosphine perform suitably. However, phosphines have also found a niche in more specialized areas such asymmetric hydrogenation and other catalytic transformations. The use of a chiral phosphine allows enantioselectivity in the catalytic reaction, and often high enantiomeric excesses may be achieved when a chiral phosphine is used as a ligand. The use of an enantioselective catalyst allows a desired enantiomer to be produced reducing undesired products while simultaneously reducing separation costs associated with the separation of enantiomers. Enantioselective hydrogenation catalysts may be as fast and selective as some of the best known enzymes, and such catalysts can result in greater than 99.9% production of one enantiomer.

Asymmetric hydrogenation is used to make commercially important products including biologically active compounds such as pesticides and pharmaceuticals. Asymmetric hydrogenation to being used more frequently in the pharmaceutical industry where expensive intermediate compounds are too valuable to waste. One of the first reactions employing a phosphine-containing catalyst in the pharmaceutical industry was the selective production of L-DOPA rather than R-DOPA.

As noted above, chiral phosphine ligands are central to many developments in transition metal-catalyzed enantioselective transformations. R. Noyori, Asymmetric Catalysis; John Wiley: New York, 1994. Recent demonstrations of high enantioselectivity for a wide range of hydrogenation reactions with Rh complexes of the DuPHOS, PennPHOS, RoPHOS, BASPHOS, CnrPHOS, and related ligands highlight the unusual efficacy of rigid phosphacycles. M. J. Burk, J. Am. Chem. Soc. 1991, 113, 8518-8519; M. J. Burk, Chemtracts-Organic Chemistry 1998, 11, 787-802; M. J. Burk, A. Pizzano, J.A. Martin, L.M. Liable-Sands, A.L. Rheingold, Organometallics 2000, 19, 250-260; M.J. Burk, F. Bienewald, S. Challenger, A. Derrick, J.A. Ramsden, J. Org. Chem. 1999, 64, 3290-3298; Z. Zhang, G. Zhu, Q. Jiang, D. Xiao, X. Zhang, J. Org. Chem. 1999, 64, 1774-1775; Q. Jiang, Y. Jiang, D. Xiao, P. Cao, X. Zhang, Angew. Chem. 1998, 110, 1100-1103; Angew. Chem., Int. Ed. Engl 1998, 37, 1100-1103; G. Zhu, P. Cao, Q. Jiang, X. Zhang, J. Am. Chem. Soc. 1997, 119, 1799-1800; Z. Chem, Q. Jiang, G. Zhu, D. Xiao, P. Cao, C. Guo, X. Zhang, J. Org. Chem. 1997, 62, 4521-4523; J. Holz, M. Quirmbach, U. Schmidt, D. Heller, R. Stürmer, A. Börner, J. Org. Chem. 1998, 63, 8031-8034; W. Li, Z. Zhang, D. Xiao, X. Zhang, J. Org. Chem. 2000, 65, 3489-3496; W. Li, Z. Zhang, D. Xiao, X. Zhang, Tetrahedron Lett. 1999, 40, 6701-6704; Y.-Y. Yan, T.V. RajanBabu, J. Org. Chem. 2000, 65, 900-906; J. Holz, D. Heller, R. Stürmer, A. Börner, Tetrahedron Lett. 1999, 40, 7059-7062; A. Marinetti, S. Jus, J.-P. Genêt, Tetrahedron Lett. 1999, 40, 8365-8368; A. Marinetti, S. Jus. J.-P. Genêt, L. Ricard, Tetrahedron 2000, 56, 95-100; A. Marinetti, S. Jus, J.-P. Genêt, Tetrahedron Lett. 1999, 40, 8365-8368; A. Marinetti, S. Jus, J.-P. Genêt, L. Ricard, Tetrahedron 2000, 56, 95-100.

Although significant efforts have been made to produce transition metal complexes for effecting enantioselective catalytic transformations, one persisting problem associated with chiral phosphine ligands is that they are difficult and expensive to produce, often requiring multi-step syntheses. Both the electron density of the phosphorus atom in phosphines and the size of the phosphine ligand as expressed by cone angles are known to impact the reactivity of metal complexes prepared from them. Therefore, the ability to modify chiral phosphines and determine structure property relationships are important factors in understanding and optimizing catalytic activity. However, the difficulty associated with synthesizing chiral phosphines has prevented the synthesis of libraries of such compounds for use in analyzing structure property relationships.

One specific group of phosphines, 3,4-diazaphospholanes, are five-membered rings containing two nitrogen atoms, two carbon atoms, and a phosphorus atom as ring members. In 3,4-diazaphospholanes, each of the two carbon atom ring members is bonded to one of the ring nitrogen atoms and the ring phosphorus atom. Very few 3,4-diazaphospholanes have thus far been reported.

Märkl *et al.* have prepared diazaphospholanes by reacting hydrazines with phosphorus compounds having the formula RP(CH₂OH)₂. This synthetic methodology is limited and does not provide any simple route to compounds having groups other than H bonded to the diazaphospholane ring carbon atoms. G. Märkl, G. Y. Jin, Tetrahedron Lett. 1980, 21, 3467-3470; and G. Märkl, G. Y. Jin, Tetrahedron Lett. 1981, 22, 229-232. Arbuzov *et al*. have utilized the same type of methodology to prepare other diazaphosphacycles from RP(CH₂OH)₂. B. A. Arbuzov, O. A. Erastov, G. N. Nikonov, R. P. Arshinova, I.P. Romanova, R A. Kadyrov, Izvestia Akad, Nauk SSSR, Seriya Khimicheskaya, 1993, 8, 1846-1850.

A need remains for chiral phosphines and methods for making them. A need also remains for transition metal complexes that include chiral phosphines and for transition metal complexes for catalyzing important reactions. A need further remains for libraries of chiral phosphines and transition metal complexes.

### SUMMARY OF THE INVENTION

The present invention provides diazaphosphacycles and methods for synthesizing them. The invention also provides transition metal complexes that include diazaphosphacycles and methods for using them in catalytic transformations.

A method of synthesizing a diazaphosphacycle is provided which includes reacting a phosphine with a diimine and optionally one or more equivalents of an acid halide, a sulfonyl halide, a phosphoryl halide or an acid anhydride in the substantial absence of O₂ to form the diazaphosphacycle. The phosphine has the formula I, the diimine has the formula II, and the diazaphosphacycle has the formula III 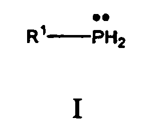 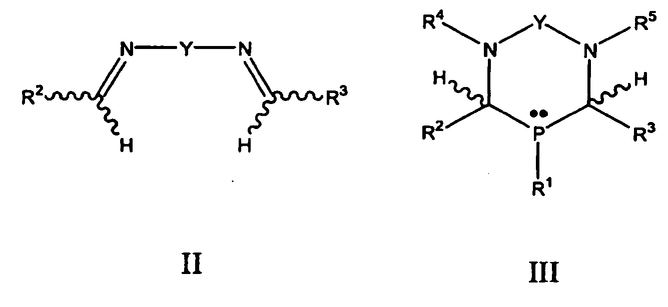
where R¹ is selected from the group consisting of substituted and unsubstituted aryl groups, substituted and unsubstituted alkyl groups, substituted and unsubstituted alkenyl groups, substituted and unsubstituted cycloalkyl groups, and substituted and unsubstituted ferrocenyl groups;
R² and R³ are independently selected from the group consisting of substituted and unsubstituted aryl groups, substituted and unsubstituted alkyl groups, substituted and unsubstituted cycloalkyl groups, substituted and unsubstituted heterocyclyl groups, and substituted and unsubstituted ferrocenyl groups;
R⁴ is selected from the group consisting of -H, substituted and unsubstituted alkyl groups, substituted and unsubstituted cycloalkyl groups, substituted and unsubstituted aryl groups, trialkylsilyl groups, triarylsilyl groups, alkyldiarylsilyl groups, dialkylarylsilyl groups, -C(=O)-R⁶ groups, -S(=O)₂-R⁶ groups, -P(=O)R⁶R⁷ groups, and -C(=NR⁶)-R⁷ groups;
R⁵ is selected from the group consisting of -H, substituted and unsubstituted alkyl groups, substituted and unsubstituted cycloalkyl groups, substituted and unsubstituted aryl groups, trialkylsilyl groups, triarylsilyl groups, alkyldiarylsilyl groups, dialkylarylsilyl groups, -C(=O)-R⁷ groups, -S(=O)₂-R⁶ groups, -P(=O)R⁶R⁷ groups, and -C(=NR⁶)-R⁷ groups;
R⁶ is selected from the group consisting of substituted and unsubstituted alkyl groups, substituted and unsubstituted alkenyl groups, substituted and unsubstituted cycloalkyl groups, substituted and unsubstituted aryl groups, -OH groups, substituted and unsubstituted alkoxy groups, substituted and unsubstituted aryloxy groups, -NH(alkyl) groups, -NH(aryl) groups, -N(aryl)₂ groups, -N(alkyl)₂ groups, -N(alkyl)(aryl) groups, -S-alkyl groups, and S-aryl groups;
R⁷ is selected from the group consisting of substituted and unsubstituted alkyl groups, substituted and unsubstituted alkenyl groups, substituted and unsubstituted cycloalkyl groups, substituted and unsubstituted aryl groups, -OH groups, substituted and unsubstituted alkoxy groups, substituted and unsubstituted aryloxy groups, -NH(alkyl) groups, -NH(aryl) groups, -N(aryl)₂ groups, -N(alkyl)₂ groups, -N(alkyl)(aryl) groups, -S-alkyl groups, and S-aryl groups;
R⁶ and R⁷ may be part of the same alkyl group, alkenyl group, or aryl group such that R⁴ and R⁵ together with the two nitrogen atoms of the diazaphosphacycle form a ring; and
Y is a linking group selected from the group consisting of substituted and unsubstituted cycloalkyl groups, substituted and unsubstituted aryl groups, substituted and unsubstituted alkenyl groups, silyl groups, substituted alkyl groups, and groups having the formula -(CH₂)ₙ- wherein n is selected from the group consisting of 0, 1, 2, and 3.
   Some methods are provided in which n is 0. Other methods are provided in which R² and R³ are identical, but are not part of the same group. Still other methods are provided in which Y is a cycloalkyl group, wherein one of the N atoms of the diimine is bonded to a first ring member C atom of the cycloalkyl group and the other N atom of the diimine is bonded to a second ring member C atom that is bonded to the first ring member C atom. Yet other methods are provided in which Y has the formula 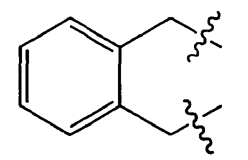 and the benzene ring of Y may be additionally substituted.
   Methods are also provided in which the diazaphosphacycle is selected from compounds having the formula IIIA or IIIB or mixtures thereof 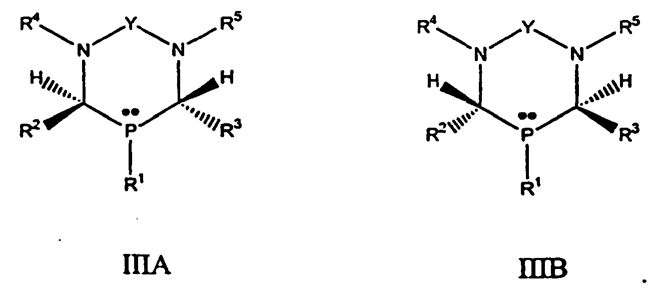
   Still other methods are provided in which the diazaphosphacycle has the formula IIIC 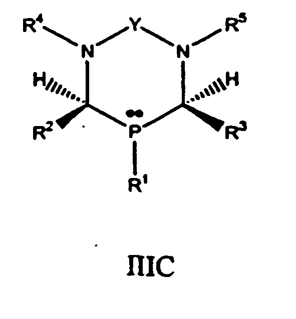
   Still other methods for synthesizing a diazaphosphacycle are provided in which the phosphine and the diimine are reacted in the presence of an acid such as hydrochloric acid or hydrobromic acid.
   In still other provided methods for synthesizing a diazaphosphacycle, the phosphine and the diimine are reacted in the presence of the acid halide, the sulfonyl halide, the phosphoryl halide, or the acid anhydride, and at least one of R⁴ and R⁵ is not H. In still other such methods R⁴ is a -C(=O)-R⁶ group and R⁵ is a - C(=O)-R⁷ group. In still other methods in which the phosphine and the diimine are reacted in the presence of an acid halide, the acid halide is phthaloyl dichloride or phthaloyl dibromide.
   Other methods for synthesizing a diazaphosphacycle are provided in which R¹ includes one or more -PH₂ group such that the phosphine is a polyphosphine. In still other such methods, the polyphosphine is selected from 1,2-diphosphinoethane, 1,2-diphosphinoethylene, 1,3-diphosphinopropane, substituted or unsubstituted 1,2-diphosphinobenzene groups, substituted or unsubstituted 1,8-diphosphinoanthracene groups, substituted or unsubstituted 1,8-diphosphino-9,10-dihydroanthracene groups, substituted or unsubstituted 1,8-diphosphinoxanthene groups, or 1,1'-diphosphinoferrocene groups.
   Still other method for synthesizing diazaphosphacycles are provided in which the phosphine, the diimine, and optionally the acid halide are reacted in a substantially deoxygenated solvent such as ether, an alcohol, water, dichloroethane, or combinations of these.
   Still further methods for synthesizing diazaphosphacycles are provided. These methods further include reacting an acid halide, an acid anhydride, a phosphoryl halide, or a sulfonyl halide with the diazaphosphacycle to produce a second diazaphosphacycle where R⁴ and R⁵ are both -H in the diazaphosphacycle and at least one of R⁴ and R⁵ is not -H in the second diazaphosphacycle.
   In yet another provided method, the method is used to generate a library of different diazaphosphacycles such as by using a combinatorial method.
   Another method for synthesizing a diazaphosphacycle is provided. The method includes reacting a diimine with an acid halide, a diacid dihalide, a sulfonyl halide, a disulfonyl dihalide, a phosphoryl halide, or a diphosphoryl dihalide to form a dihalo intermediate compound. The method further includes reacting the dihalo intermediate compound with a phosphine of formula R¹-PH₂ in the substantial absence of O₂ to form the diazaphosphacycle. In the method, R¹ is selected from substituted or unsubstituted aryl groups, substituted or unsubstituted alkyl groups, substituted or unsubstituted alkenyl groups, substituted or unsubstituted cycloalkyl groups, or substituted or unsubstituted ferrocenyl groups; and the diimine has the formula IV 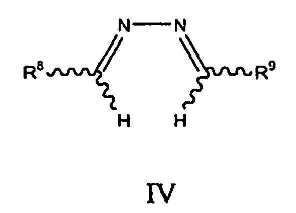
where R⁸ and R⁹ are independently selected from substituted or unsubstituted aryl groups, substituted or unsubstituted alkyl groups, substituted or unsubstituted cycloalkyl groups, substituted or unsubstituted heterocyclyl groups, or substituted or unsubstituted ferrocenyl groups.

Still other such methods are provided in which the diimine is reacted with a diacyl dihalide, and the diacyl dihalide has the formula V or the formula VI and the diazaphosphacycle has the formula VII or the formula VIII 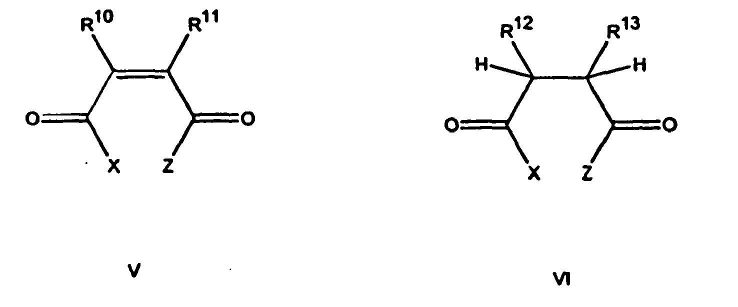 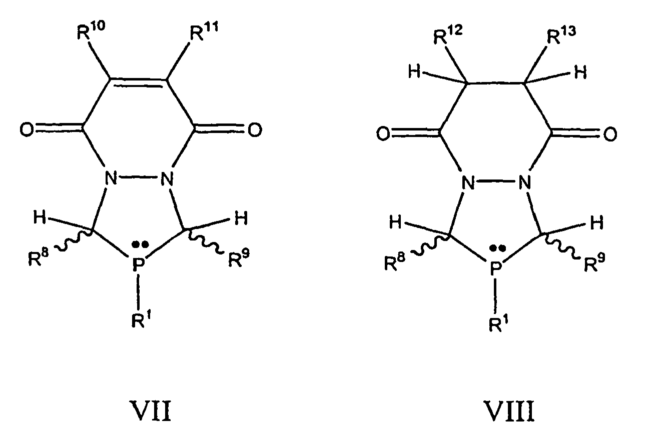 where:
R¹⁰, R¹¹, R¹², and R¹³ are independently selected from -H, substituted or unsubstituted alkyl groups, substituted or unsubstituted cycloalkyl groups, or substituted or unsubstituted aryl groups;
R¹⁰ and R¹¹ may join together to form a substituted or unsubstituted aryl group or a substituted or unsubstituted cycloalkenyl group;
R¹² and R¹³ may join together to form a substituted or unsubstituted cycloalkenyl group or a substituted or unsubstituted cycloalkyl group; and
X and Z are independently selected from the group consisting of -Cl and -Br.

Other methods are provided in which R⁸ and R⁹ are identical but are not part of the same group and in which R⁸ and R⁹ are substituted or unsubstituted aryl groups.

Still other methods for synthesizing diazaphosphacycles are provided in which the diacyl dihalide is phthaloyl dichloride.

The invention further provides diazaphosphacycles having the formula III and salts of the diazaphosphacycles. 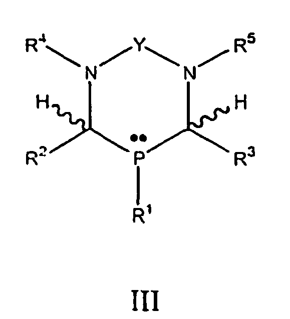 In formula III,
R¹ is selected from substituted or unsubstituted aryl groups, substituted or unsubstituted alkyl groups, substituted or unsubstituted alkenyl groups, substituted or unsubstituted cycloalkyl groups, or substituted or unsubstituted ferrocenyl groups;
R² and R³ are independently selected from substituted or unsubstituted aryl groups, substituted or unsubstituted alkyl groups, substituted or unsubstituted cycloalkyl groups, substituted or unsubstituted heterocyclyl groups, or substituted or unsubstituted ferrocenyl groups;
R⁴ is selected from -H, substituted or unsubstituted alkyl groups, substituted or unsubstituted cycloalkyl groups, substituted or unsubstituted aryl groups, trialkylsilyl groups, triarylsilyl groups, alkyldiarylsilyl groups, dialkylarylsilyl groups, -C(=O)-R⁶ groups, -S(=O)2-R⁶ groups, -P(=O)R⁶R⁷ groups, or-C(=NR⁶)-R⁷ groups;
R⁵ is selected from -H, substituted or unsubstituted alkyl groups, substituted or unsubstituted cycloalkyl groups, substituted or unsubstituted aryl groups, trialkylsilyl groups, triarylsilyl groups, alkyldiarylsilyl groups, dialkylarylsilyl groups, -C(=O)-R⁷ groups, -S(=O)2-R⁶ groups, -P(=O)R⁶R⁷ groups, or - C(=NR⁶)-R⁷ groups;
R⁶ is selected from substituted or unsubstituted alkyl groups, substituted or unsubstituted alkenyl groups, substituted or unsubstituted cycloalkyl groups, substituted or unsubstituted aryl groups, -OH groups, substituted or unsubstituted alkoxy groups, substituted or unsubstituted aryloxy groups, -NH(alkyl) groups, - NH(aryl) groups, -N(aryl)₂ groups, -N(alkyl)₂ groups, -N(alkyl)(aryl) groups, -S-alkyl groups, or S-aryl groups;
R⁷ is selected from substituted or unsubstituted alkyl groups, substituted or unsubstituted alkenyl groups, substituted or unsubstituted cycloalkyl groups, substituted or unsubstituted aryl groups, -OH groups, substituted or unsubstituted alkoxy groups, substituted or unsubstituted aryloxy groups, -NH(alkyl) groups, - NH(aryl) groups, -N(aryl)₂ groups, -N(alkyl)₂ groups, -N(alkyl)(aryl) groups, -S-alkyl groups, or S-aryl groups;
R⁶ and R⁷ may be part of the same alkyl group, alkenyl group, or aryl group such that R⁴ and R⁵ together with the two nitrogen atoms of the diazaphosphacycle form a ring; and
Y is a linking group selected from the group consisting of substituted and unsubstituted cycloalkyl groups, substituted and unsubstituted aryl groups, substituted and unsubstituted alkenyl groups, silyl groups, substituted alkyl groups, and groups having the formula -(CH₂)ₙ- where n is selected from 0, 1, 2, or 3.

Still further diazaphosphacycles are provided in which n is 0. Yet other diazaphosphacycles are provided in which R⁴ and R⁵ are both -H. Still other diazaphosphacycles are provided in which R⁴ is a -C(=O)-R⁶ group and R⁵ is a -C(=O)-R⁷ group.

Still further diazaphosphacycles are provided which have the formula IX where R¹, R², and R³ have any of the values set forth above and in which the benzene ring of formula IX may be substituted or unsubstituted

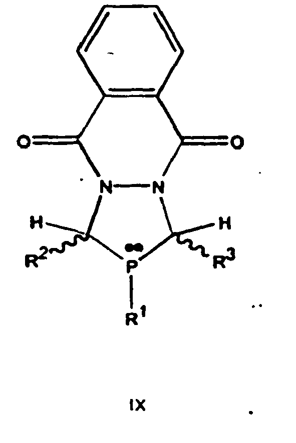

Still further diazaphosphacycles are provided that have the formula IIIA, IIIB, or IIIC as set forth above.

Still further diazaphosphacycles are provided in which the diazaphosphacycle is present as a mixture of enantiomers.

Still further diazaphosphacycles are provided in which Y is a cycloalkyl group. In some diazaphosphacycles where Y is a cycloalkyl group, one of the N atoms is bonded to a first ring member C atom of the cycloalkyl group and the other N atom is bonded to a second ring member C atom that is bonded to the first ring member C atom.

Still other diazaphosphacycles are provided in which Y has the formula 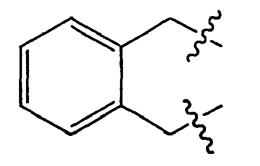 and the benzene ring of Y may be additionally substituted.

The invention further provides diazaphosphacycles having the formula X 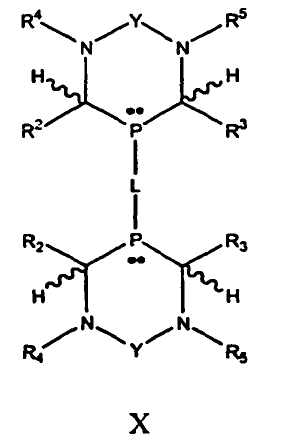 where L is a linking group selected from substituted or unsubstituted alkyl groups, substituted or unsubstituted alkenyl groups, substituted or unsubstituted aryl groups, or substituted and unsubstituted ferrocenyl groups, and the other variables have the values set forth with respect to the diazaphosphacycles of formula III set forth above. Still other such diazaphosphacycles are provided in which L is selected from ethane, ethylene, propane, benzene, anthracene, 9,10-dihydroanthracene, xanthene, or ferrocene. Transition metal complexes including these diazaphosphacycles are also provided in which at least one of the phosphorus atoms of the diazaphosphacycle is bonded to the transition metal. In other such transition metal complexes two of the phosphorus atoms of the diazaphosphacycle are bonded to the transition metal.

The invention further provides transition metal complexes that include a diazaphosphacycle according to the invention and a transition metal where the phosphorus atom of the diazaphosphacycle is bonded to the transition metal. Transition metal complexes are further provided in which the transition metal is selected from of Rh, Ru, Pd, Pt, Ir, Ni, Co, or Fe. Still other transition metal complexes are provided in which the transition metal complex has catalytic activity. A method for catalyzing a chemical reaction using a transition metal complex of the present invention as a catalyst is further provided.

Methods for synthesizing diazaphosphacycle transition metal complexes are further provided. The methods include reacting a diazaphosphacycle of the present invention with a starting transition metal complex to produce the diazaphosphacycle transition metal complex. The starting transition metal complex includes at least one ligand that is replaced by the diazaphosphacycle.

Other methods for synthesizing a diazaphosphacycle transition metal complex are provided in which the ligand replaced by the diazaphosphacycle is selected from phosphines; amines; diamines; CO; Cl; Br; nitriles; 1,5-cyclooctadiene, norbornadiene, and other dienes; alkenes; arenes; ketones; alcohols; ethers; thiols; or sulfoxides.

Further objects, features and advantages of the invention will be apparent from the following detailed description when taken in conjunction with the accompanying drawings.

### BRIEF DESCRIPTION OF THE DRAWINGS

FIG. 1 is an X-ray crystal structure ORTEP diagram of *rac*-6e with the displacement ellipsoids drawn at the 50% probability level.
FIG. 2 is an X-ray crystal structure of *rac-*8 The ORTEP diagram is drawn with 30% probability ellipsoids. Solvent molecules and hydrogens have been removed for clarity.
FIG. 3 is a diagram showing a few of the catalytic reactions that metal complexes with phosphorus ligands catalyze.
FIG. 4 is a ³¹P NMR spectrum (¹H coupled) of compound 1a with a *rac:meso* ratio of about 30:1.
FIG. 5 is a ³¹P NMR spectrum (¹H coupled) of *meso*-3.
FIG. 6 is a ³¹P NMR spectrum (¹H coupled) of compound 7.
FIG. 7 is a ¹H NMR spectrum of a Rh(NBD)(Cl) complex with compound *rac*-6b.
FIG. 8 is a GC spectrum for the hydrogenation product of the hydrogenation of methylacetamidoacrylate using a chiral column with a racemic mixture of the catalyst with a Rh diazaphosphacycle complex.
FIG. 9 is a ¹H NMR spectrum of a Rh(NBD)(Cl) complex with compound *rac*-6a.
FIG. 10 is a ³¹P NMR spectrum (¹H coupled) of a Rh(NBD)(Cl) complex with compound *rac*-6a.
FIG. 11 is a ¹H NMR spectrum of [{1,2-bis(diazaphospholanes)benzene}RhCl]₂ where the 1,2-bis(diazaphospholane)benzene is compound 8.
FIG. 12 is a ³¹P NMR spectrum (¹H coupled) of [{1,2-bis(diazaphospholanes)benzene}RhCl]₂ where the 1,2-bis(diazaphospholane)benzene is compound 8.
FIG. 13 is a stacked NMR spectrum comparing the ³¹P NMR spectrum of [{1,2-bis(diazaphospholanes)benzene}RhCl]₂ (top) with that of {Rhodium[1,2-bis(diazaphospholanes)benzene](COD)}BF₄ (bottom) where the 1,2-bis(diazaphospholane)benzene is compound 8.
FIG. 14 is an X-ray crystal structure ORTEP diagram of [{1,2-bis(diazaphospholanes)benzene}RhCl]₂ where the 1,2-bis(diazaphospholane)benzene is compound 8.
FIG. 15 is an X-ray crystal structure ORTEP diagram of a Rh(NBD)(Cl) complex with compound *rac-*6a.
FIG. 16 is an X-ray crystal structure ORTEP diagram of a methylene chloride solvated Rh(NBD(Cl) complex with a diazaphospholane (6).

### DETAILED DESCRIPTION OF THE INVENTION

Generally, the invention provides diazaphosphacycles such as, but not limited to, 3,4-diazaphospholanes, and methods for preparing them. The invention also generally provides transition metal complexes and methods for preparing them from diazaphosphacycles. The metal complexes have catalytic activity and are suitable for use in a wide variety of catalytic transformations such, as, but not limited to, hydrogenation and hydroformylation reactions.

Variables used in the chemical formulas are understood to be used consistently throughout. For example, R¹ is used to refer to the same groups unless otherwise specifically noted.

The phrase "diazaphosphacycles" refers to a cyclic compound that includes one phosphorus atom and two nitrogen atoms as ring members. The phrase "diazaphospholane" refers to a five membered ring that includes one phosphorus atom and two nitrogen atom ring members. A diazaphospholane is a type of a diazaphosphacycle.

A reaction or method run in the "substantial absence of oxygen" means that the reaction is carried out using standard methodology known to those skilled in the art of working with air-sensitive compounds. This does not require the complete absence of O₂ only the absence of enough oxygen so that oxygen does not interfere with the desired reaction. Common procedures for performing a reaction or method in the substantial absence of oxygen include, but are not limited to the use of Schlenk techniques, the use of glove bags or glove boxes, and the use of solvents from which most, if not all, of the oxygen has been removed using standard techniques such as by bubbling an inert gas through the solvent or by freeze-pump-thaw techniques known to those skilled in the art. A reaction performed in the substantial absence of oxygen is generally conducted under an inert atmosphere such as under a N₂ or argon atmosphere.

Generally, a reference to a certain element such as hydrogen or H is meant to include all isotopes of that element. For example, a compound having the structure R-PH₂ is defined to include those compounds where one or both of the H atoms bonded to the P atom is replaced by a deuterium atom, a tritium atom, or both. An exception to the general definition that reference to a certain element is meant to include all isotopes of that element is when the element is referred to with respect to NMR spectroscopy or a deuterated solvent used in conjunction with NMR spectroscopy.

A wavy line drawn through a line in a structural formula indicates point of attachment of a group.

A wavy line drawn between an atom and a group in a structural formula indicates that a bond exists between the atom and the group, but that the position of the group is not specified. For example a wavy bond between an alkene carbon atom and a group may be used to represent cis and trans isomers, and a wavy bond from an alkyl carbon to a group indicates that no stereochemistry is assigned and the wavy bond may thus be used to represent both S and R configurations at the alkyl carbon.

The acronym "COD" refers to 1,5-cyclooctadiene.

The acronym "NBD" refers to 2,5-norbornadiene also known as bicyclo[2.2.1]hepta-2,5-diene and norbornadiene.

The phrase "unsubstituted alkyl" refers to alkyl groups that do not contain heteroatoms. Thus the phrase includes straight chain alkyl groups such as methyl, ethyl, propyl, butyl, pentyl, hexyl, heptyl, octyl, nonyl, decyl, undecyl, dodecyl and the like. The phrase also includes branched chain isomers of straight chain alkyl groups, including but not limited to, the following which are provided by way of example: -CH(CH₃)₂, -CH(CH₃)(CH₂CH₃), -CH(CH₂CH₃)₂, -C(CH₃)₃, -C(CH₂CH₃)₃, -CH₂CH(CH₃)₂, -CH₂CH(CH₃)(CH₂CH₃), -CH₂CH(CH₂CH₃)₂, -CH₂C(CH₃)₃, -CH₂C(CH₂CH₃)₃, -CH(CH₃)CH(CH₃)(CH₂CH₃), -CH₂CH₂CH(CH₃)₂, -CH₂CH₂CH(CH₃)(CH₂CH₃), -CH₂CH₂CH(CH₂CH₃)₂, -CH₂CH₂C(CH₃)₃, -CH₂CH₂C(CH₂CH₃)₃, -CH(CH₃)CH₂CH(CH₃)₂, -CH(CH₃)CH(CH₃)CH(CH₃)₂, -CH(CH₂CH₃)CH(CH₃)CH(CH₃)(CH₂CH₃), and others. Thus, the phrase unsubstituted alkyl groups includes primary alkyl groups, secondary alkyl groups, and tertiary alkyl groups. Preferred unsubstituted alkyl groups include straight and branched chain alkyl groups having 1 to 20 carbon atoms. More preferred such unsubstituted alkyl groups have from 1 to 10 carbon atoms while even more preferred such groups have from 1 to 6 carbon atoms. Most preferred unsubstituted alkyl groups include straight and branched chain alkyl groups having from 1 to 3 carbon atoms and include methyl, ethyl, propyl, and - CH(CH₃)₂.

The phrase "substituted alkyl" refers to an unsubstituted alkyl group as defined above in which one or more bonds to a carbon(s) or hydrogen(s) are replaced by a bond to non-hydrogen and non-carbon atoms such as, but not limited to, a halogen atom in halides such as F, Cl, Br, and I; an oxygen atom in groups such as hydroxyl groups, alkoxy groups, aryloxy groups, and ester groups; a sulfur atom in groups such as thiol groups, alkyl and aryl sulfide groups, sulfone groups, sulfonyl groups, and sulfoxide groups; a nitrogen atom in groups such as amines, amides, alkylamines, dialkylamines, arylamines, alkylarylamines, diarylamines, N-oxides, imides, and enamines; a silicon atom in groups such as trialkylsilyl groups, dialkylarylsilyl groups, alkyldiarylsilyl groups, and triarylsilyl groups; a phosphorus atom in groups such as phosphines, and phosphoryls; and other heteroatoms in various other groups. Substituted alkyl groups also include groups in which one or more bonds to a carbon(s) or hydrogen(s) atom is replaced by a bond to a heteroatom such as oxygen in carbonyl, carboxyl, and ester groups; nitrogen in groups such as imines, oximes, hydrazones, and nitriles. Substituted alkyl groups include, among others, alkyl groups in which one or more bonds to a carbon or hydrogen atom is/are replaced by one or more bonds to fluorine atoms. Other alkyl groups include those in which one or more bonds to a carbon or hydrogen atom is replaced by a bond to an oxygen atom such that the substituted alkyl group contains a hydroxyl, alkoxy, aryloxy, or heterocyclyloxy group. Still other substituted alkyl groups include alkyl groups that have an amine group.

The phrase "unsubstituted alkenyl" refers to an "unsubstituted alkyl" group as defined above where at least one single C-C bond of the unsubstituted alkyl group is replaced by a double bond.

The phrase "substituted alkenyl" has the same meaning with respect to unsubstituted aryl groups that substituted alkyl groups has with respect to unsubstituted alkyl groups.

The phrase "unsubstituted cycloalkyl" refers to a cycloalkyl group where none of the carbon atoms of the cycloalkyl ring is bonded to an element other than H except for the carbon atom(s) bonded as the point of attachment. Examples of unsubstituted cycloalkyl groups include cyclopropyl, cyclobutyl, cyclopentyl, cyclohexyl, cycloheptyl, and cyclooctyl groups. Cyclohexyl and cyclopentyl groups are preferred cycloalkyl groups.

The phrase "substituted cycloalkyl" has the same meaning with respect to unsubstituted cycloalkyl groups that substituted alkyl groups have with respect to unsubstituted alkyl groups. However, a substituted cycloalkyl group also includes cycloalkyl groups in which one or more ring carbon atoms of the cycloalkyl group is bonded to a substituted and/or unsubstituted alkyl group. Thus, the phrase "substituted cycloalkyl" includes, but is not limited to methylcyclohexyl, and chlorocyclopentyl groups among others.

The phrase "unsubstituted aryl" refers to aryl groups that are not substituted. Thus the phrase includes, but is not limited to, groups such as phenyl, biphenyl, anthracenyl, naphthenyl, and xanthenyl by way of example. Although the phrase "unsubstituted aryl" includes groups containing condensed rings such as naphthalene, it does not include aryl groups that have other groups such as alkyl or halo groups bonded to one of the ring members as aryl groups such as tolyl are substituted aryl groups. A preferred unsubstituted aryl group is phenyl. Unsubstituted aryl groups may be bonded to one or more atom in the parent structural formula.

The phrase "substituted aryl group" has the same meaning with respect to unsubstituted aryl groups that substituted alkyl groups have with respect to unsubstituted alkyl groups. However, a substituted aryl group also includes aryl groups in which one or more aromatic carbons of the aryl group is bonded to a substituted and/or unsubstituted alkyl group. Thus, the phrase "substituted aryl" includes, but is not limited to tolyl, and hydroxyphenyl among others.

All ranges recited herein include all combinations and subcombinations included within that range's limits. For example, a temperature range of from about 20°C to about 65°C includes ranges of from 20°C to 60°C, of from 25°C to 30°C, of from 25°C to 28°C, and of from 20°C to 30°C, etc. Furthermore, one skilled in the art will recognize that any listed range can be easily recognized as sufficiently describing and enabling the same range being broken down into at least equal halves, thirds, quarters, fifths, tenths, etc. As a nonlimiting example, each range discussed herein can be readily broken down into a lower third, middle third, and upper third.

An acid chloride refers to a compound having at least one carboxylic acid group where the -OH group of the carboxylic acid moiety is replaced with a halogen group such as, but not limited to, -Cl or-Br. A diacid dichloride is a type of acid chloride and refers to a compound having at least two carboxylic acid groups where the -OH groups have been replaced with halogen groups. Examples of diacid dichlorides include, but are not limited to, oxalyl chloride, phthaloyl dichloride, and phthaloyl dibromide.

A method of synthesizing a diazaphosphacycle includes reacting a phosphine with a diimine and optionally one or more equivalents of an acid halide, a sulfonyl halide, a phosphoryl halide, or an acid anhydride in the substantial absence of O₂ to form the diazaphosphacycle. The phosphine has the formula I 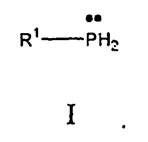 R¹ is selected from substituted or unsubstituted aryl groups, substituted or unsubstituted alkyl groups, substituted or unsubstituted alkenyl groups, substituted or unsubstituted cycloalkyl groups, or substituted or unsubstituted ferrocenyl groups. Preferred R¹ groups include substituted and unsubstituted phenyl groups and substituted and unsubstituted cycloalkyl groups such as, but not limited to substituted and unsubstituted cyclopentyl groups and cyclohexyl groups. Other preferred R¹ groups include one or more -PH₂ group such that the phosphine is a polyphosphine. Employing a polyphosphine in the method provides for the production of bidentate ligands. Examples of suitable polyphosphines for use in the methods of the invention include, but are not limited to, 1,2-diphosphinoethane, 1,2-diphosphinoethylene, 1,3-diphosphinopropane, substituted or unsubstituted 1,2-diphosphinobenzene groups, substituted or unsubstituted 1,8-diphosphinoanthracene groups, substituted or unsubstituted 1,8-diphosphino-9,10-dihydroanthracene groups, substituted or unsubstituted 1,8-diphosphinoxanthene groups, or 1,1'-diphosphinoferrocene groups.

The reaction of a diimine with a phosphine of formula I is preferably conducted in a solvent such as, but not limited to, a substantially deoxygenated ether such as diethyl ether or tetrahydrofuran; a substantially deoxygenated alcohol such as ethanol or methanol; substantially deoxygenated water; or substantially deoxygenated dichloroethane. An acid is preferably present when the diimine reacts with the phosphine of formula I. Examples of suitable acids include, but are not limited to hydrochloric acid and hydrobromic acid.

Although not required, in certain preferred methods according the invention, the diimine and the phosphine are reacted in the presence of the optional acid halide, the sulfonyl halide, the phosphoryl halide, or the acid anhydride. The presence of one of the optional halides or anhydride provides for carboxylation, phosphorylation, or sulfonylation of one or both of the N atoms in diazaphosphacycle ring. In some preferred embodiments, the method is conducted in the presence of an acid halide such as, but not limited to acetyl chloride, acetyl bromide, phthaloyl dichloride, or phthaloyl dibromide. In other preferred embodiments, the reaction is conducted in the presence of a diacid dihalide such as phthaloyl dichloride or phthaloyl dibromide. In still other preferred embodiments, the reaction of the diimine with the phosphine is conducted in the presence of an acid anhydride.

The reaction between the diimine and the phosphine is typically conducted at temperatures ranging from less than 0°C to about 50°C. More preferably, the reaction is conducted at temperatures ranging from at or about 0°C to at or about 25°C.

In the methods of synthesizing diazaphosphacycles, the diimine reacted with the phosphine of formula I has the formula II. The diazaphosphacycle formed has the formula III

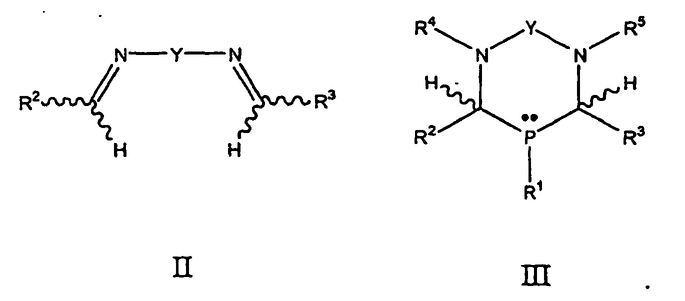

R² and R³ are independently selected from substituted or unsubstituted aryl groups, substituted or unsubstituted alkyl groups, substituted or unsubstituted cycloalkyl groups, substituted or unsubstituted heterocyclyl groups, or substituted or unsubstituted ferrocenyl groups. In some preferred methods and diazaphosphacycles of the invention, R² and R³ are identical, but are not part of the same group. In other words, if R² is a phenyl group, then R³ is another phenyl group. Preferred R² and R³ groups include phenyl, 2-furanyl, protected pyrrolyl, n-propyl, i-propyl, t-butyl, ferrocenyl, o-hydroxyphenyl, o-tolyl, 2-naphthyl, and pentafluorophenyl groups.

R⁴ is selected from -H, substituted or unsubstituted alkyl groups, substituted or unsubstituted cycloalkyl groups, substituted or unsubstituted aryl groups, trialkylsilyl groups, triarylsilyl groups, alkyldiarylsilyl groups, dialkylarylsilyl groups, -C(=O)-R⁶ groups, -S(=O)₂-R⁶ groups, -P(=O)R⁶R⁷ groups, or -C(=NR⁶)-R⁷ groups. Preferred R⁴ groups include -H, and -C(=O)-R⁶ groups.

R⁵ is selected from -H, substituted or unsubstituted alkyl groups, substituted or unsubstituted cycloalkyl groups, substituted or unsubstituted aryl groups, trialkylsilyl groups, triarylsilyl groups, alkyldiarylsilyl groups, dialkylarylsilyl groups, -C(=O)-R⁷ groups, -S(=O)₂-R⁷ groups, -P(=O)R⁶R⁷ groups, or -C(= NR⁶)-R⁷ groups. Preferred R⁵ groups include -H and -C(=O)-R⁷ groups. In some preferred methods and diazaphosphacycles, R⁴ is a -C(=O)-R⁶ group and R⁵ is a -C(=O)-R⁷ group.

R⁶ is selected from substituted or unsubstituted alkyl groups, substituted or unsubstituted alkenyl groups, substituted or unsubstituted cycloalkyl groups, substituted or unsubstituted aryl groups, -OH groups, substituted or unsubstituted alkoxy, groups, substituted or unsubstituted aryloxy groups, -NH(alkyl) groups, -NH(aryl) groups, -N(aryl)₂ groups, -N(alkyl)₂ groups, -N(alkyl)(aryl) groups, -S-alkyl groups, or S-aryl groups. Preferred R⁶ groups include alkyl groups such as methyl, ethyl, propyl, butyl, pentyl, and hexyl groups and groups where R⁶ and R⁷ join together with the two ring nitrogen atoms of the diazaphosphacycle to form a ring.

R⁷ is selected from substituted or unsubstituted alkyl groups, substituted or unsubstituted alkenyl groups, substituted or unsubstituted cycloalkyl groups, substituted or unsubstituted aryl groups, -OH groups, substituted or unsubstituted alkoxy groups, substituted or unsubstituted aryloxy groups, -NH(alkyl) groups, -NH(aryl) groups, -N(aryl)₂ groups, -N(alkyl)₂ groups, -N(alkyl)(aryl) groups, -S-alkyl groups, or S-aryl groups. Preferred R⁷ groups include alkyl groups such as methyl, ethyl, propyl, butyl, pentyl, and hexyl groups and groups where, as indicated above, R⁶ and R⁷ join together with the two ring nitrogen atoms of the diazaphosphacycle to form a ring

R⁶ and R⁷ may be part of the same alkyl group, alkenyl group, or aryl group such that R⁴ and R⁵ together with the two nitrogen atoms of the diazaphosphacycle form a ring. Preferred such compounds include those where the ring formed has 6 ring members.

Y is a linking group selected from substituted or unsubstituted cycloalkyl groups, substituted or unsubstituted aryl groups, substituted or unsubstituted alkenyl groups, silyl groups, substituted alkyl groups, or groups having the formula -(CH₂)ₙ- wherein n is selected from the group consisting of 0, 1, 2, and 3. In some preferred methods and diazaphosphacycles, Y is a -(CH₂)n-group where n is 0. In such compounds the nitrogen atoms of the diazaphosphacycle are directly bonded to one another and the compound is a 3,4-diazaphospholane. In other preferred methods and diazaphosphacycles, Y is a cycloalkyl group and one of the nitrogen atoms of the diimine is bonded to a first ring member carbon atom of the cycloalkyl group and the other nitrogen atom of the diimine is bonded to a second ring member carbon atom. Furthermore, in such preferred compounds, the second ring member carbon atom of the cycloalkyl group is directly bonded to the first ring member carbon atom of the cycloalkyl group such that the cycloalkyl group is a 1,2-disubstituted cycloalkyl group such as a 1,2-disubstituted cyclohexyl group. Both *cis* and *trans* 1,2-disubstituted alkyl groups are preferred. Other preferred Y groups have the following formula where the benzene ring of the group may be further substituted:

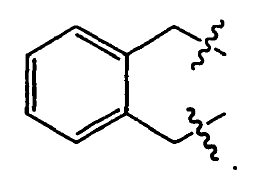

In other preferred methods and diazaphosphacycles, the diazaphosphacycle has the formula IIIA, the formula IIIB, or is a mixture of diazaphosphacycles of formulas IIIA and IIIB. Such diazaphosphacycles are generally referred to as *rac* compounds. In more preferred such diazaphosphacycles, Y is a -(CH₂)ₙ- group where n is 0.

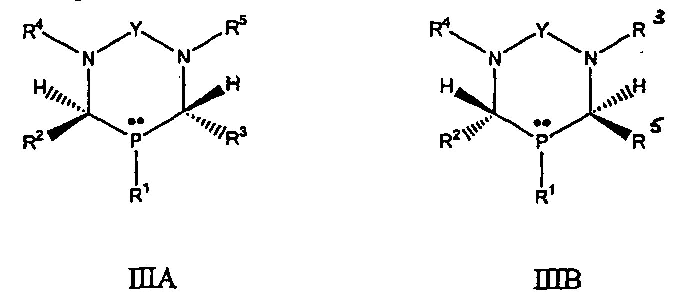

In other preferred methods and diazaphosphacycles, the diazaphosphacycle has the formula IIIC. Such compounds are generally referred to as *meso* compounds. In more preferred such compounds, Y is a -(CH₂)ₙ- group where n is 0 so that the ring nitrogen atoms of the diazaphosphacycle are directly bonded to one another.

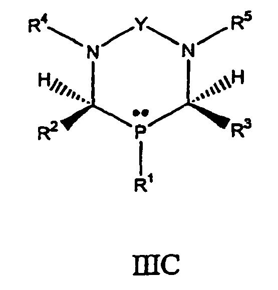

The methods disclosed herein may be used to produce diazaphosphacycles where both R⁴ and R⁵ are -H. Such a method typically involves reaction of the phosphine of formula I with the diimine of formula II in the absence of acid halide, acid anhydride, sulfonyl halide, and/or phosphoryl halide. When such a method is used, the method may include the later addition of an acid halide, an acid anhydride, a sulfonyl halide, or a phosphoryl halide. Preferably an acid halide or an acid anhydride is used in such a method. The later addition of one of the above-specified reagents forms a second diazaphosphacycle in which at least one of R⁴ and R⁵ is not -H. In other preferred such methods, neither R⁴ nor R⁵ is an -H in the second diazaphosphacycle.

The widely different groups that may be used for R¹-R⁶ and Y in the method of the invention allows a library of different diazaphosphacycles to be produced from readily available starting materials. Such a library may be produced using standard combinatorial methods allowing for the production of large numbers of diazaphosphacycles.

A first alternative method of synthesizing a diazaphosphacycle includes reacting a diimine with an acid halide, a diacid dihalide, a sulfonyl halide, a disulfonyl dihalide, a phosphoryl halide, or a diphosphoryl dihalide to form a dihalo intermediate compound. The method further includes reacting the dihalo intermediate compound with a phosphine of formula R¹-PH2 in the substantial absence of O₂ to form the diazaphosphacycle. In the method, R¹ is selected from substituted or unsubstituted aryl groups, substituted or unsubstituted alkyl groups, substituted or unsubstituted alkenyl groups, substituted or unsubstituted cycloalkyl groups, or substituted or unsubstituted ferrocenyl groups; and the diimine has the formula IV

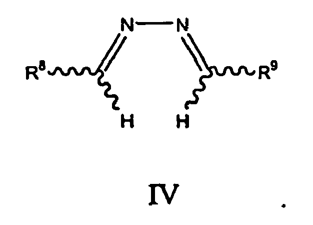

R⁸ and R⁹ are independently selected from substituted or unsubstituted aryl groups, substituted or unsubstituted alkyl groups, substituted or unsubstituted cycloalkyl groups, substituted or unsubstituted heterocyclyl groups, or substituted or unsubstituted ferrocenyl groups. Any of the reaction conditions suitable for the previously described method may be used in conjunction with this first alternative method. In some preferred such methods and diazaphosphacycles produced therefrom, R⁸ and R⁹ are identical, but are not part of the same group. In other words, if R⁸ is a phenyl group, then R⁹ is another phenyl group. Preferred R⁸ and R⁹ groups include phenyl, 2-furanyl, protected pyrrolyl, n-propyl, i-propyl, t-butyl, ferrocenyl, o-hydroxyphenyl, o-tolyl, 2-naphthyl, and pentafluorophenyl groups. Substituted and unsubstituted aryl groups are particularly suitable as R⁸ and R⁹ groups.

Still other such methods are provided in which the diimine is reacted with a diacyl dihalide, and the diacyl dihalide has the formula V or the formula VI and the diazaphosphacycle has the formula VII or the formula VIII

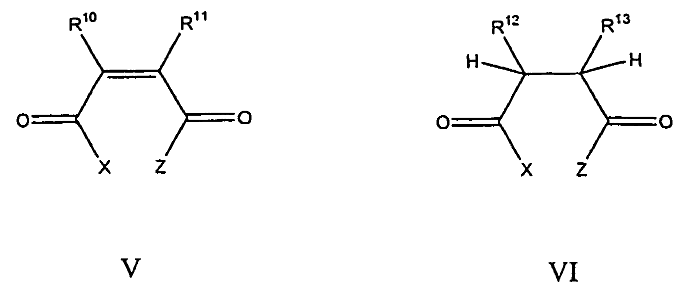

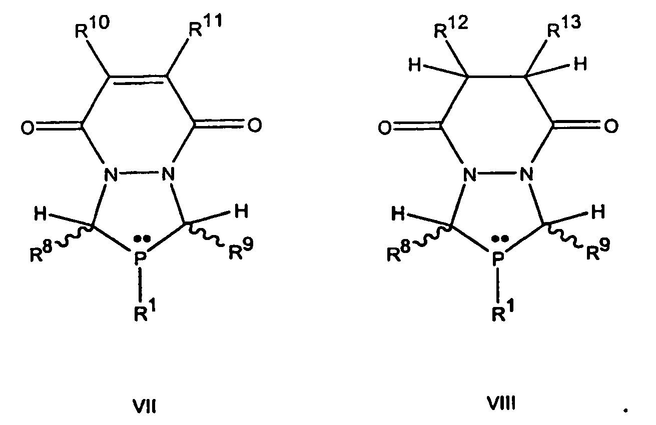

R¹⁰, R¹¹, R¹², and R¹³ are independently selected from -H, substituted or unsubstituted alkyl groups, substituted or unsubstituted cycloalkyl groups, or substituted or unsubstituted aryl groups. R¹⁰ and R¹¹ may further join together to form a substituted or unsubstituted aryl group or a substituted or unsubstituted cycloalkenyl group. Similarly, R¹² and R¹³ may join together to form a substituted or unsubstituted cycloalkenyl group or a substituted or unsubstituted cycloalkyl group.

X and Z are independently selected from -Cl or -Br.

In particularly preferred methods for synthesizing diazaphosphacycles according to the alternative method, phthaloyl dichloride is the diacyl dihalide of formula V.

Preferred diazaphosphacycles include any of the compounds having the formulas III, IIIA, IIIB, IIIC, VII, or VIII produced by any of the methods of the present invention. Preferred diazaphosphacycles of the invention further include compounds of the formula IX 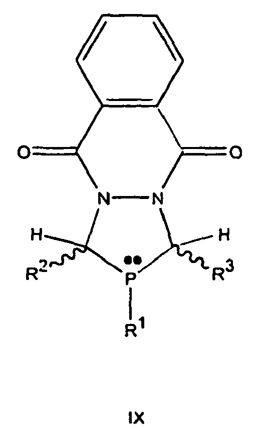 where R¹, R², and R³ have any of the values set forth above with respect to formula III.

Preferred diazaphosphacycles of formula III include those having the formula X

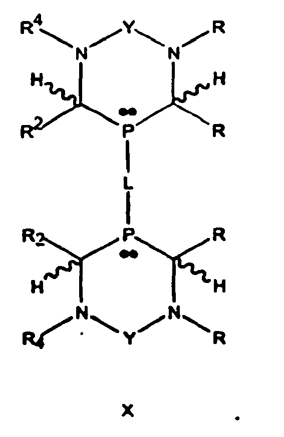

In compounds of formula X, L is a linking group selected from substituted or unsubstituted alkyl groups, substituted or unsubstituted alkenyl groups, substituted or unsubstituted aryl groups or substituted or unsubstituted ferrocenyl groups. Preferred L groups include ethane, ethylene, propane, benzene, anthracene, 9,10-dihydroanthracene, xanthene, and ferrocene. In more preferred such diazaphosphacycles, Y is a -(CH₂)ₙ- group where n is 0.

Scheme 1 shows how various 3,4-diazaphosphacycles may be synthesized from simple starting materials to provide a large number of chiral phosphine ligands.

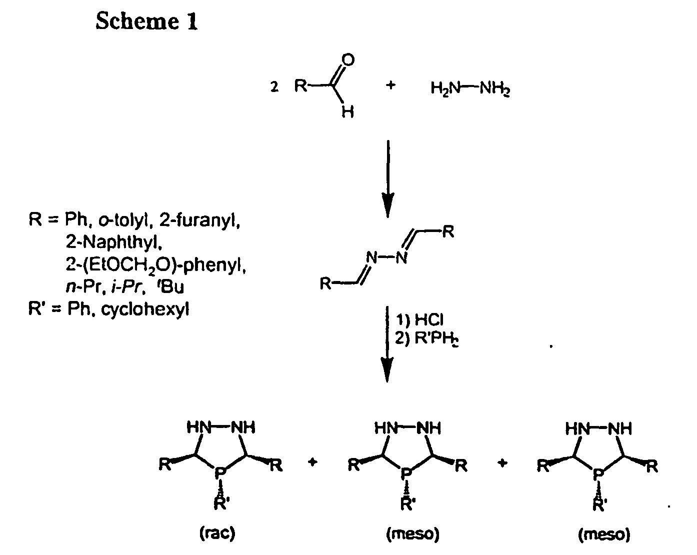

As shown in Scheme 1, the reaction of 2 equivalents of an aldehyde such as aldehydes where R is an alkyl group or aryl group with a diamine such as hydrazine readily affords the diimines for use in the method for producing the diazaphosphacycles. An excess of aldehyde may be used to produce the diimine. The reaction shown in Scheme 1 may be carried out in a *rac* selective manner. The reaction typically provides high yields in excess of 80 percent of the 3,4-diazaphospholanes.

Scheme 2 shows the synthesis of numerous different diazaphosphacycles from simple and readily available diimines and phosphines. The diimine is formed from hydrazine and the appropriate aldehyde. Thus, the diimine is a compound of formula II as described above, where Y is a -(CH₂)ₙ-group where n is 0.

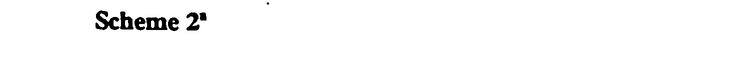

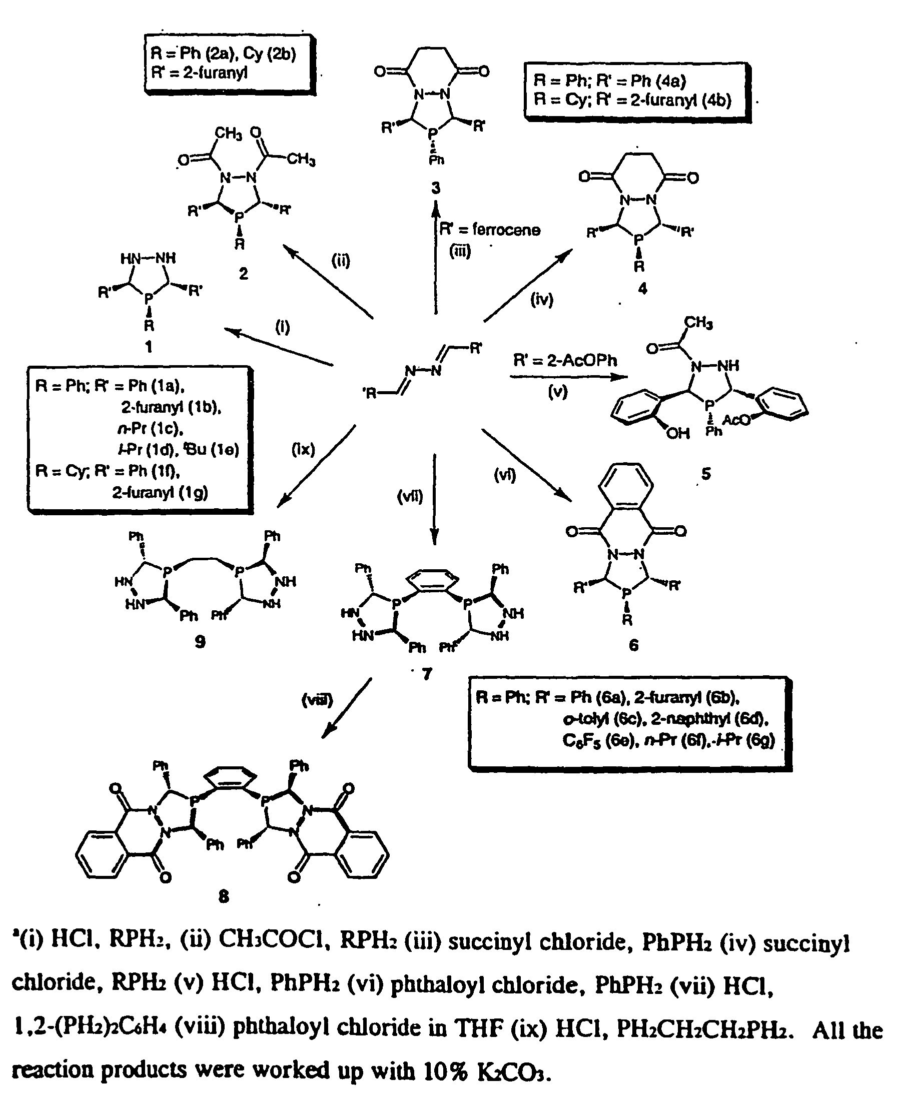

The condensation of azines (R²-CH=N-N=CH-R³), shown generically as formula II, prepared by the reaction of hydrazine with 2 equivalents of the corresponding aldehyde, as shown in Scheme 1, and primary phosphines yields diazaphosphacycles such as compound 1. As set forth in Scheme 2, this procedure surprisingly and unexpectedly provides a variety of 3,4-diazaphospholanes in good yields (25-95%) and *rac* selectivity under mild reaction conditions.

Condensation of an azine and a primary phosphine preferably with 1 equivalent of dry HCl as an acid promoter affords simple 3,4-diazaphospholanes (1, 7, 9). In preferred embodiments, acid chlorides are employed and function as both promoters and N-functionalization reagents to provide N,N'-dicarboxyl-3,4-diazaphospholanes (2, 3, 4, 6) directly in a one-step synthesis as illustrated in Scheme 2. Reaction of the azine derived from acetyl salicylaldehyde with phenylphosphine yielded 5, a product in which one of the salicyl acetyl groups was transferred to the hydrazine moiety. As exemplified by the transformation of compound 7 to compound 8, 3,4-diazaphospholanes and acid chlorides react cleanly to provide a wide variety of N,N'-dicarboxyl-3,4-diazaphospholanes. The N,N'-dicarboxyl-3,4-diazaphospholanes exhibit higher thermal and chemical stability than simple 3,4-diazaphospholanes, although both are suitable for forming transition metal complexes.

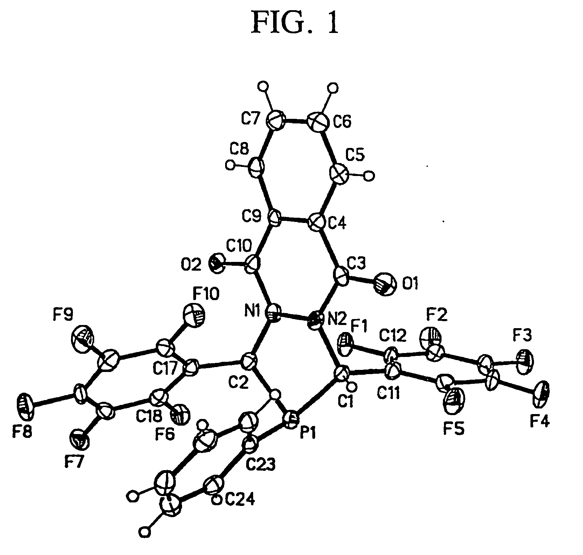

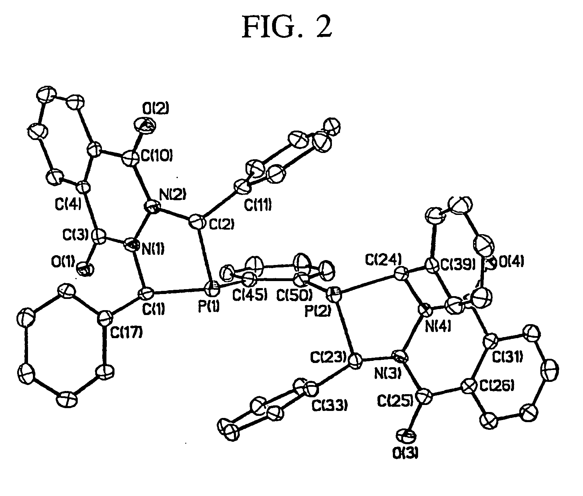

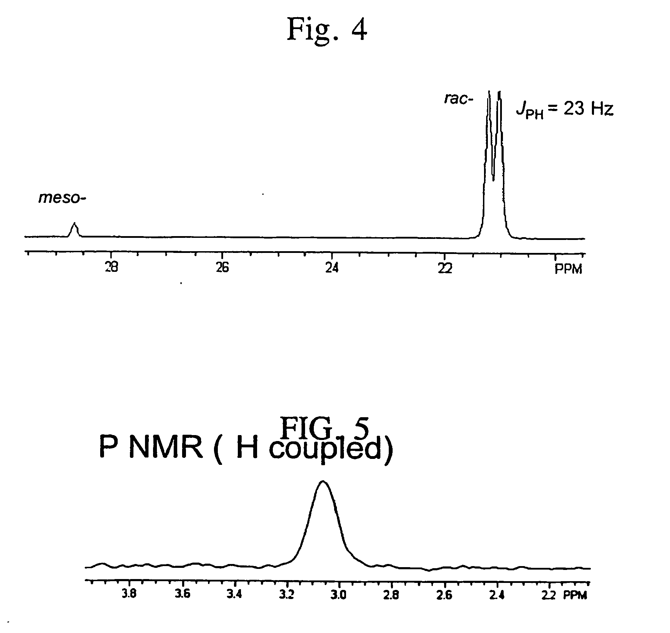

Acid-promoted addition of primary phosphines to diimines are generally *rac* selective, but the reaction is sensitive to the selection of the R¹ group of the phosphine and to the selection of the R², R³, R⁸, and R⁹ groups of the diimine used. For example, where R¹ is phenyl, *rac*/*meso* ratios (0.6-30:1) are dependent on the choice of R² and R³ or R⁸ and R⁹. However, when R¹ is a cyclohexyl group, then formation of the *rac* isomers are highly preferred and in some cases are the only isomers observed. Azines derived from bulky, electron withdrawing substituents such as pentafluorophenyl and ferrocenyl generally yield low *rac*/*meso* ratios (6e, 2:1; 3, 0.6:1). For most diazaphospholanes, simple recrystallization provides separation of diastereomers (e.g., rac/meso ratios 30:1 for la). The diazaphosphacycles were characterized by X-ray crystallography and ¹H and ³¹P NMR spectroscopy as shown in FIGS. 1, 2, and 4-6.

Resolution of enantiomeric mixtures may be accomplished by various methods known to those skilled in the art. Resolution of racemic diazaphospholanes 1a, 1e, and 9 was accomplished by N-functionalization with di-O-methyl-L-tartaric acid dichloride to form bicyclic diastereomers followed by chromatographic separation on silica gel.

Scheme 3 shows how various functionalized 3,4-diazaphospholanes may be prepared from a diimine such as a diimine of formula II where Y is a - (CH₂)ₙ- group and n is 0.

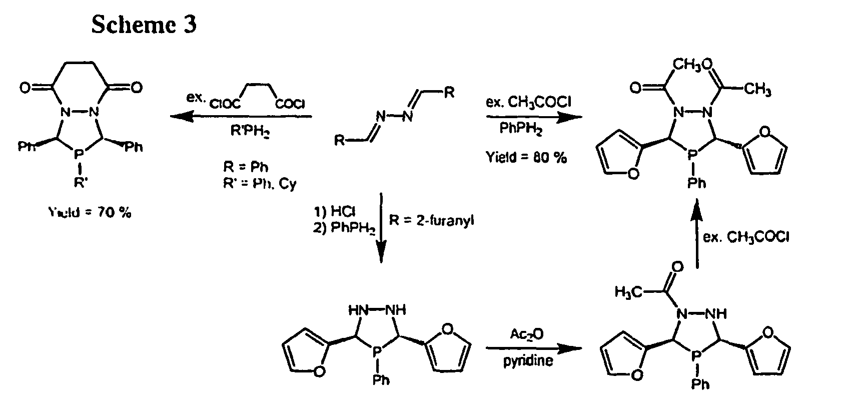

Scheme 4 shows a synthetic route for obtaining rigid bicyclic 3,4-diazaphospholanes from a diimine of formula II where Y is a -(CH₂)ₙ- group and n is 0.

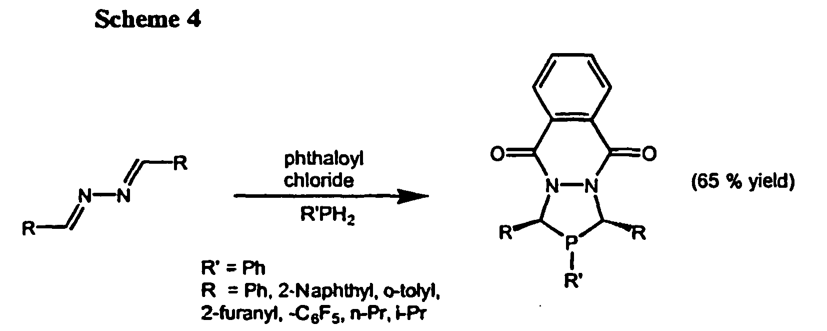

Scheme 5 shows a synthetic method that may be used for preparing a diazaphosphacycle that includes a hydroxyphenyl group.

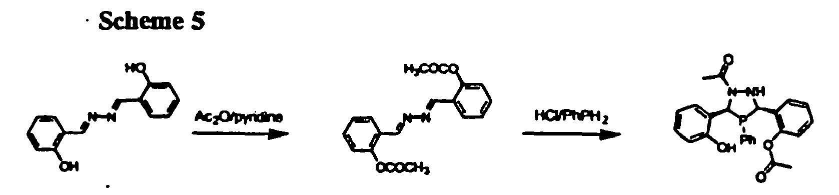

Scheme 6 shows a synthetic method for preparing a sterically demanding diazaphosphacycle that includes two ferrocenyl groups. As can be seen in Scheme 6, one of the products is thermally unstable and can be degraded.

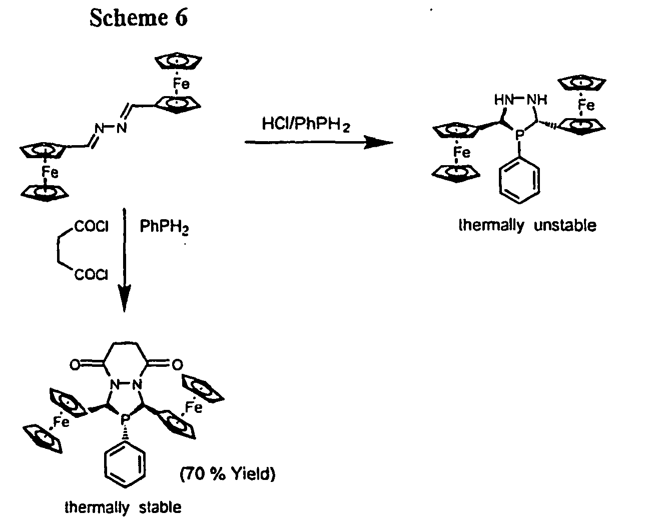

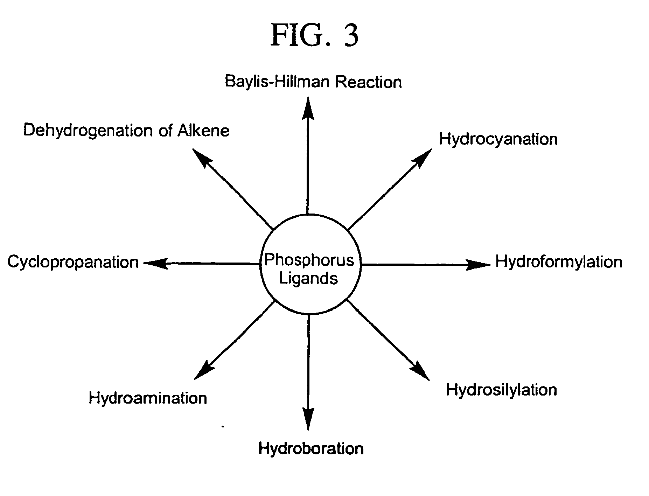

The diazaphosphacycles of the present invention may be combined with a transition metal to form a transition metal complex. The transition metal complexes of the invention include a transition metal and a diazaphosphacycle where at least one phosphorus atom in the diazaphosphacycle is bonded to the transition metal. Preferred metal complexes are prepared using 3,4-diazaphospholanes. In preferred transition metal complexes including a diazaphosphacycle of formula X, two of the phosphorus atoms are bonded to the transition metal. Preferred transition metals in transition metal complexes include Rh, Ru, Pd, Pt, Ir, Ni, Co, and Fe. Other preferred transition metal complexes have catalytic activity and can be used to catalyze transformations such as those carried out with known transition metal complexes as understood by those skilled in the art. Just a few of the catalytic transformations possible with the transition metal complexes of the present invention are shown in FIG. 3.

Because the methods of the present invention may be used to readily synthesize a plethora of diazaphosphacycles, libraries of these compounds and transition metal complexes prepared from them may be formed.

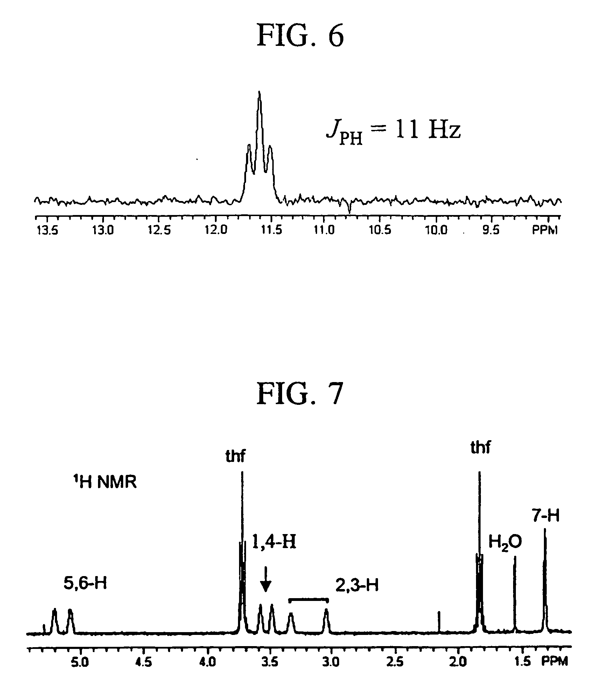

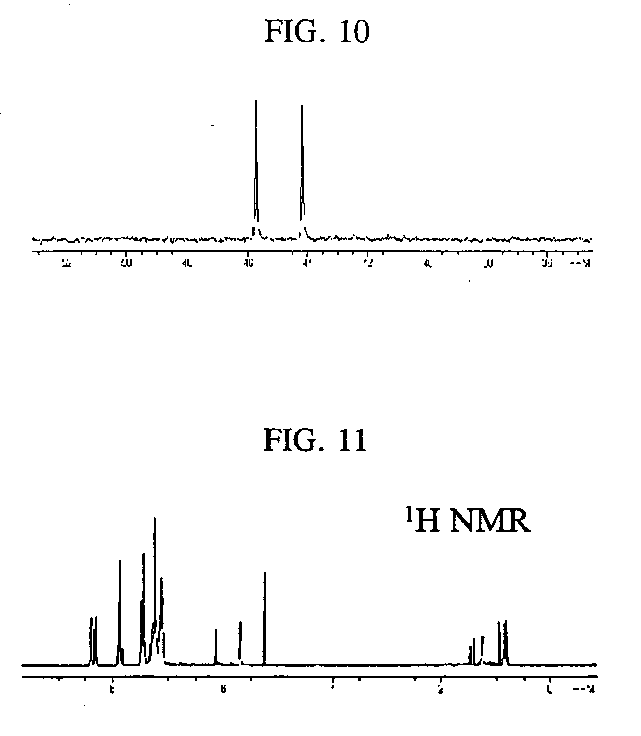

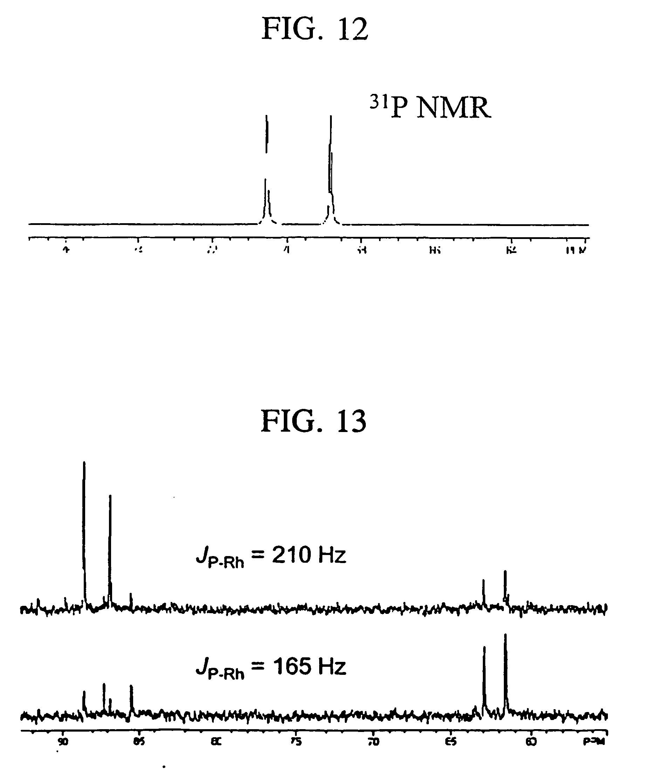

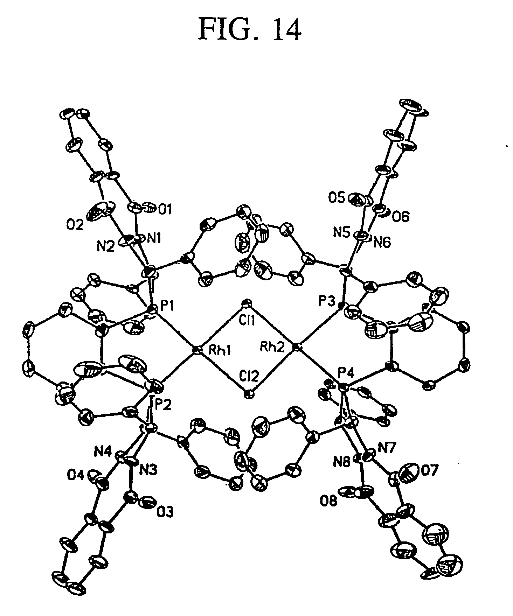

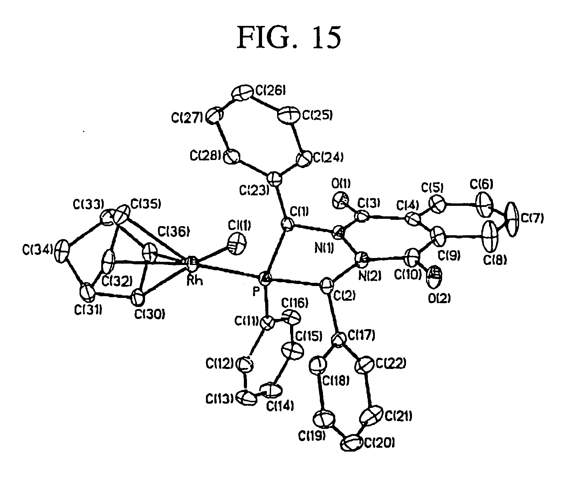

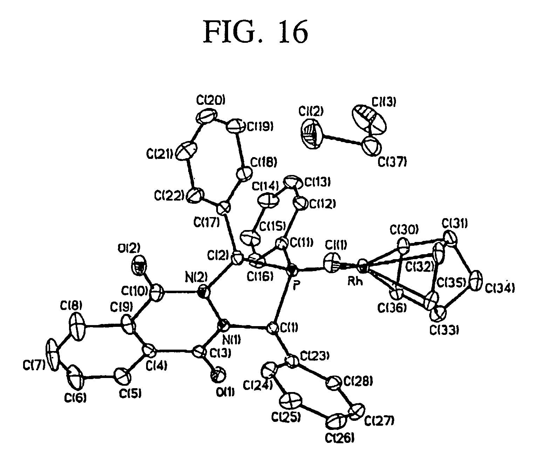

Various methods may be used to prepare transition metal complexes from the diazaphosphacycles of the present invention. Such methods include reacting a diazaphosphacycle with a starting transition metal complex to produce the diazaphosphacycle transition metal complex. In such reactions, the starting transition metal complex typically includes at least one ligand that is replaced by the diazaphosphacycle during the reaction. Examples of ligands include phosphines; amines; diamines; CO; Cl, Br; nitriles such as, but not limited to acetonitrile and benzonitrile; 1,5-cyclooctadiene, norbornadiene, and other dienes; alkenes; ketones; alcohols; ethers; thiols; and sulfoxides. For example, excess diazaphospholanes 6a and 6b react with 1/2[{Rh(NBD)Cl}₂] affording adducts with the formula [(6)Rh(NBD)Cl] in quantitative yields. Similarly, reaction of the N, N'-phthaloyl derivative of 9 with [(COD)Pt(CH₃)₂] in solution yields [(9-phthaloyl)Pt(CH₃)₂] in quantitative yield as judged by NMR spectroscopy and X-ray crystallography. X-ray crystallography was used to generate ORTEP diagrams of various metal complexes as seen in FIGS. 14, 15, and 16. ¹H and ³¹P NMR spectra of various metal complexes are shown in FIGS. 7, and 9-13.

Standard reaction conditions known to those skilled in the art may be used to promote formation of the transition metal complex. For example, CO displacement may be promoted through the use of ultraviolet irradiation or by reaction with trimethylamine N-oxide as known by those skilled in the art.

Scheme 7 shows methods for preparing Rh(norbornadiene) complexes that include one or two diazaphosphacycles of the present invention.

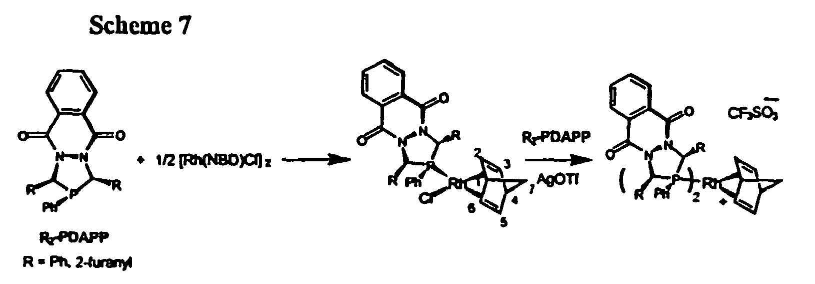

Scheme 8 shows various platinum complexes that have been synthesized using various diazaphosphacycles of the present invention

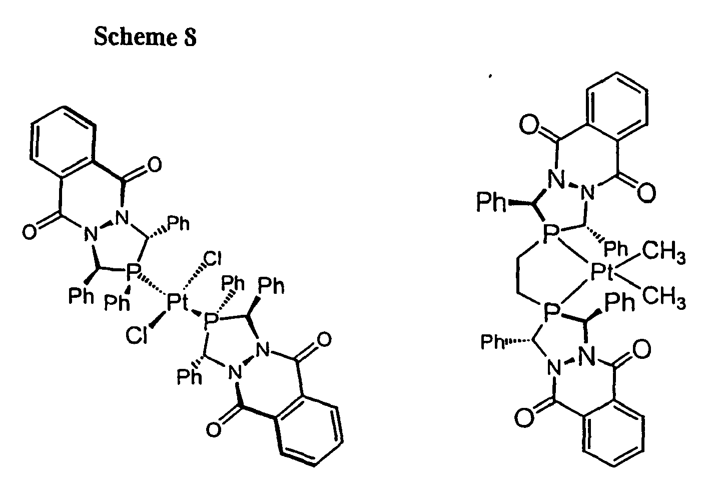

Scheme 9 shows various synthesized rhodium complexes that include the diazaphosphacycles of the present invention.

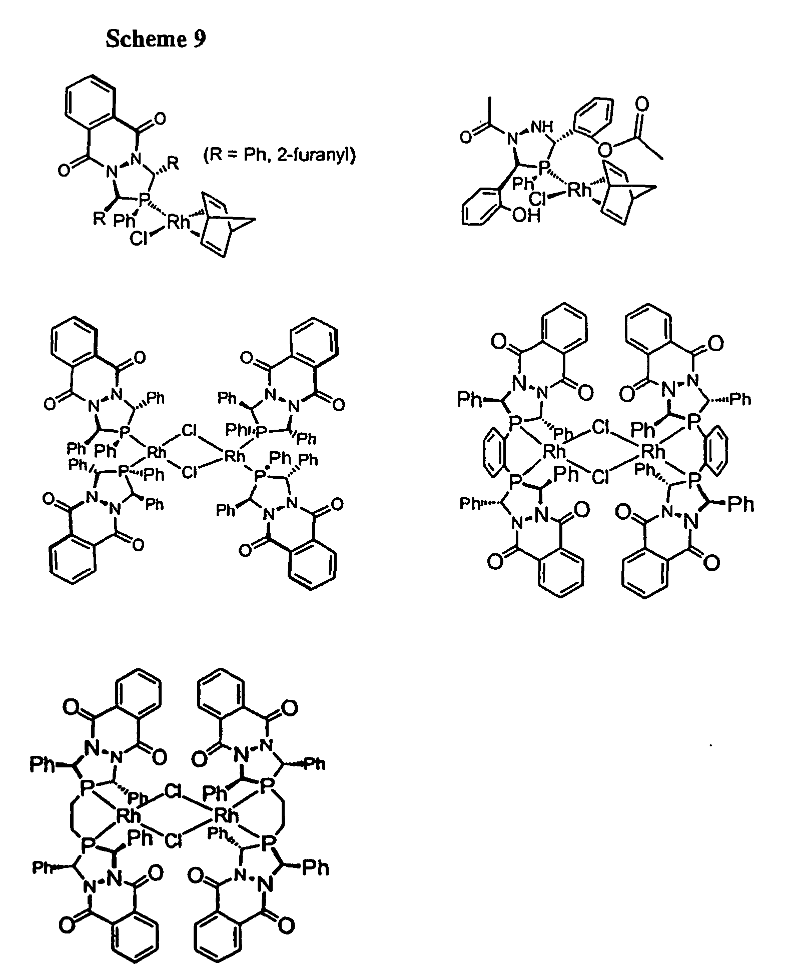

Scheme 10 shows a number of palladium complexes that have been synthesized using various diazaphosphacycles of the present invention.

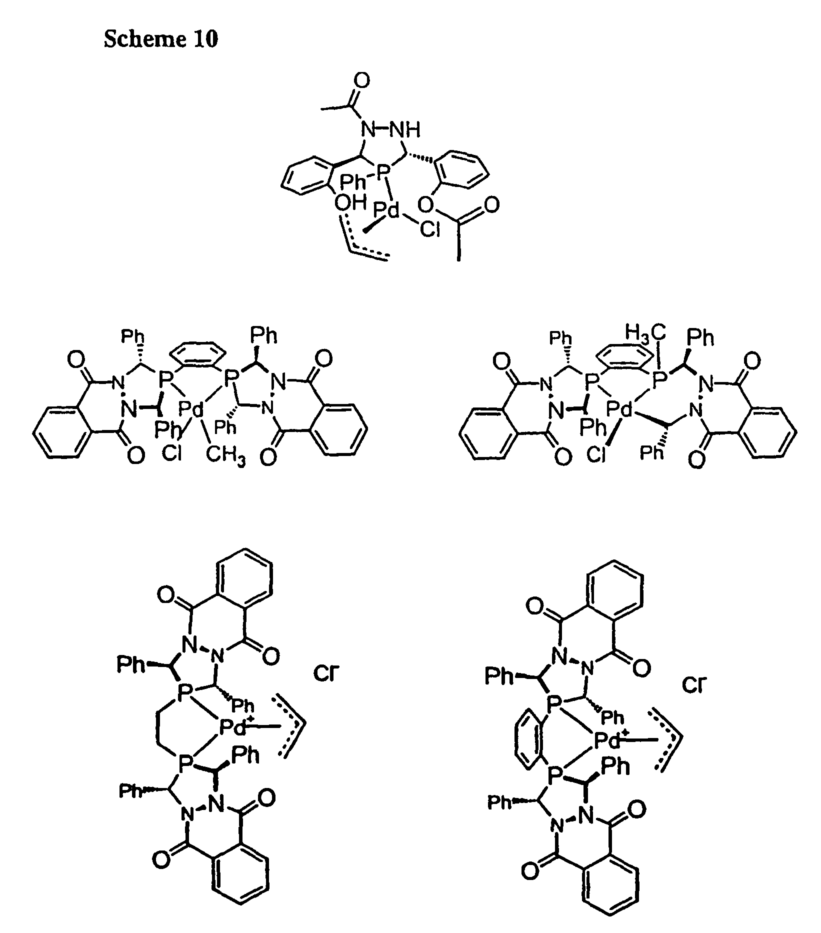

As noted above, there are many different types of reaction catalyzed by transition metal complexes. Examples of such reactions that may be catalyzed by the transition metal complexes of the present invention include, but are not limited to, alkene, alkyne, ketone, imine, oxime, aldehyde, nitrile, arene, carboxylic acid, ester, acid anhydride, and nitro group hydrogenations; hydrogenolysis reactions of alkyl halides, alkenyl halides, and acyl halides; hydrosilylation of alkenes, alkynes, ketones, and oximes; hydroboration of alkenes, alkynes, ketones, and oximes; hydroamination of alkenes and alkynes; hydroformylation of alkenes; hydroacylation of alkenes; hydrocarboxylation, hydroesterification, and hydrocarboxamidation of alkenes; carbonylation and double carbonylation of alkyl, aryl, and alkenyl halides; hydrocyanation of alkenes, dienes, and alkynes; alkene metathesis; cycloaddition of alkenes, dienes, and alkynes; cyclopropanation of alkenes; alkene and alkyne isomerization; Tischenko disproportionation of aldehydes; aziridination of alkenes; cross-coupling reactions; diborylation of alkanes; dehydrogenation of alkanes; allylic alkylation; allylic amination; allylic esterification; and amination and etherification of alkenyl and aryl halides. While each of the catalytic reactions is separately preferred, hydrogenation and hydroformylation reactions are particularly preferred transformations where transition metal complexes prepared from the diazaphosphacycles of the present invention may be utilized. Especially preferred catalytic transformations include those where enantioselectivity is desired.

As a general rule, 3,4-diazaphospholanes are bulky ligands. For example, the cone angle of la (172°) is comparable to that of tricyclohexylphosphine (170°). The bulkiness of the 3,4-diazaphosphacycles allows for the formation of transition metal complexes with crowded metal centers which may be associated with improved selectivity and/or activity during catalysis. Accordingly, diazaphosphacycles having cone angles greater than 170° are preferred.

### EXAMPLES

### General Considerations

Routine NMR characterization experiments, ¹H NMR (300 and 500 MHz), ¹³C NMR (75.462 and 125.7 MHz), ¹⁹F NMR (282 MHz), and ³¹P NMR (121.49 and 202.4 MHz) were carried out on a Bruker AC-300 or a Varian 500 NMR spectrometer. ¹H NMR data are reported as follows: chemical shift (multiplicity (b = broad, s = singlet, d = doublet, t = triplet, q = quartet, and m = multiplet), and integration). Chemical shifts for ¹H NMR spectra are reported in ppm downfield from internal tetramethylsilane (TMS, δ scale) using residual protons in the deuterated solvents (C₆D₆, 7.15 ppm; CDCl₃, 7.25 ppm; and CD₂Cl₂, 5.31ppm) as references. ¹³C and ³¹P NMR spectra were obtained using ¹H decoupling, and the chemical shifts are reported in ppm vs. Me₄Si (ODCl₃ at 77 ppm and C₆D₆ at 128 ppm) and 85 % H₃PO₄ standard (external), respectively. Elemental analyses were provided by Desert Analysis (Phoenix, AZ).

CDCl₃ solvents were purchased from Aldrich Chemical (Milwaukee, Wisconsin), distilled over calcium hydride, and vacuum transferred into an air-tight solvent bulb prior to transfer into an inert-atmosphere glovebag. All reactions were carried out under a dry nitrogen atmosphere using standard Schlenk techniques unless otherwise noted.

Cyclohexyl phosphine and 1,2-bis(phosphino)ethane were purchased from Strem Chemicals, Inc. (Newburyport, Massachusetts) HCl (1.0 M in Et₂O solution), succinyl chloride, phthaloyl chloride, and diethyl L-tartrate were purchased from Aldrich Chemical of Milwaukee, Wisconsin. Acetyl chloride was purchased from J. T. Baker (Phillipsburg, New Jersey).

The aryl azine derivatives (aryl-CH=N-N=CH-aryl) were prepared by reaction of the corresponding aldehyde (2 equiv.) with hydrazine under refluxing alcohol conditions. F. E. Hencoch, G. Hampton, C. R. Hauser, J. Am. Chem. Soc. 1969, 91, 676-681. The alkyl azine derivatives (alkyl-CH=N-N=CH-alkyl) (A. U. Blackham, N. L. Eatough, J. Am. Chem. Soc. 1962, 84, 2922-2930),phenylphosphine (R. C. Taylor, R. Kolodny, D. B. Walters, Synthesis in Inorganic and Metal-Organic Chemistry 1973, 3, 175-179), and o-bis(phosphino)benzene (E. P. Kyba, S.-T. Liu, R. L. Harris, Organometallics 1983, 2, 1877-1879) were prepared according to known literature methods. Phenylphosphine is commercially available from Aldrich Chemical (Milwaukee, Wisconsin).

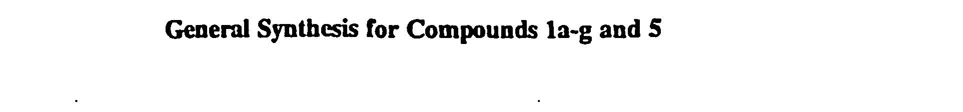

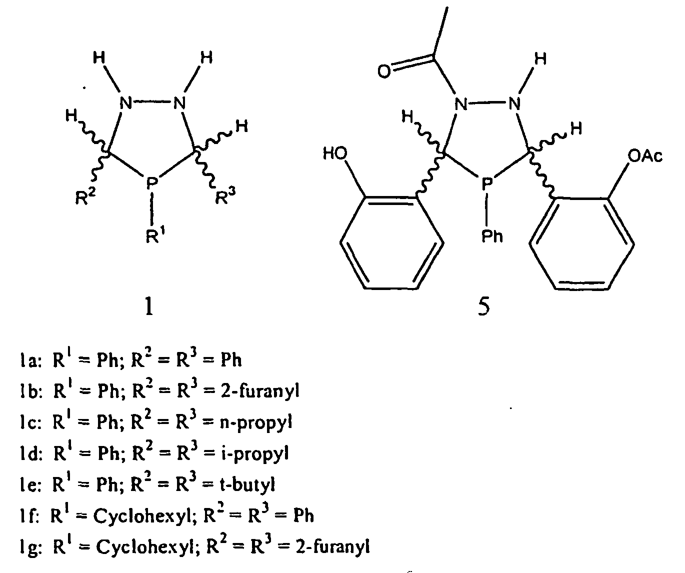

A diethyl ether (20 mL) solution of the appropriate azine derivative (4.55 mmol) was treated with HCl (ca. 4.75 mL, 4.75 mmol, 1.0 M in Et2O solution) at 0°C. Immediately, a white solid precipitated from solution. Phenyl (or cyclohexyl for compounds 1f and 1g) phosphine (4.55 mmol) was added to this suspension at 0°C and the reaction mixture was stirred for 4 hours (or overnight) at room temperature. Into the resultant white slurry was added a degassed 10% aqueous K₂CO₃ (ca 30 mL) solution at 0°C. The ether layer was separated via cannula, dried over MgSO₄, and filtered via cannula to obtain a colorless solution. The ether was evaporated under vacuum to yield the corresponding diazaphospholanes.
***rac*-1a:** Yield = 67 % of a white solid *(rac*/*meso =* 13). ¹H NMR (CDCl₃): δ 4.53 (b, 2H, NH), 5.11 (d, **J_{H-P}** = 22.1 Hz, 1H. PCHN). 5.54 (s, 1H. PCHN), 6.77 (m. 2H, Ph), 6.98 (m, 3H, Ph), 7.10-7.39 (m, 10H. Ph); ¹³C{¹H} NMR (CDCb): δ 71.51 (d, J_{C-P} = 1.2 Hz, PCHN), 71.81 (d, J_{C-P} = 5.7 Hz, PCHN), 126.29 (d, J_{C-P} = 4.4 Hz, Ph), 126.37 (d, J_{C-P} = 1.3 Hz), 127.30 (s), 127.41 (s), 127.86 (s), 128.15 (d, J_{C-P} = 6.3 Hz), 128.94 (s), 128.98 (s), 133.34 (d, J_{C-P} = 18 Hz), 134.53 (s), 141.10 (d, J_{C-P} = 15.3 Hz), one quaternary carbon hasn't been assigned due to the overlap; ³¹P NMR (CDCl₃): δ 21.4 (d, J_{P-H} = 23 Hz). Analysis calculated for C₂₀H₁₉N₂P: C, 75.46; H, 6.02; N, 8.8. Found: C, 74.85; H, 6.09; N, 8.8.
*rac*-1b: Yield = 90 % of a colorless oil *(rac*/*meso* = 10). ¹H NMR (CDCl₃): δ 4.0 (b, 1H, NH), 4.25 (b, 1H, NH), 4.84 (d, **J_{H-P}** = 22.8 Hz, 1H, PCHN), 5.24 (d, **J_{H-P}** = 2.2 Hz, 1H, PCHN), 5.63 (m, 1H, furan), 6.1 (dd, J = 1.8, 3.3 Hz, 1H, furan), 6.31 (m, 1H, furan), 6.36 (m, 1H, furan), 7.12 (m, 1H, furan), 7.33 (m, 5H, Ph), 7.42 (m, 1H, furan); ¹³C{¹H} NMR (CDCl₃): δ 64.46 (d, J = 20.3 Hz, PCHN), 65.55 (d, J = 24.8 Hz, PCHN), 106.28 (d, J = 3.2 Hz, furan), 107.13 (d, J = 7 Hz, furan), 110.04 (s, furan), 110.55 (s, furan), 128.33 (d, J = 7 Hz, Ph), 129.43 (s, Ph), 133.17 (d, J = 18.5 Hz, Ph), 141.23 (s, furan), 142.62 (s, furan), 148 01 (furan), 150.09 (s, furan), 153.26 (d, J = 14 Hz, Ph); ³¹P NMR (CDCl₃): δ 9.9 (d, *J*_{P-H} = 23 Hz). Analysis calculated for C₁₆H₁₅O₂N₂P: C, 64.43; H, 5.07; N, 9.39. Found: C, 64.59; H, 5.14; N, 8.70.
***rac-*1c*:*** Yield = > 90 % of a white solid *(rac*/*meso* = 5). ¹H NMR (CDCb): δ 0.82 (t, *J*_{H-H} = 7.3Hz, 3H, CH₃), 0.94 (t, *J*_{H-H} = 7.3Hz, 3H, C*H*₃), 1.3-1.7 (m, 8H, C*H*₂), 3.15 (doublet of tripet, *J*_{H-H} = 7.0Hz, *J*_{P-H} =16.2Hz, 1H, C*H*), 3.94 (t, *J*_{H-H} = 6.5Hz, 1H, C*H*), 3.3-3.6 (b, 2H, N*H*) 7.34-7.41, (m, 3H, Ph), 7.47-7.55 (m, 2H, Ph); ¹³C{¹H} NMR (CDCl₃): δ 13.9 (s, CH₃), 21.5 (d, *J*_{P-C} = 12.0 Hz), 22.0 (d, *J*_{P-C} = 6.6Hz), 37.0 (d, *J*_{P-C} = 22.8Hz), 67.0 (d, *J*_{P-C} = 21.1Hz, P*C*HN), CH (δ67.3 (d, *J*_{P-C} = 17.0Hz, P*C*HN), 126.2 (d, *J*_{P-C} = 6 Hz, C*ₘₑₜₐ*), 127.0 (s, C*ₚₐᵣₐ*), 133.8 (d, *J*_{P-C} = 12 Hz, C*ₒᵣₜₕₒ*), 136.8 (d, *J*_{P-C} = 30 Hz, *Cᵢₚₛₒ*); ³¹P NMR (CDCl₃): δ 1.1 (b). Analysis calculated for C₁₄H₂₃N₂P(hexane)_{0.1}: C, 67.72; H, 9.5; N, 10.82. Found: C, 68.12; H, 8.94; N, 10.72.
***rac-*1d:** Yield = 70 % of a white solid with mainly a *rac* isomer. ¹H NMR (CDCl3): δ 0.9-1.13 (m, 13H, CH and C*H*₃), 1.94 (m, 1H, C*H*), 2.81 (dd, *J*_{H-H} = 9.0 Hz, *J*_{P-H} = 26.4 Hz, 1H, PCHN), 3.82 (dd, *J*_{H-H} = 6.3Hz, *J*_{P-H} = 1.9Hz, 1H, PC*H*N), 3.2-3.6, (b, 2H, NH), 7.34-7.41, (m, 3H, Ph), 7.47-7.55, (m, 2H, Ph); ¹3C{¹H} NMR (C6D6): δ 20.7, (d, *J*_{C-P} = 13.7Hz, *C*H₃), 21.4, (d, *J*_{C-P} = 8.5 Hz, *C*H₃), 22.5 (d, *J*_{C-P} =.4.8Hz, *C*H₃), 23.5, (d, *J*_{C-P} = 21.4 Hz, *C*H₃), 28.4 (s), 31.9 (d, *J*_{C-P} = 20 Hz), 65.4 (d, *J*_{C-P} = 18 Hz), 67.5 (d, *J*_{C-P} = 32Hz), 77.1 (d, *J*_{C-P} =18.1Hz, P*C*HN), 128.6 (d, *J*_{C-P} = 7 Hz, *Cₘₑₜₐ*), 129.1 (s, C*ₚₐᵣₐ*), 134.9 (d, *J*_{C-P} = 19 Hz, *Cortho*)*,* 135.9 (d, *J*_{C-P} = 26 Hz, *Cᵢₚₛₒ*)*;* ³¹P NMR (CDCl₃): δ -5.7 (d, *J*_{P-H} = 2.4Hz). Analysis calculated for C₁₄H₂₃N₂P(CH₂Cl₂)_{0.1}: C, 65.43; H, 9.04; N, 10.89. Found: C, 65.34; H, 8.61; N, 10.33.
***rac-*1e:** Yield = 61 % of a white solid *(rac*/*meso =* 6). ¹H NMR (CDCl₃): δ 0.75 (d, *J*_{H-P} = 1.1 Hz, 9H, *CH₃*)*,* 1.04 (s, 9H, C*H₃*), 2.74 (d, *J*_{H-P} = 21.3 Hz, PCHN), 3.81 (d, *J*_{H-P} = 2.6 Hz, 1H, PCHN), 7.34 (m, 3H, Ph), 7.58 (m, 2H, Ph); ¹³C{¹H} NMR (CDCl₃): δ 28.11 (d, *J*_{C-P} = 8.6 Hz, CH₃), 29.27 (d, *J*_{C-P} = 4.9 Hz, CH₃), 33.05 (s, CCH₃), 33.78 (d, *J*_{C-P} = 15.9 Hz, CCH₃), 79.54 (d, *J*_{C-P} = 26.5 Hz, PCHN), 81.10 (d, *J*_{C-P} = 19 Hz, PCHN), 128.55 (d, *J*_{C-P} = 7.6 Hz, *Cortho*)*,* 129.31 (s, *Cpara*)*,* 135.13 (d, *J*_{C-P} = 19.7 Hz, *Cmeta*)*,* 136.49 (d, J_{C-P} = 25.4 Hz, *Cᵢₚₛₒ*); ³¹P NMR (CDCl₃): δ -13.1 (d, *J*_{P-H} = 19.8 Hz). Analysis calculated for C₁₆H₂₇N₂P: C, 69.03; H, 9.78; N, 10.06. Found: C, 69.3; H, 9.77; N, 9.91.
***rac*-1f:** Yield = 58 % of a white solid with mainly a *rac* isomer. ¹H NMR (CDCl₃): δ 0.47 (m, 1H), 0.80 (m, 2H), 1.16-1.7 (m, 8H), 3.78 (b, 1H, NH), 4.14 (b, 1H, N*H*), 4.78 (s, 1H, PC*H*N), 4.85 (d, *J*_{H-P} = 19.1 Hz, 1H, PCHN), 7.22-7.40 (m, 8H, Ph), 7.47-7.50 (m, 2H, Ph); ¹³C{¹H} NMR (CDCl₃): 26.2 (s), 26.3 (d, *J*_{C-P} = 12.8 Hz), 26.9 (d, *J*_{C-P} =7.7 Hz), 29.0 (d, *J*_{C-P} =8.3 Hz), 30.7 (d, *J*_{C-P} = 19.5 Hz), 32.2 (d, *J*_{C-P} = 21.6Hz,), 70.62 (d, *J*_{C-P} =3.2 Hz, P*C*HN), 71.0 (s, P*C*HN), 126.4 (d, *J*_{C-P} = 3.2 Hz, Ph), 126.8 (s, Ph), 127.4 (d, *J*_{C-P} = 1.3 Hz, Ph), 127.7 (d, *J*_{C-P} = 9.5 Hz, Ph), 128.4 (s, Ph), 128.8 (s, Ph), 136.4 (s, *C*CH), 140.4 (d, *J*_{C-P} =15.9 Hz, CCH); ³¹P NMR (CDCl₃): δ 11.68 (m). Analysis calculated for C₂₀H₂₅N₂P: C, 74.05; H, 7.77; N, 8.64. Found: C, 74.4; H, 8.11; N, 9.67.
***rac*-1g:** Yield = 61% of a white solid with mainly a *rac* isomer. ¹H NMR (CDCl3): δ 0.59 (m, 1H), 0.97 (m, 2H), 1.14-1.24 (m, 3H), 1.51-1.73 (m, 5H), 3.95 (b, 2H, N*H*), 4.74 (d, *J*_{H-P} = 3.3 Hz, 1H, PC*H*N), 4.82 (d, *J*_{H-P} = 22.8 Hz, PC*H*N), 6.23 (m, 1H), 6.29-6.35 (m, 3H), 7.37-7.39 (m, 2H); ¹³C{¹H} NMR (CDCl₃): δ 26.21 (s, CH₂), 26.47 (d, *J*_{C-P} = 12.1 Hz), 26.75 (d, *J*_{C-P} = 8.3 Hz), 29.25 (d, *J*_{C-P} = 10.2 Hz), 30.35 (d, *J*_{C-P} = 19.1 Hz), 33.07 (d, *J*_{C-P} = 30.0 Hz), 64.29 (d, *J*_{C-P} = 28.6 Hz, P*C*HN), 65.0 (d, *J*_{C-P} = 23.5 Hz, P*C*HN), 106.54 (d, *J*_{C-P} = 2.6 Hz, furan), 107.25 (d, *J*_{C-P} = 7.0 Hz, furan), 110.36 (s, furan), 110.63 (s, furan), 141.56 (s, furan), 142.52 (s, furan), 149.65 (s, PCCH), 153.11 (d, *J*_{C-P} = 20.4 Hz, PCCH), ³¹P NMR (CDCl₃): δ 15.6 (d, *J*_{P-H} = 21.3 Hz). Analysis calculated for C₁₆H₂₁N₂O₂P: C, 63.15; H, 6.96; N, 9.2. Found: C, 63.26; H, 7.11; N, 9.25.
***rac*-5:** Yield = 79 % of the crude product. X-ray quality crystals were grown from CH₂Cl₂/hexanes at room temperature. ¹H NMR (CDCl₃): δ 2.50 (s, 3H, C*H₃),* 2.51 (s, 3H, C*H₃*), 5.04 (d, *J* = 8.8 Hz, 1H, N*H),* 5.53 (dd, *J* = 17.3, 8.8, Hz, 1H, PCHN), 6.32 (d, *J* = 2.6 Hz, 1H, *PCHN),* 6.S5-7.20 (m, 11H, Ph), 7.28 (m, 1H, Ph), 7.43 (m, 1H, Ph), 9.50 (b, 1H, O*H);* ¹³C{¹H} NMR (CDCl₃): δ 21.45 (s, CH₃), 21.77 (s, CH₃), 58.07 (d, *J*_{C-P} = 19.7 Hz, PCHN), 61.40 (d, *J*_{C-P} = 28.61 Hz, P*C*HN), 146.34 (s, Ph), 156.67 (d, *J*_{C-P} = 5.5 Hz, Ph), 168.96 (s, CO), 171.17 (s, CO); Peaks at 118-135 ppm have not been assigned due to the complexity. ³¹P NMR (CDCl₃): δ 14.6 (m). Analysis calculated for C₂₄H₂₃N₂O₄P(CH₂Cl₂)0.25: C, 63.92; H, 5.2; N, 6.15. Found: C, 64.27; H, 4.96; N, 6.41.

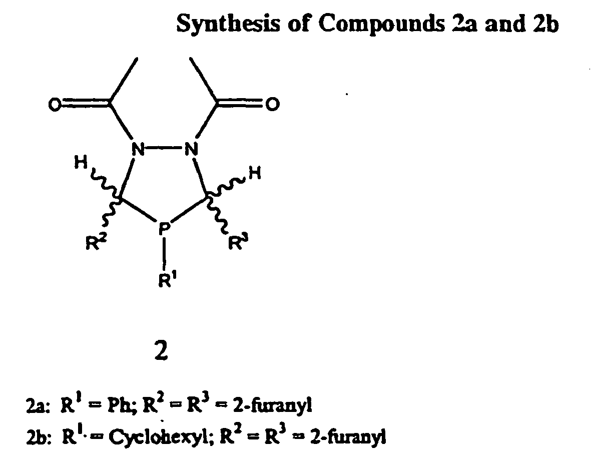

The appropriate azine (1.55 mmol) in Et₂O (50 mL) was treated with acetyl chloride (15.5 mmol, 10 equiv.) at 0°C. The appropriate phosphine (phenylphosphine (2a); cyclohexylphosphine (2b)) (1.55 mmol) was then slowly added at 0°C, and the mixture stirred at room temperature overnight. To the resultant white slurry was added 10% aqueous K₂-CO₃ (ca. 20 mL) at 0°C. For 2a, the aqueous and organic layers were filtered off via cannula to obtain a white solid which was then washed with distilled water and Et2O. X-Ray quality crystals were obtained from CH₂Cl₂ and hexane at room temperature. For 2b, the ether layer was separated, dried over MgSO₄, and filtered off via cannula to obtain a colorless solution. The ether was then removed under reduced pressure to yield the corresponding diazaphospholane.
***rac*-2a:** Yield = 80 % with a white solid with a mainly *rac* isomer. ¹H NMR (CDCl₃): δ 1.71 (s, 3H, CH₃), 2.21 (s, 3H, CH₃), 5.9 (dd, *J* = 3.3, 1.8 Hz, 1H, furan), 6.03 (d, *J* = 3.3 Hz, 1H, furan), 6.30 (dd, *J* = 3.3, 1.8 Hz, furan), 6.44 (d, *J* = 3.3 Hz, 1H, furan), 6.55 (d, *J*_{H-P} = 23.2 Hz, 1H, NCHP), 6.72 (d, *J*_{H-P} = 3.3 Hz, NCHP), 6.74 (m, 1H, furan), 7.11-7.22 (m, 5H, Ph), 7.39 (m, 1H, furan); ¹³C{¹H} NMR (CDCl₃): δ 19.08 (s, CH₃), 20.68 (s, CH₃), 52.72 (d, *J*_{C.P} = 19.7 Hz, NCHP), 56.75 (d, J_{C-P} = 31.2 Hz, N*C*HP), 108.24 (d, J_{C-P} = 2.5 Hz, furan), 109.91 (s, furan), 110.53 (d, J_{C-P} = 10.2 Hz, furan), 110.83 (s, furan), 128.03 (d, J_{C-P} = 7.0 Hz, *Cₘₑₜₐ*), 129.38 (s, *Cₚₐᵣₐ*), 132.51 (d, J_{C-P} = 20.3 Hz, *Cₒᵣₜₕₒ*), 141.86 (s, furan), 143.51 (s, furan), 150.21 (d, J_{C-P} = 32.4 Hz, *Cᵢₚₛₒ),* 171.80 (s, CO), 174.75 (s, CO), two carbons are not assigned probably due to the overlap; ³¹P NMR (CDCl₃): δ 23.5 (d, *J_{P-H}* = 22.9 Hz). Analysis calculated for C₂₀H₁₉N₂O₄P: C, 62.83; H, 5.01; N, 7.33. Found: C, 62.91; H, 4.65; N, 7.21.
***rac*-2b:** Yield = 25 % a white solid with mainly a *rac* isomer. ¹H NMR (CDCb): δ 0.43 (m, 1H). 0.75-1.0 (m, 2H), 1.1-1.3 (m, 3H), 1.5-1.8 (m. 5H), 1.68 (s, 3H, *CH₃),* 2.22 (s, 3H, CH₃), 6.2-6.4 (m, 6H, furan and *PCHN),* 7.3-7.4 (m, 2H, furan); ¹³C{¹H} NMR (CDCl₃): δ 19.42 (s, CH₃), 20.50 (s, CH₃), 26.00 (s), 26.29 (d, *J*_{C-P} = 2.6 Hz), 26.44 (d, *J*_{C-P} = 5.1 Hz), 29.13 (d, *J*_{C-P} = 19.1 Hz), 29.88 (d, *J*_{C-P} = 12.8 Hz), 32.39 (d, *J*_{C-P} = 19.1 Hz), 52.83 (d, *J*_{C-P} = 22.9 Hz, PCHN), 54.29 (d, *J*_{C-P} = 33.1 Hz, PCHN), 108.80 (s, furan), 110.27 (d, *J*_{C-P} = 9.5 Hz, furan), 110.72 (s, furan), 110.88 (s, furan), 142.15 (s, furan), 143.14 (s, furan), 149.56 (d, *J*_{C-P} = 3.2 Hz, furan). 150.75 (d, *J*_{C-P} = 26.71 Hz, furan). 173.15 (s, CO), 174.77 (s, CO); ³¹P NMR (CDCl₃): δ 27.0 (m). Analysis calculated for C₂₀H₂₅N₂O₄P: C, 61.85; H, 6.49; N, 7.21. Found: C, 62.18; H, 6.79; N, 7.30.

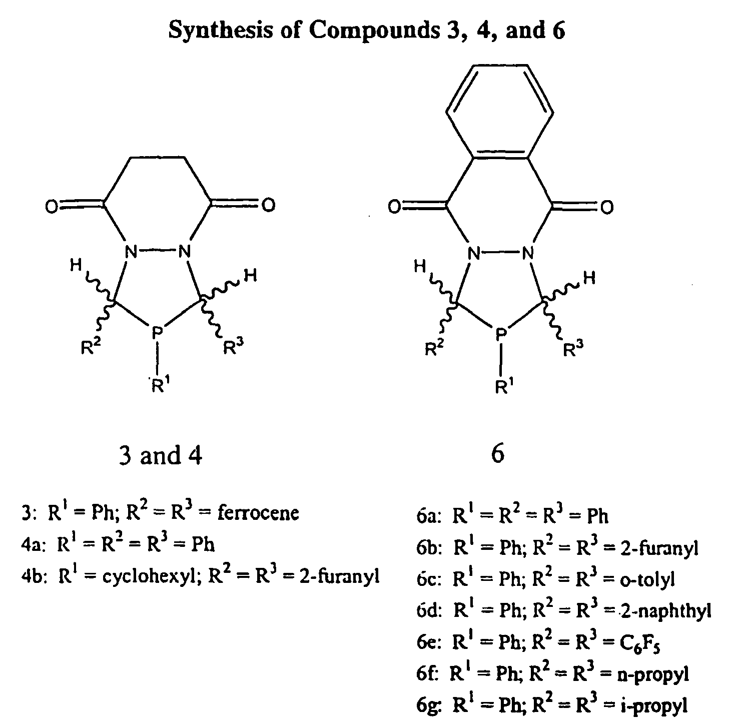

The appropriate azine (1.55 mmol) in Et2O (50 mL) was treated with the diacid dichloride (4.65 mmol, 3 equiv.) at 0°C. The phosphine (1.55 mmol) was then slowly added at 0°C, and the mixture was stirred at room temperature overnight. To the resultant white slurry was added a 10% aqueous K₂CO₃ solution (ca. 20 mL) at ice-bath temperature. For **3, 4, 6a, 6b**, and **6d,** the aqueous and organic layers were filtered off via cannula to obtain a white solid. Subsequently, the product was washed with distilled water and Et2O. and the residue was dried in vacuo to obtain an analytically pure product. For **6c, 6e, 6f** and **6g,** the ether layer was separated, dried over MgSO₄, and filtered off by cannula yielding the corresponding ether solution. The ether was removed *in vacuo* to obtain the desired product. Compounds **6** can also be made from the addition of corresponding compound **1** into a THF solution of phthaloyl chloride (3 equivalents) at ice-bath temperature. The mixture was stirred overnight at room temperature, placed under reduced pressure, washed with Et2O and degassed water, and dried overnight to yield the corresponding compound **6**.

***meso-*3:** Yield = 69 % of a reddish brown solid *(rac*/*meso* = 0.6). X-ray quality crystals of *meso*-3 were grown from CH₂Cl₂/hexane at room temperature. ¹H NMR (CDCl₃): δ 2.50-2.6 (m, 2H, C*H*₂), 2.65-2.77 (m, 2H, C*H*₂), 3.88 (m, 2H, Cp), 4.0 (m, 2H, Cp), 4.04 (m, 2H), 4.14 (s, Cp, 10H) 4.30 (m, 2H, Cp), 6.04 (s, 2H, CHN), 7.45 (m, 5H, Ph); ¹³C{¹H} NMR (CDCl₃): δ 29.3 (s, *C*H₂), 59.4 (d, *J*_{C-P} = 24.2 Hz, PCHN), 67.73 (s, CH), 68.12 (s *C*H), 68.62 (d, *J*_{C-P} = 10.8 Hz, PCHN), 69.1 (s, Cp), 70.4 (d, *J*_{C-P} = 3.8 Hz, CH), 85.05 (d. *J*_{C-P} = 19.7 Hz, *C*CH),129.2 (d, *J*_{C-P} =6.4 Hz, *Cₘₑₜₐ*), 129.94 (s, *Cₚₐᵣₐ*), 130.8 (d, *J*_{C-P} = 15.8 Hz, *Cₒᵣₜₕₒ*), 134.2 (d, *J*_{C-P} = 23.5 Hz, *Cᵢₚₛₒ*), 165.2 (s, CO); ³¹P NMR (CDCl₃): δ 3.0 (s). Analysis calculated for C₃₂H₂₉N₂O₂Fe₂P(CH₂Cl₂)_{0.5} C, 59.63;H, 4.55; N, 4.21; Found: C, 60.19 (61.10); H, 4.60 (4.37); N, 4.36 (4.36).
***rac*-4a:** Yield = 95 % of the crude product with mainly a *rac* isomer. X-ray quality crystals were grown from CH₂Cl₂/hexanes at room temperature. ¹H NMR (CDCb): δ 2.83 (m, 4H, C*H*₂) 5.82 (d, *J*_{H-P} = 19.1 Hz, 1H, PC*H*N), 6.51 (s, 1H, PC*H*N), 6.71-6.75 (m, 2H, Ph), 6.9-7.05 (m, 5H, Ph), 7.1-7.2 (m, 2H,Ph), 7.25-7.30 (m, 1H, Ph), 7.30-7.38 (m, 3H, Ph), 7.42-7.46 (m, 2H, Ph); ¹³C NMR (CDCl₃): δ 29.46 (s, *C*H₃), 30.38 (s, *C*H₃), 57.14 (d, *J*_{C-P} = 21.0 Hz, P*C*HN), 61.72 (d, *J*_{C-P} = 31.8 Hz, PCHN), 124.79 (d, *J*_{C-P} =1.9 Hz, Ph), 125.41 (d, *J*_{C-P} = 8.3 Hz, Ph), 126.57 (s, Ph), 127.85 (s, Ph), 128.10 (d, *J*_{C-P}*=* 6.4 Hz, Ph), 129.07 (s, Ph), 129. 72 (s, Ph), 130.15 (d, *J*_{C-P} = 24.2 Hz, Ph), 132.20 (d, *J*_{C-P} = 19.0 Hz, Ph), 133.53 (s, Ph), 137.10 (d, *J*_{C-P} = 15.3 Hz, Ph), 165.24 (s, CO), 167.71 (s, CO), one peak is not assigned due to the overlap; ³¹P NMR (CDCl₃): δ 11.6 (m). Analysis calculated for C₁₄H₂₁N₂O₂P: C, 71.99; H, 5.29; N, 7.0. Found: C, 71.21; H, 5.29; N, 6.96.
***rac-*4b:** Yield = 59 % of the crude product with mainly a ***rac*** isomer. X-Ray quality crystals were grown from CH₂Cl₂/hexanes at room temperature. ¹H NMR (CDCb): δ 0.75 (m, 1H), 1.0 (m, 2H), 1.25 (m, 3H), 1.6 (m, 3H), 1.8 (m, 2H), 2.6-2.7 (m, 4H), 5.86 (d, *J*_{H-P} = 14.8 Hz, 1H, PC*H*N), 5.96 (s, PC*H*N), 6.26 (m, 1H, furan), 6.33 (d, *J*_{H-P} = 1.5 Hz, 1H, furan), 6.36 (dd, *J*_{H-P} = 1.9, 3.3 Hz, 1H, furan), 7.35 (m, 2H, furan); ¹³C{¹H} NMR (CDCl₃): δ 25.80 (d, *J*_{C-P} = 1.3 Hz), 26.51 (s), 26.47 (d, *J*_{C-P} = 20.3 Hz), 28.49 (d, *J*_{C-P} = 7 Hz), 29.47 (s), 29.76 (d, *J*_{C-P} = 22.9 Hz), 30.33 (s), 32.47 (d, *J*_{C-P} = 21. Hz), 50.25 (d, *J*_{C-P} = 24.2 Hz), 54.65 (d, *J*_{C-P} = 31.2 Hz), 107.16 (d, *J*_{C-P} = 2.5 Hz), 107.76 (d, *J*_{C-P} = 7 Hz), 110.62 (s), 110.94 (s), 141.73 (d, *J*_{C-P} = 1.3 Hz), 142.97 (s), 147.45 (d, *J*_{C-P} = 2.5 Hz), 150.21 (d, *J*_{C-P} = 17.2 Hz), 165.55 (s, CO), 167.59 (s, CO); ³¹P NMR (CDCl₃): δ 12.9 (m). Analysis calculated for C₂₀H₂₃N₂O₄P: C, 62.17; H, 6.0; N, 7.25. Found: C, 62.04; H, 5.52; N, 7.16.
***rac*-6a:** Yield = 65 % of a white solid with a *rac* isomer. X-ray quality crystals from grown from CH₂Cl₂/hexanes at room temperature. ¹H NMR (CDCl₃): δ 6.25 (d, 1H, *J*(H,P) = 19.5 Hz, PCHN), 6.95 (s, 1H, PCHN), 7.05 (m, 3H, Ph), 7.13-7.19 (m, 5H, Ph), 7.3-7.4 (m, 7H, Ph), 7.3-7.8 (m, 2H, CH), 8.44 (m, 1H, CH), 8.48 (m, 1H, CH), ¹³C{¹H) NMR (CDCl₃): δ 60.3 (d, *J*_{C-P} = 19.7 Hz, PCHN), 64.9 (d, *J*_{C-P} = 31.8 Hz, *PCHN),* 125.10 (d, *J*_{C-P} = 3.2 Hz), 125.42 (d, *J*_{C-P} = 6.3 Hz), 126.88 (d, *J*_{C-P} = 1.9 Hz), 127.83 (s), 127.94 (s), 128.06(d, *J*_{C-P} = 2.6 Hz), 128.55 (d, *J*_{C-P} = 7.0 Hz), 129.33 (d, *J*_{C-P} = 1.3 Hz), 129.43 (s), 130.03 (s), 130.22 (s), 130.35 (s), 130.46 (s), 132.85 (d, *J*_{C-P} = 1.2 Hz), 132.93 9s), 133.188(s), 133.55 (d, J_{C-P} = 8.3 Hz), 137.2 (d, J_{C-P} = 14.6 Hz), 156.30 (s, CO), 156.50(s, CO); ³¹P NMR (CDCl₃): δ -1.3 (m). Analysis calculated for C₂₈H₂₁N₂O₂P: C, 74.99; H, 4.72; N, 6.25. Found: C, 75.21; H, 4.64; N, 6.32.
***rac*-6b:** Yield = 71% of a white solid with mainly a *rac* isomer. X-ray quality crystals were grown from CH₂Cl₂/hexanes at room temperature. ¹H NMR (CDCl₃): δ 5.81 (m, 1H. (furan), 6.09 (dd, J = 3, 2 Hz, 1H. furan), 6.32 (m, 1H. furan), 6.44 (m, 1H. furan), 6.47(d, J_{H-P} = 28 Hz, 1H, PC*H*N), 6.73 (d, J_{H-P} = 2 Hz, 1H, PC*H*N, 6.92 (m, 1H, furan), 7.3 (m, 5H, Ph), 7.35 (m, 1H, furan), 7.77 (m, 2H, CH), 8.22 (m, 1H, CH), 8.36 (m, 1H, CH); ¹³C{¹H} NMR (CDCl₃): δ 54.7 (d, *J*_{C-P} = 18 Hz, PCHN). 60.2 (d, *J*_{C-P} = 30 Hz, PCHN), 107.2 (d, *J*_{C-P} = 4 Hz, furan), 108.1 (d, *J*_{C-P} = 6 Hz, furan), 110.5 (s, furan), 110.8 (s, furan), 127.7 (s, CH), 127.8 (s, CH), 128.6 (d, *J*_{C-P} = 8 Hz, Ph), 129.3 (s, CC=O), 130.2 (d, *J*_{C-P} = 22 Hz, C*ᵢₚₛₒ*), 130.5 (s, CC=O), 130.8 (s, Ph), 133.1 (s, CH), 133.3 (d, *J*_{C-P} = 10 Hz, Ph), 133.5 (s, CH), 141.6 (s, furan), 143.3 (s, furan), 145.8 (s, furan), 149.2 (d, *J*_{C-P} = 13 Hz, furan), 156.3 (s, 2C, C=O); ³¹P NMR (CDCl₃): δ - 14.7 (b). Analysis calculated for C₂₄H₁₇N₂O₄P: C, 67.29; H, 4.0; N, 6.54. Found: C, 66.99; H, 3.76; N, 6.39.
***rac*-6c:** Yield = 28% of a white solid (*rac*/*meso =* 11). ¹H NMR (CDCl₃): δ 2.46 (s, 3H, C*H₃*), 2.47 (s, 3H, C*H₃*), 5.98 (d, *J* = 9.3 Hz, 1H), 6.35 (d, *J*_{H-P} = 18 Hz, 1H, PCHN), 6.48 (t, *J* = 7 Hz, 1H), 6.79 (d, *J* = 7.5 Hz, 1H), 6.90 (s, 1H, PC*H*N), 6.85-7.3 (m, 10H), 7.84 (m, 2H, CH), 8.29 (m, 1H, CH), 8.39 (m, 1H, CH), How many H's; ¹³C{¹H} NMR (CDCl₃): δ 20.4 (d, *J*_{C-P} = 4 Hz, *C*H₃), 20.6 (d, *J*_{C-P} = 7 Hz, *C*H₃), 59.0 (d, *J*_{C-P} = 20 Hz, P*C*HN), 62.8 (d, *J*_{C-P} = 32 Hz, P*C*HN), Peaks at 120-140 ppm have not been assigned due to the complexity; ³¹P NMR (CDCl₃): δ -13.9 (d, *J*_{P-H} = 17 Hz). Analysis calculated for C₃₀H₂₅N₂O₂P(CH₂Cl₂)_{0.5}: C, 70.59; H, 5.05; N, 5.40. Found: C, 70.93; H, 4.93; N, 5.42
***rac*-6d:** Yield (isolated) = 24 % of a white solid *(rac*/*meso =* 11). ¹H NMR (CDCl₃): δ 6.41 (d, *J*_{H-P} = 19 Hz, 1H, PC*H*N), 7.07 (s, 1H, PC*H*N), 8.30 (m, 1H, CH), 8.46 (m, 1H, CH), 7.0-8.0 (m, 22H); ¹³C{¹H } NMR (CDCb): δ 61.2 (d, *J*_{C-P} = 21 Hz, PCHN), 65.9 (d, *J*_{C-P} = 31 Hz, PCHN), Peaks at 120-140 ppm have not been assigned due to the complexity; ³¹P NMR (CDCl3): δ -2.6 (d, *J*_{H-P} = 19 Hz). Analysis calculated for C₃₆H₂₅N₂O₂P: C, 78.82; H, 4.59; N, 5.11. Found: C, 78.21; H, 4.59; N, 5.19.
***rac*-6e:** Yield = 90 % of a yellow solid *(rac*/*meso =* 2). Recrystallization from hexane gave the pure *rac* isomer (38 %) and X-ray quality crystals of *rac*-6e were obtained from slow evaporation of a hexane solution. ¹H NMR (CDCb): δ 6.65 (d, *J*_{H-P} = 19.1 Hz, 1H, PC*H*N), 6.91 (d, *J*_{H-P} = 4.1 Hz, 1H. PC*H*N), 7.3=7.4 (m, 5H, Ph), 7.8 (m, 2H), 8.28 (m, 1H), 8.34 (m, 1H); ¹³C{¹H} NMR (CDCl₃): δ 51.89 (d, *J*_{C-P} = 22.3 Hz, PCHN), 57.01 (d, *J*_{C-P} = 33.7 Hz, PCHN), 156.42 (s, CO), 156.58 (s, CO), peaks at 110-145 ppm have not been assigned due to the complexity. ³¹P NMR (CDCl₃): δ -2.7 (m). Analysis calculated for C₂₈H₁₁N₂F₁₀O₂P: C, 53.52; H, 1.76; N, 4.46. Found: C, 53.72; H, 2.01; N, 4.23.
***rac*-6f:** Yield = 80% of a yellow oil *(rac*/meso =4). ¹H NMR (CDCl₃): δ 0.75 (t, *J*_{H-H} = 7 Hz, 3H *CH₃),* 0.92 (t, J_{H-H} = 7 Hz, 3H, *CH₃),* 1.5 (m, 4H, C*H*₂*),* 1.7 (m, 2H, CH₂), 1.9 (m, 2H, C*H*₂*),* 4.86 (ddd, *J*_{H-P} = 21 Hz, *J*_{H-H} = 12, 4 Hz, 1H, PC*H*N*),* 5.30 (dd, J_{H-H} = 9, 5 Hz, 1H, PCHN), 7.25-7.6 (m, 5H, aromatics), 7.6-8.1 (m, 2H, aromatics), 8.31 (m, 2H, aromatics); ¹³C NMR (CDCl₃): δ 14.4 (s, CH₃), 20.8 (d, *J*_{C-P} = 10 Hz, CH₂), 21.4 (d, *J*_{C-P} = 8 Hz, CH₂), 35.6 (s, CH₂), 35.8 (s, CH₂), 59.9 (d, *J*_{C-P} = 17 Hz, PCHN), 62.9 (d, *J*_{C-P} = 27 Hz, P*C*HN*),* 128.0 (s), 128.3 (s), 129.6 (d, *J*_{C-P} = 8 Hz), 131.6 (s), 134.0 (d, *J*_{C-P} = 12 Hz), 134.9 (s), 135.1 (s), A range of 120-140 ppm has not been assigned due to the complexity; ³¹P NMR (CDCl₃): δ -18.9 (b). Analysis calculated for C₂₂H₂₅N₂O₂P: C, 69.46; H, 6.62; N, 7.36. Found: C, 66.13; H, 4.96; N, 3.66.
***rac*-6g:** Yield = 49.9% of a white solid, prepared from the treatment of **1d** and phthaloyl chloride in THF. ¹H NMR (CDCl₃): δ 0.41, (d, *J*_{H-H} = 7.1 Hz, 3H, C*H₃*), 0.95-1.06 (m, 9H, C*H*₃) 2.41, (oct, *J*_{H-H} = 6.8Hz, 1H, C*H*Me₂), 3.13, (oct, *J*_{H-H} = 6.9Hz, 1H, C*H*Me₂), 4.94 (dd, *J*_{H-H} = 5.8 Hz, *J*_{P-H} = 20.4 Hz, 1H, PC*H*N), 5.32 (dd, *J*_{H-H} = 6.2Hz, *J*_{P-H} = 1.7Hz, 1H, PC*H*N), 7.30-7.45, (m, 3H), 7.60-7.68, (m, 2H), 7.79-7.89, (m, 2H), 8.30-8.44, (m, 2H); ¹³C{¹H} NMR (CDCl3): δ 18.0 (d, *J*_{P-C} = 1.0 Hz, *C*H₃), 18.7 (d, *J*_{P-C} = 10.0 Hz, *C*H₃). 19.8, (d *J*_{P-C} = 8.86 Hz, *C*H3), 20.2 (d, *J*_{P-C} = 10.0 Hz, *C*H₃), 22.5 (d, *J*_{P-C} = 4.8 Hz, *C*H₃), 23.5 (d, *J*_{P-C} = 21.4 Hz, *C*H₃), 65.7 (d, *J*_{P-C} = 17.6 Hz, P*C*HN),67.8 d, *J*_{P-C} = 32.0 Hz, P*C*HN), 157.6 (s, CO), 156.7 (s, *C*O); peaks at 127.4-135.1 ppm have not been assigned due to the complexity. ³¹P NMR (CDCl₃): δ -25.7. Analysis calculated for C₂₂H₂₅N₂O₂P: C, 69.46; H, 6.62; N, 7.36. Found: C, 69.45 ; H, 6.31; N, 7.42.

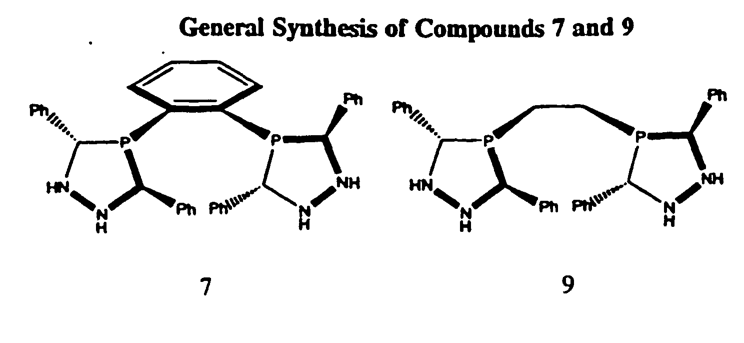

Phenyl azine (322.4 mg, 1.55 mmol) in Et₂O (50 mL) was treated with HCl (0.78 mL, 2M Et2O solution) at 0°C. The corresponding bis-phosphine (1,2-diphosphinobenzene (7); 1,2-diphosphinoethane (9)) (0.775 mmol) was then slowly added at 0°C, and the mixture was stirred at room temperature overnight. To the resultant white slurry was added a 10 % aqueous K₂CO₃ solution (ca. 20 mL) at ice-bath temperature. The aqueous and organic layers were filtered off via cannula to obtain a white solid which was subsequently washed with distilled water and Et₂O. The white solid was dried overnight under vacuum to obtain analytically pure compound 7. X-ray quality crystals for *rac*-7 were grown from CH₂Cl₂ and hexanes at room temperature.
***rac*-7:** Yield = 32 % of a white solid. ¹H NMR (CDCl₃): δ 3.75 (dd, *J*_{H-H} = 6.6, 10.3 Hz, 2H, NH), 4.34 (t, *J*_{H-H} = 11.4 Hz, 2H, NH), 4.55 (d, *J*_{H-H} = 6.3 Hz, 2 H, PCHN), 4.71 (q, J = 11.7, 2H, PCHN), 6.63 (m, 4H), 6.80 (m, 4H), 6.94 (m, 2H), 7.23-7.40 (m, 14H); ¹³C{¹H} NMR (CDCl₃): δ 70.40 (t, *J*_{C-P} = 6.4 Hz, PCHN), 71.27 (t, *J*_{C-P} = 14.0 Hz, P*C*HN), 126.40 (t, *J*_{C-P}= 2.5 Hz), 126.58 (s), 127.47 (s), 128.75 (s), 129.24 (s), 131.72 (s), 134.98 (s), 141.08 (t, *J*_{C-P} = 8.3 Hz), 141.5 (s). Peaks at 127-128 ppm haven't been assigned due to the complexity. ³¹P NMR (CDCb): δ 11.6 (t, *J*_{P-H} = 10.7 Hz). Analysis calculated for C₃₄H₃₂N₄P₂: C, 73.11; H, 5.77; N, 10.03. Found: C, 73.05; H, 5.74; N, 10.1.
***rac*-9:** Yield = 32 % of a white solid. ¹H NMR (CDCb): δ 0.95 (m, 4H, CH2), 3.76 (dd, J_{H-H} = 7.0, 11.0 Hz, 2H, NH), 4.11 (t, *J* = 10.3 Hz, 2H, NH), 4.41 (d, *J*_{H-H} = 7.0 Hz, 2H, PC*H*N), 4.82 (q, *J =* 10.3 Hz, 2H, PC*H*N), 7.28-7.40 (m, 6H, Ph), 7.50 (m, 4H, Ph); ¹³C{¹H} NMR (CDCl₃): δ 19.8 (d, *J*_{C-P} = 7 Hz, *C*H₂P), 69.7 (dd, *J*_{C-P} = 10.8, 14 Hz, PCHN), 73.3 (t, *J*_{C-P} = 11.4 Hz, P*C*HN), 126.1 (s), 126.7 (s), 127.44 (s), 127.6 (d, *J*_{C-P} = 11Hz),128.57 (s), 128.83 (s), 136.4 (s, C*ᵢₚₛₒ*), 139.9 (t, *J*_{C-P} = 8.3 Hz, *Cᵢₚₛₒ*); ³¹P NMR (CDCb): δ 15.8 (m). Analysis calculated for C₃₀H₃₂N₄P₂: C, 70.58; H, 6.32; N, 10.97. Found: C, 70.29; H, 6.31; N. 11.0.

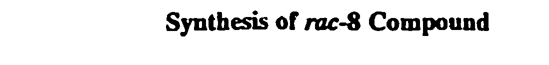

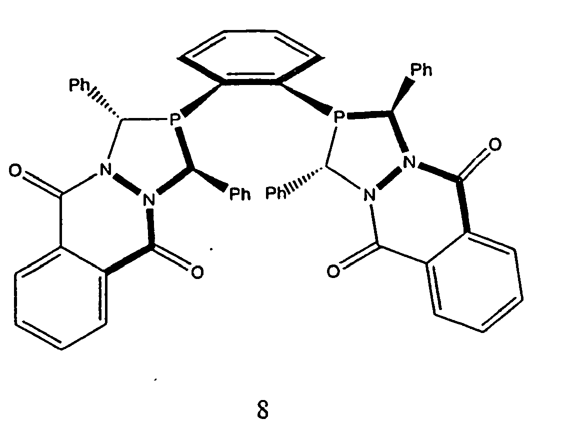

1,2-Bis(phosphino)benzene (0.2 mL, 1.55 mmol) was added to the ether solution of phenyl azine (648 mg, 3.1 mmol) and phthalolyl chloride (0.9 mL, 6.25 mmol) at 0°C. After the mixture stirred over night, an aqueous 10 % K₂CO₃ solution (30 mL) was added into the resultant white slurry at ice-bath temperature. The aqueous and ether layers were removed via cannula and the residue dried *in vacuo.* The residue was washed with THF and Et₂O (1:1 (v/v)) to obtain a white solid of *rac*-**8** in a 23 % yield. X-ray quality crystals were grown from CH2Cl2/hexanes at room temperature. In addition, *rac*-8 was made from the addition of *rac*-7 into phthaloyl chloride in THF at 0°C. ¹H NMR (CDCl₃): δ 6.15 (t, *J*_{P-H} = 10.3 Hz, 2H, PC*H*N), 6.18 (s, 2H, PC*H*N), 6.96 (m, 4H), 7.1 (m, 4H), 7.17 (m, 2H), 7.3-7.4 (m, 14H), 7.8 (m, 4H), 8.2 (m, 2H, C*H*). 8.36 (m, 2H, C*H*); ¹³C{¹H} NMR (CDCl3): δ 60.56 (s, PCHN), 65.75 (t, *J*_{C-P} = 18.5 Hz, PCHN), 156.86 (s, CO), 157.11 (s, CO). Peaks at 125-140 ppm haven't been assigned due to the complexity; ³¹P NMR (CDCb): δ -14.4 (t, *J*_{P-H} = 10.7 Hz). Analysis calculated for C₅₀H₃₆N₄O₄P₂(CH₂Cl₂)_{0.8}: C, 68.81; H, 4.27; N, 6.32. Found: C, 68.55; H, 4.37; N, 6.14.

### Resolution Procedure for Tartaric Acid Derivatives: Tart-1a, Tart-1e, and Tart-9

Di-O-methyl-tartaric acid was prepared according to the literature method. I. Felner, K. Schenker, Helv. Chim. Acta. 1970, 53, 4, 754-762. The acid was converted to the acid chloride based loosely on literature procedure. T. Purdie, C. R. Young, J. Chem. Soc. 1910, 1532. The acid was slowly added to a slight excess of PCIs in benzene at 0°C under nitrogen followed by stirring overnight. The resulting solution was filtered and solvent was removed *in vacuo* to yield a yellow solid. The solid was purified by sublimation. ¹H NMR (CDCl₃): 3.57 (s, 6H), 4.73 (s, 2H); ¹³C {¹H} NMR (CDCl₃): δ 60.5, 87.4, 169.3.

A THF solution of the acid chloride was added dropwise to a stirring THF solution of the diazaphospholane at room temperature. After stirring overnight, the THF was removed *in vacuo.* Ether was added to the resulting oil, and to the resulting solution was added aqueous 10% K₂CO₃. The ether layer was dried over MgSO₄, and the ether was removed *in vacuo.* Resolution of the Tart-9 diastereomers was accomplished on Aldrich silica preparative TLC plates (20cm x 20cm x 1mm) with a mobile phase of ethyl acetate/hexane. Both diastereomers were separately recovered. Resolution of Tart-1a and Tart-1e was accomplished by flash chromatography using a column packed with Silica Gel 60 (EM Science) and eluents of 15:1 and 30:1 CH2Cl2/ethyl acetate. One diastereomer of each was cleanly recovered. The other diastereomers each had unidentified impurities in ¹H and ³¹P NMR's. Absolute configurations of the resolved diastereomers are not currently known.
**Tart-9:** [Crude product has only 2 peaks in ³¹P NMR] (Rf = 0.17): ¹H NMR (CDCl₃): 0.95 (m, 4H, CH₂), 3.61 (s, 6H, OC*H*₃), 3.75 (s, 6H, OC*H*₃), 3.89 (d, *J*_{H-H} = 12 Hz, 2H, C*H*OCH₃), 4.27 (d, *J*_{H-H} = 12Hz, 2H, C*H*OCH3), 5.56 (s, 2H, PC*H*N), 5.56 (d, *J*_{H-P} = 16 Hz, 2H, PC*H*N), 6.9-7.4 (m, 30H); ³¹P NMR (CDCl3): δ 4.7 (m); (R_{f} = 0.28): ¹H NMR (CDCl₃): 3.41 (s, 6H, OC*H*3), 3.61 (s, 6H, OC*H*3), 3.88 (d, *J*_{H-H} = 3Hz, 2H, C*H*OCH₃), 3.97 (d, *J*_{H-H} = 3Hz, 2H, C*H*OCH3), 5.42 (d, *J*_{H-P} = 17Hz, 2H, PC*H*N), 5.57 (s, 2H, PC*H*N), 6.9-7.4 (m, 30H); ³¹P NMR (CDCb): δ 3.5 (m).
**Tart-1a:** [Crude product has two diastereomers as main products with several unidentified impurities] (Rf = 0.33): ¹H NMR (CDCb): 3.58 (s, 3H, OC*H*₃), 3.71 (s, 3H, OC*H*₃), 3.97 (d, *J*_{H-H} = 12Hz, 1H, C*H*OCH₃). 4.17 (d, *J*_{H-H} = 12Hz, 1H, C*H*OCH₃), 5.80 (d, J_{H-P} = 19Hz, 1H, PC*H*N), 6.38 (s, 1H, PC*H*N), 6.6-7.4 (m, 15H); ³¹P NMR (CDCl₃): δ 9.2 (m) with a trace of other impurities; (R_{f} = 0.55): ¹H NMR (CDCl₃): 3.47 (s, 3H, *OCH₃),* 3.57 (s, 3H, OC*H*₃), 3.86 (d, *J*_{H-H} = 4Hz, 1H, C*H*OCH₃*),* 4.00 (d, *J*_{H-H} = 4Hz, 1H, *CHOCH₃),* 5.71 (d, *J*_{H-P} = 19Hz, 1H, PC*H*N), 6.42 (s, 1H, PC*H*N), 6.6-7.5 (m, 15H); ³¹P NMR (CDCl₃): δ 8.5 (m).
**Tart-1e:** [Crude product has two diastereomers as main products with several unidentified impurities] (Rf = 0.31): ¹H NMR (CDCl₃): 0.84 (d, *J*_{H-P} = 1Hz, 9H, C(C*H*3)3), 0.98 (s, 9H, C(C*H*3)3), 3.51 (s, 3H, OC*H*₃), 3.53 (s, 3H, OCH₃), 3.86 (d, *J*_{H-H} = 3Hz, 1H, C*H*OCH3), 3.94 (d, *J*_{H-H} = 3Hz, 1H, C*H*OCH3), 4.58 (d, *J*_{H-P} = 21Hz. 1H, PC*H*N), 4.74 (d, *J*_{H-P} = 3Hz, 1H, PC*H*N), 7.2-7.7 (m, 5H); ³¹P NMR (CDCl₃): δ 1.4; (R_{f} = 0.15): ¹H NMR (CDCl₃): 0.78 (d, J_{H-P} = 1Hz, 9H. C(C*H*3)3), 0.96 (s, 9H, C(CH₃)₃), 3.68 (s, 3H, OC*H*3), 3.72 (s, 3H, OC*H*3), 3.99 (d, *J*_{H-H} = 11Hz, 1H, C*H*OCH₃), 4.25 (d, *J*_{H-H} = 11Hz, 1H, C*H*OCH3), 4.53 (d, *J*_{H-P} = 21Hz, 1H, PC*H*N), 4.81 (d, *J*_{H-P} = 3Hz, PC*H*N), 7.2-7.7 (m, 5H); ³¹P NMR (CDCl₃): δ 4.8 plus one impurity with peak height ratio about 5:1 product to impurity at δ -6.2.

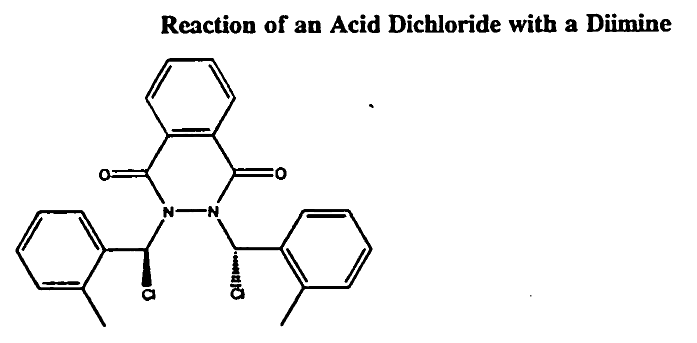

All manipulations were performed under a N₂ atmosphere and using standard Schlenk techniques.

Two equivalents of phthaloyl dichloride were added dropwise to a stirred ether solution of the azine (970 mg) formed by the reaction of equivalents of 2-methyl benzaldehyde with hydrazine. After stirring overnight, the solution was set aside. After 5 days, 100 mg of crystals had formed which were characterized using X-ray crystallographic analysis.

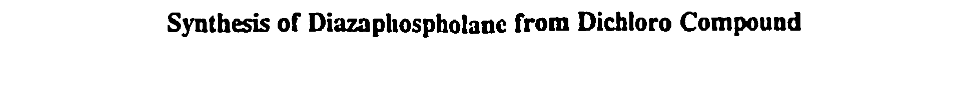

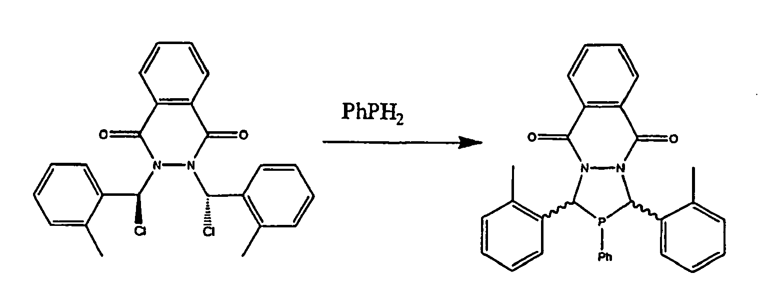

All manipulations were performed under N₂ using standard Schlenk techniques.

A solution of the azine (383 mg in 100 mL Et₂O) prepared from 2-methyl benzaldehyde and hydrazine was treated with 2 equivalents of phthaloyl dichloride and stirred overnight. Phenylphosphine (170 mg) was slowly added, and the solution was stirred overnight. To the resultant solution was added a 10% aqueous solution of K₂CO₃. The ether layer was separated, dried over MgSO₄, and filtered using a glass frit. The ether was removed, and 400 mg of the diazaphospholane was obtained as a 10:1 *rac:meso* mixture.

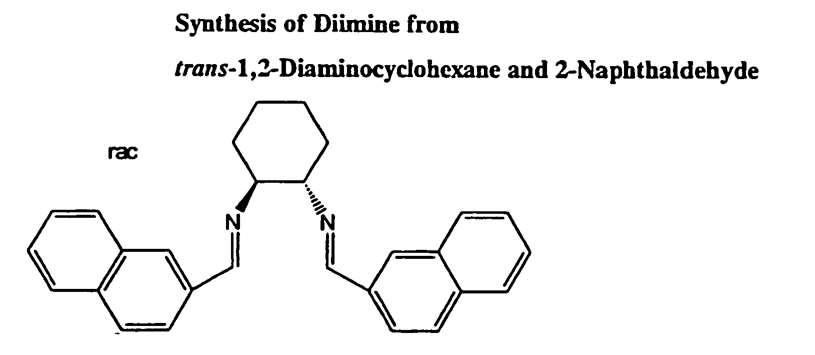

*Trans*-1,2-diaminocyclohexane (2.0 mL) was added dropwise to a stirred solution of two equivalents of 2-naphthaldehyde (8.2g in 100 mL benzene). After stirring for one hour, the solution was heated to 50°C for 30 minutes. The solvent was removed on a rotary evaporator. The resulting solid was redissolved in benzene and was then removed by rotary evaporation to azeotropically remove water. This procedure was repeated once more. The remaining solid was rinsed eight times with 25 mL of ether and filtered. The remaining solid was dried under vacuum for 15 minutes and was used without further purification (yield = 5.17g).

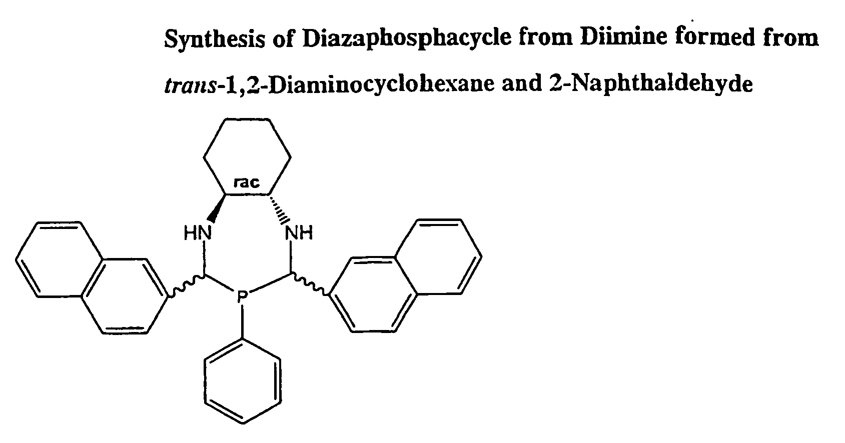

All manipulations were performed under N₂ using standard Schlenk techniques

Phenyl phosphine (0.3 mL) was added dropwise to a stirred solution of the diimine formed from *trans*-1,2-diaminocyclohexane and benzaldehyde (1.06g in 100 mL THF). After 10 minutes, an HCl solution (1.36 mL of a 2M solution in ether) was added dropwise. The resulting solution was then stirred for 18 hours. THF was removed under vacuum and 75 mL of ether was added. A 10% aqueous solution of K₂CO₃ was added to the ether mixture and was stirred until all solid had gone into solution. The ether layer was separated, dried over MgSO₄, and filtered. The ether was then removed under vacuum to yield a solid product (crude yield = 1.31 g) consisting of two diastereomers. ³¹P NMR (CDCl₃): δ 19, 9.

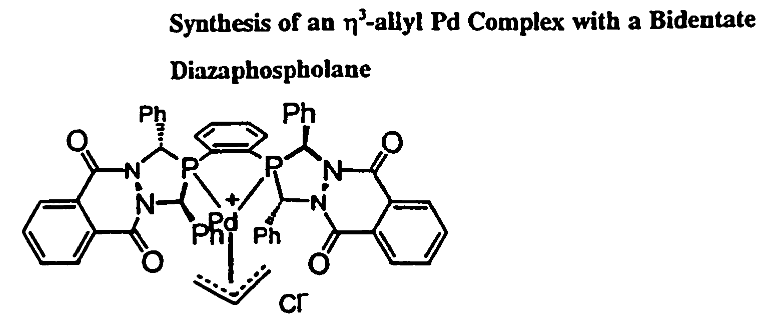

To a Teflon® brand fluorinated polymer capped NMR tube was added [(η³-C₃H₅)PdCl]₂ (5.2 µmol) (Aldrich Chemical (Milwaukee, Wisconsin)) and the diazaphospholane (10.3 µmol) indicated in the above structure. CD₂Cl₂ (ca 1 mL) was added, and the NMR tube was agitated until the solids went into solution. The designated Pd complex was obtained and characterized by NMR. ¹H NMR (CD₂Cl₂): δ 3.4 (allyl CH₂), 4.9 (allyl CH), 6.4 (PC*H*N), 6.6-7.6 (unassigned), 7.9 (phthaloyl), 8.3 (phthaloyl); ³¹P NMR: δ 71 ppm.

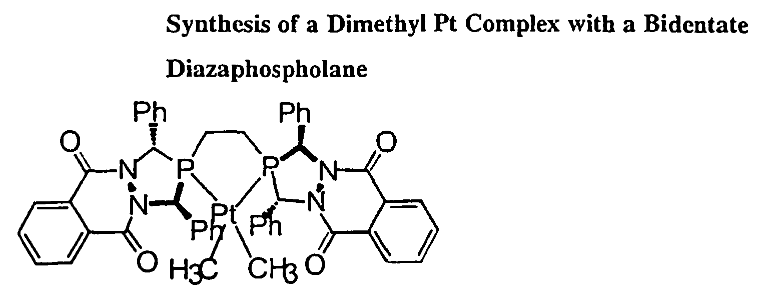

To a Teflon® brand fluorinated polymer capped NMR tube was added, [(cyclooctadiene)Pt(CH₃)₂] (1.3 µmol) (Aldrich Chemical (Milwaukee, Wisconsin) and the diazaphospholane (1.2 µmol) indicated by the above structure. Approximately 1 mL of C₆D₆ was added and the NMR tube was agitated until the solids went into solution. The solution was evaporated to dryness *in vacuo* to remove free cyclooctadiene, and approximately 1 mL of C₆D₆ was added. The dimethyl Pt complex indicated above was characterized by NMR. ¹H NMR (C₆D₆): δ 0.6 (*CH₃*), 0.2-1.6 (broad ethyl peaks unassigned), 5.8 (PC*H*N), 6.6 (PC*H*N), 6.7-7.4 (aromatics), 8.4 (phthaloyl); ³¹P NMR: δ 63 (with ¹⁹⁵Pt satellites; J_{Pt-P}= 1680 Hz).

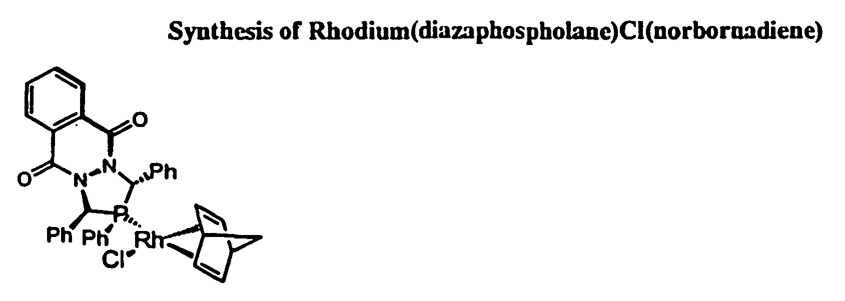

A CH₂Cl₂ solution of 2,5-diphenyldiazaphospholane (100 mg, 0.224 mmol) was added into a CH₂Cl₂ solution of [Rh(norbornadiene)Cl]₂ (51.7 mg, 0.112 mmol) at room temperature. The resulting mixture was stirred for 1 hour and pumped on under vacuum to quantitatively yield a red-orange solid. X-ray quality crystals were obtained from CH₂Cl₂ and hexane at room temperature. The Rh complex indicated above was characterized by X-ray crystallography and NMR spectroscopy. ¹H NMR (CDCl₃): δ1.33 (s, 2H), 3.04 (m 1H), 3.34 (m, 1H), 3.50 (m, 1H), 3.60 (m, 1H), 5.09 (m, 1H), 5.22 (m, 1H), 6.9-7.0 (m, 5H), 7.1-7.43 (m, 9H), 7.50 (m, 3H), 7.79 (m, 5H), 8.24 (m, 1H), 8.32 (m, 1H); ³¹P{¹H} NMR (CDCl3): δ 45.0 (d, *J*_{Rh-P} = 189 Hz).

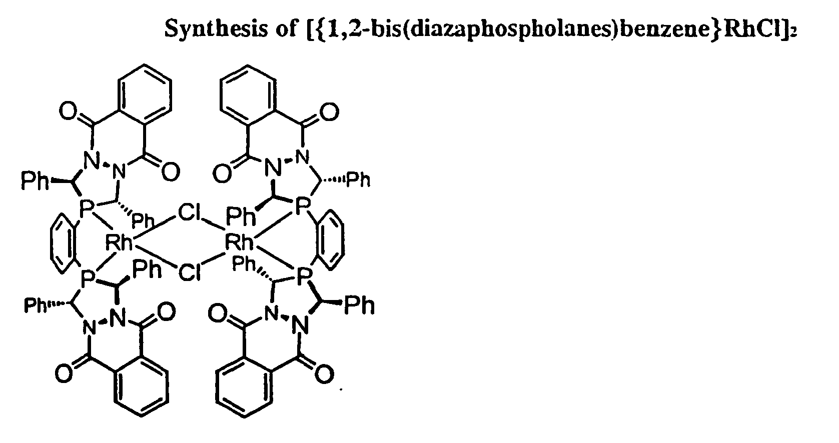

A CH₂Cl₂ solution of 1,2-bis(diazaphospholanes)benzene as indicated in the above structure was added into a [Rh(norbornadiene)Cl]₂ (prepared according to known procedure see E. W. Abel, M. A. Bennet, G. Wilkinson, J. Chem. Soc. 1959, 3178-3182 and available from Aldrich Chemical (Milwaukee, Wisconsin)) (or [Rh(COD)Cl]2) (prepared according to known procedure see G. Giordano, R. H. Crabtree, Inorg. Synth. 1990, 28 88-90 and available from Strem Chemicals, Inc. (Newburyport, Massachusetts)) solution in CH₂Cl₂ at room temperature. The reaction mixture was stirred for 1 hour and pumped on under vacuum to quantitatively yield a red-orange solid. X-ray quality crystals were obtained from CH₂Cl₂ and hexane at room temperature. The dirhodium complex indicated above was characterized by X-ray crystallography and NMR spectroscopy. ¹H NMR (CDCl₃): δ 5.71 (br, 2H), 6.16 (s, 2H), 7.1-7.3 (m, 14H), 7.47 (m, 6H), 7.88 (m, 4H), 8.32 (m, 2H), 8.40 (m, 2H); ³¹P{¹H} NMR (CDCl₃): δ 87.7 (d, *J*_{Rh-P} = 209 Hz).

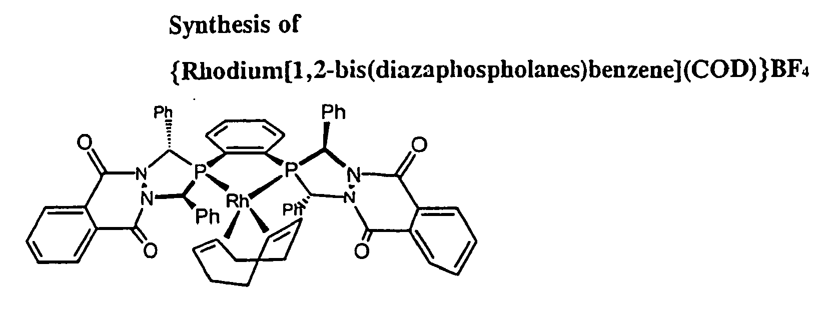

A 1:1 mixture of [Rh(COD):]BF₄ (prepared according to known procedure see T. G. Schenck, J. M. Downes, C. R. Miline, P. B. Mackenzie, M. Boucher, J. Wheland, B. Bosnich, Inorg. Chem. 1985, 24 2334-2337 and available from Pressure Chemical Co. (Pittsburgh, Pennsylvania)) and 1,2-bis(diazaphospholanes)benzene was prepared in an NMR tube at room temperature. After CDCl₃ was added, the mixture was agitated well. ³¹P{¹H} NMR indicated that the initial product was Rh[bis(diazaphospholanes)benzene](COD)}BF₄ showing a resonance signal at 62.2 ppm (*J*_{Rh-P} = 163 Hz). After 2 days, a new resonance signal appeared at 87.7 ppm (*J*_{Rh-P} = 209 Hz), which was identified as [{1,2-bis(diazaphospholanes)benzene} RhCl]₂

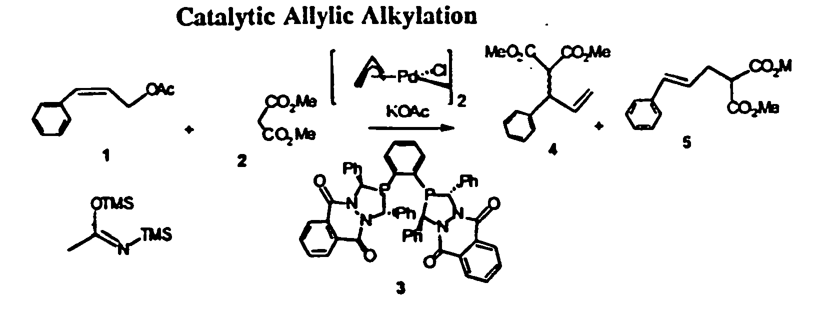

For the purposes of this example, the numbers refer to the numbers of the compounds in the reaction scheme presented above except as otherwise noted.

All manipulations were performed under a N₂ atmosphere.

A vial was prepared with 2.8 mg of (Pd(η³-C3H5)Cl]₂ (Aldrich Chemical (Milwaukee, Wisconsin)) and 15.0 mg of the diazaphospholane (3) (Example 8) in 1 mL CH₂Cl₂. A second vial was prepared with 1.0 mmol of cinnamyl acetate (1), 3.0 mmol of dimethyl malonate (2), 3.0 mmol of *N*,O-; bis(trimethylsilyl)acetamide 2 (Aldrich Chemical (Milwaukee, Wisconsin)), and two grains of potassium acetate in 1 mL of CH₂Cl₂. The second vial was added to the first vial and the solution was stirred for 18 hours at ambient temperature. The solvent was removed under vacuum and the ¹H NMR of the product dissolved in CDCl3 was taken. As determined by NMR, the conversion of cinnamyl acetate to alkylated products 4 and 5 was > 98% with a 33:1 ratio of 5:4.

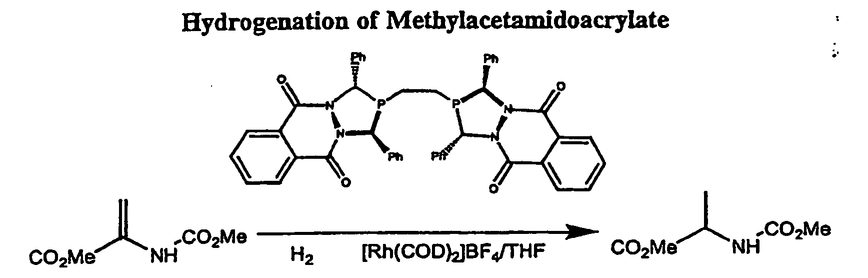

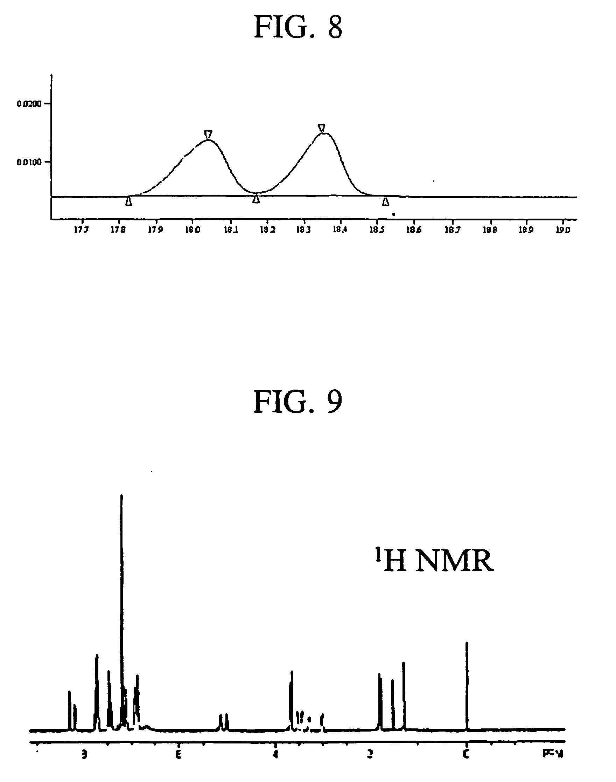

Under a N₂ atmosphere, a mixture of 1,2-bis(diazaphospholane)ethane (3.85 mg, 0.005 mmol) and [Rh(COD)₂]BF₄ (2 mg, 0.005 mmol) ₂ (Pressure Chemical Co. (Pittsburgh, Pennsylvania)) in THF (3 mL) was stirred for 1 hour at room temperature. Next, methylacetamidoacrylate (14.3 mg, 0.1 mmol) ₂ (Sigma-Aldrich (St. Louis, Missouri)) in THF(3 mL) was added and hydrogen (H₂) bubbled for 30 minutes at room temperature. The reaction flask was then sealed and stirred overnight. The reaction was then filtered through a short path of silica gel (150 mg) and washed with CH₂Cl₂ (5 mL). The hydrogenated product with complete conversion was identified using GC chromatography (FIG. 8) which shows the hydrogenation product of the hydrogenation using a chiral GC column with a racemic mixture of the catalyst.

It is understood that the invention is not limited to the embodiments set forth herein for illustration, but embraces all such forms thereof as come within the scope of the claims.

## Claims

1. A method of synthesizing a diazaphosphacycle, comprising:
reacting a phosphine with a diimine and optionally one or more equivalents of an acid halide, a sulfonyl halide, a phosphoryl halide or an acid anhydride in the substantial absence of O₂ to form the diazaphosphacycle, wherein the phosphine has the formula I, the diimine has the formula II, and the diazaphosphacycle has the formula III 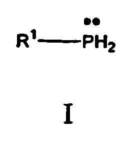 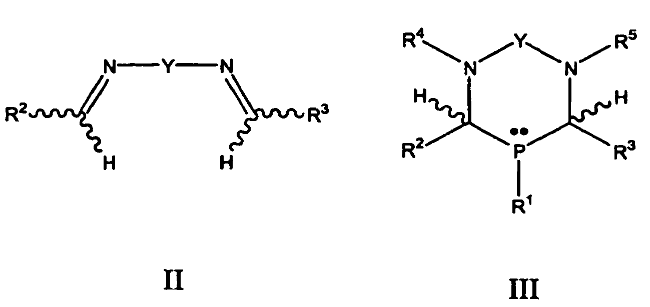
wherein,
R¹ is chosen from substituted and unsubstituted aryl groups, substituted and unsubstituted alkyl groups, substituted and unsubstituted alkenyl groups, substituted and unsubstituted cycloalkyl groups, and substituted and unsubstituted ferrocenyl groups;
R² and R³ are independently chosen from substituted and unsubstituted aryl groups, substituted and unsubstituted alkyl groups, substituted and unsubstituted cycloalkyl groups, substituted and unsubstituted heterocyclyl groups, and substituted and unsubstituted ferrocenyl groups;
R⁴ is chosen from -H, substituted and unsubstituted alkyl groups, substituted and unsubstituted cycloalkyl groups, substituted and unsubstituted aryl groups, trialkylsilyl groups, triarylsilyl groups, alkyldiarylsilyl groups, dialkylarylsilyl groups, -C(=O)-R⁶ groups, -S(-O)₂-R⁶ groups, -P(=O)R⁶R⁷ groups, and -C(=NR⁶)-R⁷ groups;
R⁵ is chosen from -H, substituted and unsubstituted alkyl groups, substituted and unsubstituted cycloalkyl groups, substituted and unsubstituted aryl groups, trialkylsilyl groups, triarylsilyl groups, alkyldiarylsilyl groups, dialkylarylsilyl groups, -C(=O)-R⁷ groups, -S(=O)₂R⁶ groups, -P(=O)R⁶R⁷ groups, and -C(=NR⁶)-R⁷ groups;
R⁶ is chosen from substituted and unsubstituted alkyl groups, substituted and unsubstituted alkenyl groups, substituted and unsubstituted cycloalkyl groups, substituted and unsubstituted aryl groups, -OH groups, substituted and unsubstituted alkoxy groups, substituted and unsubstituted aryloxy groups, -NH(alkyl) groups, -NH(aryl) groups, -N(aryl)₂ groups, - N(alkyl)₂ groups, -N(alkyl)(aryl) groups, -S-alkyl groups, and S-aryl groups;
R⁷ is chosen from substituted and unsubstituted alkyl groups, substituted and unsubstituted alkenyl groups, substituted and unsubstituted cycloalkyl groups, substituted and unsubstituted aryl groups, -OH groups, substituted and unsubstituted alkoxy groups, substituted and unsubstituted aryloxy groups, -NH(alkyl) groups, -NH(aryl) groups, -N(aryl)₂ groups, -N(alkyl)₂ groups, -N(alkyl)(aryl) groups, -S-alkyl groups, and S-aryl groups;
R⁶ and R⁷ may be part of the same alkyl group, alkenyl group or aryl group such that R⁴ and R⁵ together with the two nitrogen atoms of the diazaphosphacycle form a ring; and
Y is a linking group chosen from substituted and unsubstituted cycloalkyl groups, substituted and unsubstituted aryl groups, substituted and unsubstituted alkenyl groups, silyl groups, substituted alkyl groups and groups having the formula -(CH₂)ₙ- wherein n is selected from 0, 1, 2, and 3.

2. The method according to claim 1, wherein n is 0.

3. The method according to claim 1, wherein Y is a cycloalkyl group, wherein one of the N atoms of the diimine is bonded to a first ring member C atom of the cycloalkyl group and the other N atom of the diimine is bonded to a second ring member C atom that is bonded to the first ring member C atom.

4. The method according to claim 1, wherein Y has the formula 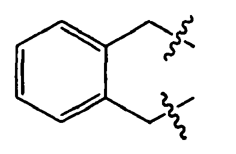 and the benzene ring of Y may be additionally substituted.

5. The method according to claim 1, wherein R² and R³ are identical but are not part of the same group.

6. The method according to claim 1, wherein the diazaphosphacycle is chosen from compounds of formula IIIA, compounds of formula IIIB and mixtures thereof,

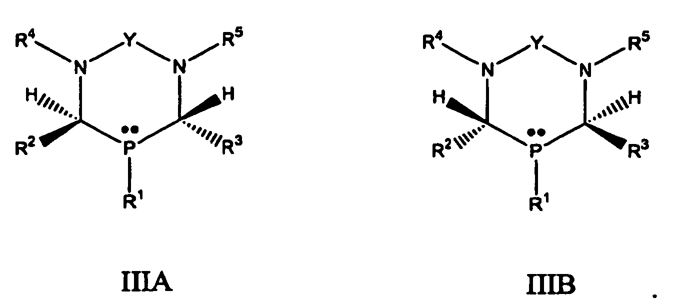

7. The method according to claim 6, wherein n is 0.

8. The method according to claim 1, wherein the diazaphosphacycle has the formula IIIC,

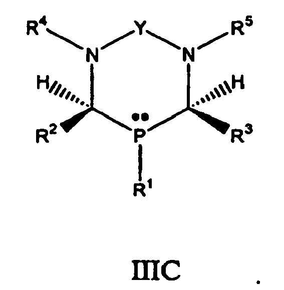

9. The method according to claim 8, wherein n is 0.

10. The method according to claim 1, wherein the phosphine and the diimine are reacted in the presence of an acid.

11. The method according to claim 1, wherein the phosphine and the diimine are reacted in the presence of the acid halide, the sulfonyl halide, the phosphoryl halide, or the acid anhydride, and at least one of R⁴ and R⁵ is not H.

12. The method according to claim 1, wherein the phosphine and the diimine are reacted in the presence of the acid halide, and further wherein R⁴ is a -C(=O)-R⁶ group and R⁵ is a -C(=O)-R⁷ group.

13. The method according to claim 1, wherein the phosphine and the diimine are reacted in the presence of phthaloyl dichloride or phthaloyl dibromide.

14. The method according to claim 1, wherein R¹ comprises one or more -PH₂ group such that the phosphine is a polyphosphine.

15. The method according to claim 14, wherein the polyphosphine is chosen from 1,2-diphosphinoethane, 1,2-diphosphinoethylene, 1,3-diphosphinopropane, substituted and unsubstituted 1,2-diphosphinobenzene groups, substituted and unsubstituted 1,8-diphosphinoanthracene groups, substituted and unsubstituted 1,8-diphosphino-9,10-dihydroanthracene groups, substituted and unsubstituted 1,8-diphosphinoxanthene groups, and substituted and unsubstituted 1,1'-diphosphinoferrocene groups.

16. The method according to claim 1, wherein the phosphine, the diimine, and optionally the acid halide are reacted in a substantially deoxygenated solvent comprising an ether, an alcohol, water, dichloroethane, or combinations thereof.

17. The method according to claim 1, wherein a library of different diazaphosphacycles is produced using a combinatorial method.

18. The method according to claim 1, further comprising reacting an acid halide, an acid anhydride, a phosphoryl halide, or a sulfonyl halide with the diazaphosphacycle to produce a second diazaphosphacycle wherein R⁴ and R⁵ are both -H in the diazaphosphacycle and at least one of R⁴ and R⁵ is not -H in the second diazaphosphacycle.

19. A method according to claim 1 comprising:
(a) reacting a diimine with an acid halide, a diacid dihalide, a sulfonyl halide, a disulfonyl dihalide, a phosphoryl halide or a diphosphoryl dihalide to form a dihalo intermediate compound; and
(b) reacting the dihalo intermediate compound with a phosphine of formula R¹-PH₂ in the substantial absence Of O₂ to form the diazaphosphacycle,
wherein R¹ is chosen from substituted and unsubstituted aryl groups, substituted and unsubstituted alkyl groups, substituted and unsubstituted alkenyl groups, substituted and unsubstituted cycloalkyl groups, and substituted and unsubstituted ferrocenyl groups; and the diimine has the formula IV 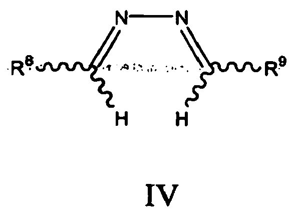 wherein R⁸ and R⁹ are independently chosen from substituted and unsubstituted aryl groups, substituted and unsubstituted alkyl groups, substituted and unsubstituted cycloalkyl groups, substituted and unsubstituted heterocyclyl groups, and substituted and unsubstituted ferrocenyl groups.

20. The method according to claim 19, wherein the diimine is reacted with a diacyl dihalide, and the diacyl dihalide has the formula V or the formula VI 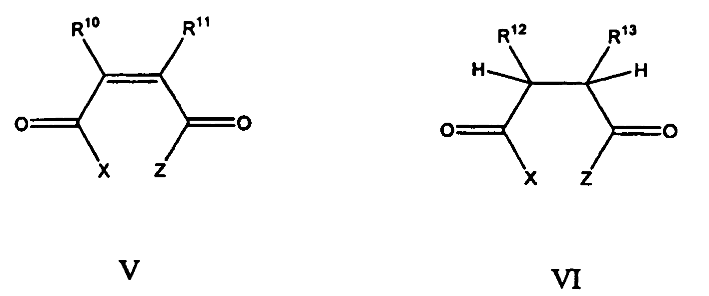 and the diazaphosphacycle has the formula VII or the formula VIII 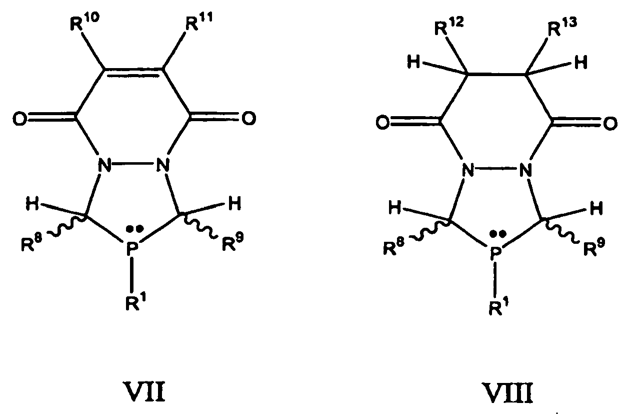 wherein,
R¹⁰, R¹¹, R¹², and R¹³ are independently chosen from -H, substituted and unsubstituted alkyl groups, substituted and unsubstituted cycloalkyl groups, and substituted and unsubstituted aryl groups;
R¹⁰ and R¹¹ may join together to form a substituted or unsubstituted aryl group or a substituted or unsubstituted cycloalkenyl group;
R¹² and R¹³ may join together to form a substituted or unsubstituted cycloalkenyl group or a substituted or unsubstituted cycloalkyl group; and
X and Z are independently selected from -Cl or -Br.

21. The method according to claim 20, wherein R⁸ and R⁹ are identical but are not part of the same group and R⁸ and R⁹ are substituted or unsubstituted aryl groups.

22. The method according to claim 20, wherein the diacyl dihalide is phthaloyl dichloride.

23. A diazaphosphacycle, having the formula III and salts of the compound 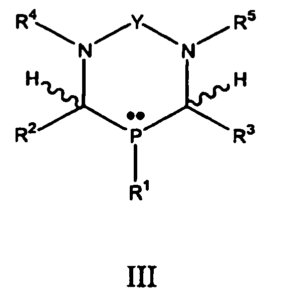 wherein
R¹ is chosen from substituted and unsubstituted aryl groups, substituted and unsubstituted alkyl groups, substituted and unsubstituted alkenyl groups, substituted and unsubstituted cycloalkyl groups and substituted and unsubstituted ferrocenyl groups;
R² and R³ are independently chosen from substituted and unsubstituted aryl groups, substituted and unsubstituted alkyl groups, substituted and unsubstituted cycloalkyl groups, substituted and unsubstituted heterocyclyl groups, and substituted and unsubstituted ferrocenyl groups;
R⁴ is chosen from -H, substituted and unsubstituted alkyl groups, substituted and unsubstituted cycloalkyl groups, substituted and unsubstituted aryl groups, trialkylsilyl groups, triarylsilyl groups, alkyldiarylsilyl groups, dialkylarylsilyl groups, -C(=O)-R⁶ groups, -S(=O)₂-R⁶ groups, -P(=O)R⁶R⁷ groups, and -C(=NR⁶)-R⁷ groups;
R⁵ is chosen from -H, substituted and unsubstituted alkyl groups, substituted and unsubstituted cycloalkyl groups, substituted and unsubstituted aryl groups, trialkylsilyl groups, triarylsilyl groups, alkyldiarylsilyl groups, dialkylarylsilyl groups, -C(=O)-R⁷ groups, -S(=O)₂-R⁶ groups, -P(=O)R⁶R⁷ groups, and -C(=NR⁶)-R⁷ groups;
R⁶ is chosen from substituted and unsubstituted alkyl groups, substituted and unsubstituted alkenyl groups, substituted and unsubstituted cycloalkyl groups, substituted and unsubstituted aryl groups, -OH groups, substituted and unsubstituted alkoxy groups, substituted and unsubstituted aryloxy groups, -NH(alkyl) groups, -NH(aryl) groups, -N(aryl)₂ groups, - N(alkyl)₂ groups, -N(alkyl)(aryl) groups, -S-alkyl groups, and S-aryl groups;
R⁷ is chosen from substituted and unsubstituted alkyl groups, substituted and unsubstituted alkenyl groups, substituted and unsubstituted cycloalkyl groups, substituted and unsubstituted aryl groups, -OH groups, substituted and unsubstituted alkoxy groups, substituted and unsubstituted aryloxy groups, -NH(alkyl) groups, -NH(aryl) groups, -N(aryl)₂ groups, -N(alkyl)₂ groups, -N(alkyl)(aryl) groups, -S-alkyl groups, and S-aryl groups;
R⁶ and R⁷ may be part of the same alkyl group, alkenyl group, or aryl group such that R⁴ and R⁵ together with the two nitrogen atoms of the diazaphosphacycle form a ring; and
Y is a linking group chosen from substituted and unsubstituted cycloalkyl groups, substituted and unsubstituted aryl groups, substituted and unsubstituted alkenyl groups, silyl groups, substituted alkyl groups, and groups having the formula -(CH₂)ₙ- wherein n is selected from 0, 1, 2, and 3.

24. The diazaphosphacycle according to claim 23, wherein n is 0.

25. The diazaphosphacycle according to claim 24, wherein R⁴ and R⁵ are both -H.

26. The diazaphosphacycle according to claim 24, wherein R⁴ is a -C(=O)-R⁶ group and R⁵ is a -C(=O)-R⁷ group.

27. The diazaphosphacycle according to claim 26, wherein the diazaphosphacycle has the formula IX 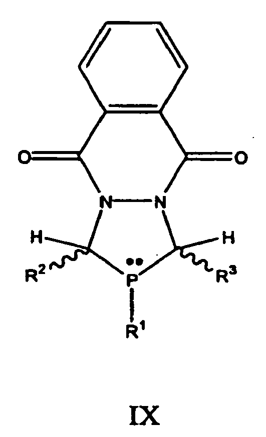 wherein the aromatic benzene ring in the compound of formula IX may be substituted or unsubstituted.

28. The diazaphosphacycle according to claim 23, wherein Y is, a cycloalkyl group, wherein one of the N atoms is bonded to a first ring member C atom of the cycloalkyl group and the other N atom is bonded to a second ring member C atom that is bonded to the first ring member C atom.

29. The diazaphosphacycle according to claim 23, wherein Y has the formula 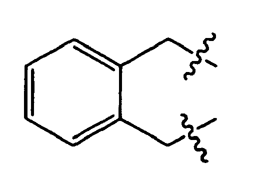 and the benzene ring of Y may be additionally substituted.

30. The diazaphosphacycle according to claim 23, wherein the diazaphosphacycle has the formula IIIA, the formula IIIB, or is a mixture thereof

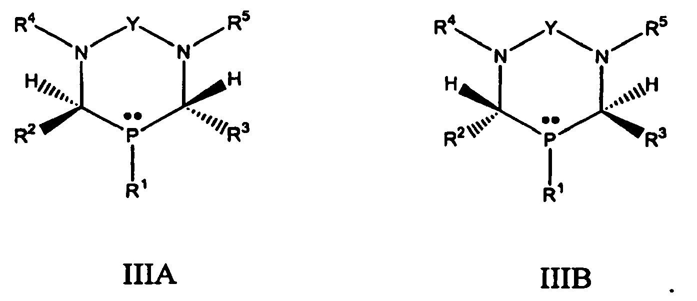

31. A transition metal complex comprising the diazaphosphacycle according to any of claims 23, 26 or 30 and a transition metal, wherein the phosphorus atom of the diazaphosphacycle is bonded to the transition metal.

32. The transition metal complex according to claim 31, wherein the transition metal is selected from the group consisting of Rh, Ru, Pd, Pt, Ir, Ni, Co, and Fe

33. The transition metal complex according to claim 32, wherein the transition metal complex has catalytic activity.

34. A method of catalyzing a chemical reaction, comprising using the transition metal complex according to claim 33 as a catalyst.

35. The diazaphosphacycle according to claim 23, wherein the diazaphosphacycle has the formula IIIC

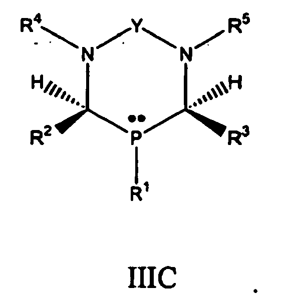

36. The diazaphosphacycle according to claim 23, wherein the diazaphosphacycle is present as a mixture of enantiomers.

37. The diazaphosphacycle according to claim 23, wherein the diazaphosphacycle has the formula X 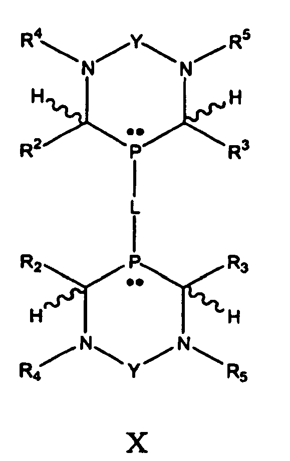 wherein L is a linking group chosen from substituted and unsubstituted alkyl groups, substituted and unsubstituted alkenyl groups, substituted and unsubstituted aryl groups and substituted and unsubstituted ferrocenyl groups.

38. The diazaphosphacycle according to claim 37, wherein L is chosen from ethane, ethylene, propane, benzene, anthracene, 9,10-dihydroanthracene, xanthene and ferrocene.

39. A transition metal complex comprising the diazaphosphacycle according to claim 37 and a transition metal, wherein at least one of the phosphorus atoms of the diazaphosphacycle is bonded to the transition metal.

40. The transition metal complex according to claim 39, wherein the transition metal is selected from the group consisting of Rh, Ru, Pd, Pt, Ir, Ni, Co and Fe.

41. The transition metal complex according to claim 39, wherein two of the phosphorus atoms of the diazaphosphacycle are bonded to the transition metal.

42. A method of synthesizing a diazaphosphacycle transition metal complex comprising reacting the diazaphosphacycle according to claim 23 with a starting transition metal complex to produce the diazaphosphacycle transition metal complex, wherein the starting transition metal complex includes at least one ligand that is replaced by the diazaphosphacycle.

43. The method according to claim 42, wherein the ligand replaced by the diazaphosphacycle is chosen from phosphines; amines; diamines; CO; Cl; Br; nitriles; 1,5-cyclooctadiene, norbornadiene, and other dienes; alkenes; arenes; ketones; alcohols; ethers; thiols; and sulfoxides.

## Patentansprüche

1. Verfahren zum Synthetisieren eines Diazaphosphacyclus, umfassend:
das Umsetzen eines Phosphins mit einem Diimin und gegebenenfalls einem oder mehreren Äquivalenten eines Säurehalogenids, eines Sulfonylhalogenids, eines Phosphorylhalogenids oder eines Säureanhydrids im Wesentlichen in Abwesenheit von O₂ zur Bildung des Diazaphosphacyclus, wobei das Phosphin die Formel I aufweist, das Diimin die Formel II aufweist und der Diazaphosphacyclus die Formel III aufweist 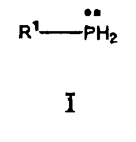 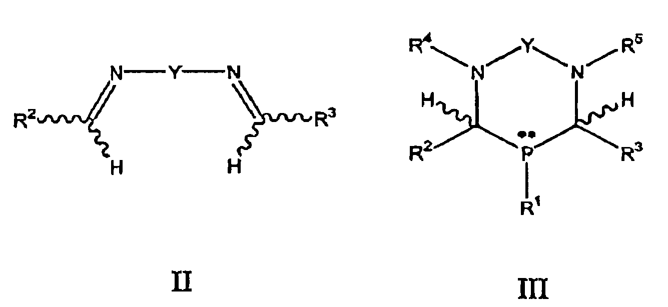
wobei
R¹ ausgewählt ist aus substituierten und unsubstituierten Arylgruppen, substituierten und unsubstituierten Alkylgruppen, substituierten und unsubstituierten Alkenylgruppen, substituierten und unsubstituierten Cycloalkylgruppen und substituierten und unsubstituierten Ferrocenylgruppen;
R² und R³ jeweils unabhängig voneinander ausgewählt sind aus substituierten und unsubstituierten Arylgruppen, substituierten und unsubstituierten Alkylgruppen, substituierten und unsubstituierten Cycloalkylgruppen, substituierten und unsubstituierten Heterocyclylgruppen und substituierten und unsubstituierten Ferrocenylgruppen;
R⁴ ausgewählt ist aus -H, substituierten und unsubstituierten Alkylgruppen, substituierten und unsubstituierten Cycloalkylgruppen, substituierten und unsubstituierten Arylgruppen, Trialkylsilylgruppen, Triarylsilylgruppen, Alkyldiarylsilylgruppen, Dialkylarylsilylgruppen, -C(=O)-R⁶-Gruppen, -S(=O)₂-R⁶-Gruppen, -P(=O)R⁶R⁷-Gruppen und -C(=NR⁶)-R⁷-Gruppen;
R⁵ ausgewählt ist aus -H, substituierten und unsubstituierten Alkylgruppen, substituierten und unsubstituierten Cycloalkylgruppen, substituierten und unsubstituierten Arylgruppen, Trialkylsilylgruppen, Triarylsilylgruppen, Alkyldiarylsilylgruppen, Dialkylarylsilylgruppen, -C(=O)-R⁷-Gruppen, -S(=O)₂-R⁶-Gruppen, -P(=O)R⁶R⁷-Gruppen und -C(=NR⁶)-R⁷-Gruppen;
R⁶ ausgewählt ist aus substituierten und unsubstituierten Alkylgruppen, substituierten und unsubstituierten Alkenylgruppen, substituierten und unsubstituierten Cycloalkylgruppen, substituierten und unsubstituierten Arylgruppen, -OH-Gruppen, substituierten und unsubstituierten Alkoxygruppen, substituierten und unsubstituierten Aryloxygruppen, -NH(Alkyl)-gruppen, -NH(Aryl)-gruppen, -N(Aryl)₂-gruppen, -N(Alkyl)₂-gruppen, -N(Alkyl)-(aryl)-gruppen, -S-Alkylgruppen und S-Arylgruppen;
R⁷ ausgewählt ist aus substituierten und unsubstituierten Alkylgruppen, substituierten und unsubstituierten Alkenylgruppen, substituierten und unsubstituierten Cycloalkylgruppen, substituierten und unsubstituierten Arylgruppen, -OH-Gruppen, substituierten und unsubstituierten Alkoxygruppen, substituierten und unsubstituierten Aryloxygruppen, -NH(Alkyl)-gruppen, -NH(Aryl)-gruppen, -N(Aryl)₂-gruppen, -N(Alkyl)₂-gruppen, -N(Alkyl)-(aryl)-gruppen, -S-Alkylgruppen und S-Arylgruppen;
R⁶ und R⁷ Teil der gleichen Alkylgruppe, Alkenylgruppe oder Arylgruppe sein können, so dass R⁴ und R⁵ zusammen mit den beiden Stickstoffatomen des Diazaphosphacyclus einen Ring bilden; und
Y eine Verknüpfungsgruppe bedeutet, die ausgewählt ist aus substituierten und unsubstituierten Cycloalkylgruppen, substituierten und unsubstituierten Arylgruppen, substituierten und unsubstituierten Alkenylgruppen, Silylgruppen, substituierten Alkylgruppen und Gruppen der Formel -(CH₂)ₙ-, wobei n aus 0, 1, 2 und 3 ausgewählt ist.

2. Verfahren nach Anspruch 1, wobei n den Wert 0 hat.

3. Verfahren nach Anspruch 1, wobei Y eine Cycloalkylgruppe bedeutet, wobei eines der N-Atome des Diimins an ein erstes Ringkohlenstoffatom der Cycloalkylgruppe gebunden ist und das andere N-Atom des Diimins an ein zweites Ringkohlenstoffatom gebunden ist, das seinerseits an das erste Ringkohlenstoffatom gebunden ist.

4. Verfahren nach Anspruch 1, wobei Y die folgende Formel aufweist 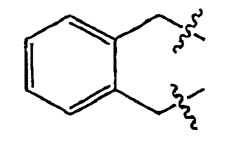 und der Benzolring von Y zusätzlich substituiert sein kann.

5. Verfahren nach Anspruch 1, wobei R² und R³ identisch sind, jedoch nicht Bestandteil der gleichen Gruppe sind.

6. Verfahren nach Anspruch 1, wobei der Diazaphosphacyclus aus Verbindungen der Formel IIIA, Verbindungen der Formel IIIB und Gemischen davon ausgewählt ist

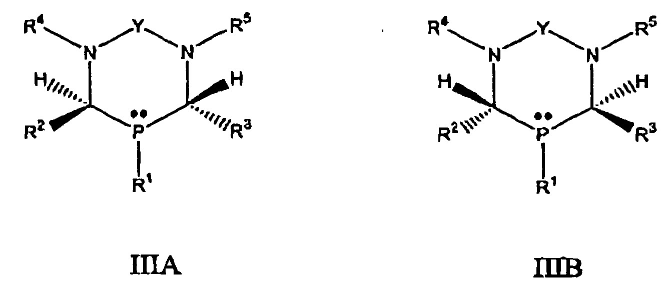

7. Verfahren nach Anspruch 6, wobei n den Wert 0 hat.

8. Verfahren nach Anspruch 1, wobei der Diazaphosphacyclus die Formel IIIC aufweist 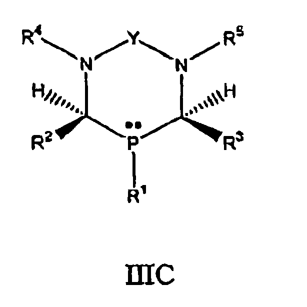 aufweist.

9. verfahren nach Anspruch 8, wobei n den Wert 0 hat.

10. Verfahren nach Anspruch 1, wobei das Phosphin und das Diimin in Gegenwart einer Säure umgesetzt werden.

11. Verfahren nach Anspruch 1, wobei das Phosphin und das Diimin in Gegenwart des Säurehalogenids, des Sulfonylhalogenids, des Phosphorylhalogenids oder des Säureanhydrids umgesetzt werden und mindestens einer der Reste R⁴ und R⁵ nicht die Bedeutung H hat.

12. Verfahren nach Anspruch 1, wobei das Phosphin und das Diimin in Gegenwart des Säurehalogenids umgesetzt werden und wobei es sich ferner bei R⁴ um eine -C(=O)-R⁶-Gruppe handelt und bei R⁵ um eine -C(=O)-R⁷-Gruppe handelt.

13. Verfahren nach Anspruch 1, wobei das Phosphin und das Diimin in Gegenwart von Phthaloyldichlorid oder Phthaloyldibromid umgesetzt werden.

14. Verfahren nach Anspruch 1, wobei R¹ eine oder mehrere -PH₂-Gruppen umfasst, so dass es sich beim Phosphin um ein Polyphosphin handelt.

15. Verfahren nach Anspruch 14, wobei das Polyphosphin ausgewählt ist aus 1,2-Diphosphinoethan, 1,2-Diphosphinoethylen, 1,3-Diphosphinopropan, substituierten und unsubstituierten 1,2-Diphosphinobenzolgruppen, substituierten und unsubstituierten 1,8-Diphosphinoanthracengruppen, substituierten und unsubstituierten 1,8-Diphosphino-9,10-dihydroanthracengruppen, substituierten und unsubstituierten 1,8-Diphosphinoxanthengruppen und substituierten und unsubstituierten 1,1'-Diphosphinoferrocengruppen.

16. Verfahren nach Anspruch 1, wobei das Phosphin, das Diimin und gegebenenfalls das Säurehalogenid in einem im Wesentlichen desoxygenierten Lösungsmittel, das einen Ether, einen Alkohol, Wasser, Dichlorethan oder Kombinationen davon umfasst, umgesetzt werden.

17. Verfahren nach Anspruch 1, wobei eine Bibliothek von verschiedenen Diazaphosphacyclen unter Anwendung eines kombinatorischen Verfahrens erzeugt wird.

18. Verfahren nach Anspruch 1, ferner umfassend das Umsetzen eines Säurehalogenids, eines Säureanhydrids, eines Phosphorylhalogenids oder eines Sulfonylhalogenids mit dem Diazaphosphacyclus zur Herstellung eines zweiten Diazaphosphacyclus, wobei R⁴ und R⁵ beide die Bedeutung -H im Diazaphosphacyclus aufweisen und mindestens einer der Reste R⁴ und R⁵ im zweiten Diazaphosphacyclus nicht die Bedeutung -H hat.

19. Verfahren nach Anspruch 1, umfassend;
(a) das Umsetzen eines Diimins mit einem Säurehalogenid, einem Disäuredihalogenid, einem Sulfonylhalogenid, einem Disulfonyldihalogenid, einem Phosphorylhalogenid oder einem Diphosphoryldihalogenid unter Bildung eines Dihalogenzwischenprodukts; und
(b) das Umsetzen des Dihalogenzwischenprodukts mit einem Phosphin der Formel R¹-PH₂ im Wesentlichen in Abwesenheit von O₂ unter Bildung des Diazaphosphacyclus,
wobei R¹ ausgewählt ist aus substituierten und unsubstituierten Arylgruppen, substituierten und unsubstituierten Alkylgruppen, substituierten und unsubstituierten Alkenylgruppen, substituierten und unsubstituierten Cycloalkylgruppen und substituierten und unsubstituierten Ferrocenylgruppen; und
das Diimin die Formel IV aufweist 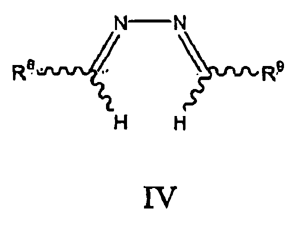 wobei R⁸ und R⁹ unabhängig voneinander ausgewählt sind aus substituierten und unsubstituierten Arylgruppen, substituierten und unsubstituierten Alkylgruppen, substituierten und unsubstituierten Cycloalkylgruppen, substituierten und unsubstituierten Heterocyclylgruppen und substituierten und unsubstituierten Ferrocenylgruppen.

20. Verfahren nach Anspruch 19, wobei das Diimin mit einem Diacyldihalogenid umgesetzt wird und das Diacyldihalogenid die Formel V oder die Formel VI aufweist 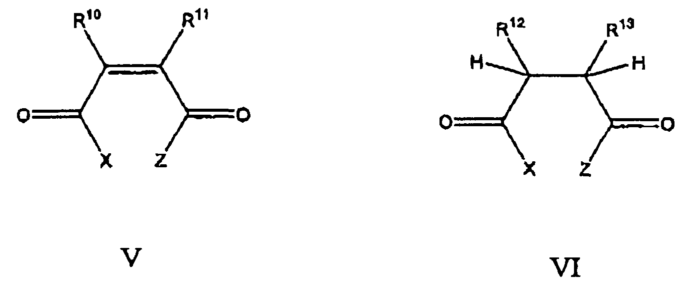 und der Diazaphosphacyclus die Formel VII oder die Formel VIII aufweist 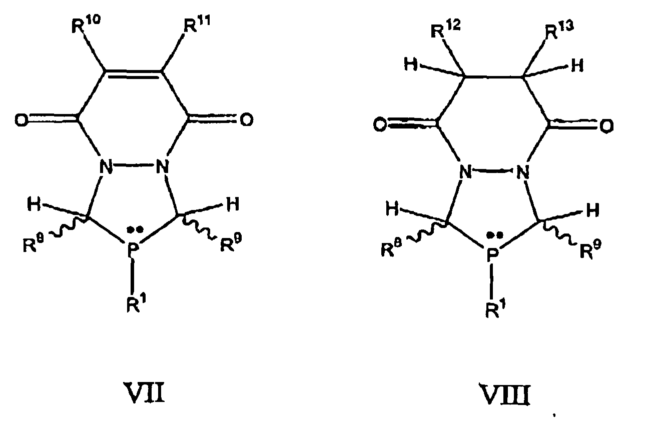 wobei
R¹⁰, R¹¹, R¹² und R¹³ unabhängig voneinander ausgewählt sind aus -H, substituierten und unsubstituierten Alkylgruppen, substituierten und unsubstituierten Cycloalkylgruppen und substituierten und unsubstituierten Arylgruppen;
R¹⁰ und R¹¹ unter Bildung einer substituierten oder unsubstituierten Arylgruppe oder einer substituierten oder unsubstituierten Cycloalkenylgruppe verbunden sein können;
R¹² und R¹³ unter Bildung einer substituierten oder unsubstituierten Cycloalkenylgruppe oder einer substituierten oder unsubstituierten Cycloalkylgruppe verbunden sein können; und
X und Z unabhängig voneinander ausgewählt sind aus -Cl oder -Er.

21. Verfahren nach Anspruch 20, wobei R⁸ und R⁹ identisch sind, jedoch nicht Bestandteil der gleichen Gruppe sind und R⁸ und R⁹ substituierte oder unsubstituierte Arylgruppen bedeuten.

22. Verfahren nach Anspruch 20, wobei es sich beim Diacyldihalogenid um Phthaloyldichlorid handelt.

23. Diazaphosphacyclus der Formel III und Salze dieser Verbindung 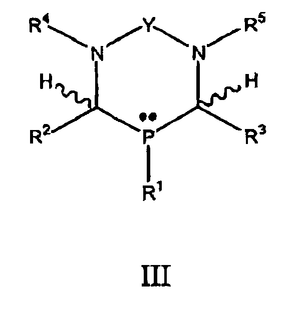 wobei
R¹ ausgewählt ist aus substituierten und unsubstituierten Arylgruppen, substituierten und unsubstituierten Alkylgruppen, substituierten und unsubstituierten Alkenylgruppen, substituierten und unsubstituierten Cycloalkylgruppen und substituierten und unsubstituierten Ferrocenylgruppen;
R² und R³ jeweils unabhängig voneinander ausgewählt sind aus substituierten und unsubstituierten Arylgruppen, substituierten und unsubstituierten Alkylgruppen, substituierten und unsubstituierten Cycloalkylgruppen, substituierten und unsubstituierten Heterocyclylgruppen und substituierten und unsubstituierten Ferrocenylgruppen;
R⁴ ausgewählt ist aus -H, substituierten und unsubstituierten Alkylgruppen, substituierten und unsubstituierten Cycloalkylgruppen, substituierten und unsubstituierten Arylgruppen, Trialkylsilylgruppen, Triarylsilylgruppen, Alkyldiarylsilylgruppen, Dialkylarylsilylgruppen, -C(=O)-R⁶-Gruppen, -S(=O)₂-R⁶-Gruppen, -P(=O)R⁶R⁷-Gruppen und -C(=NR⁶)-R⁷-Gruppen;
R⁵ ausgewählt ist aus -H, substituierten und unsubstituierten Alkylgruppen, substituierten und unsubstituierten Cycloalkylgruppen, substituierten und unsubstituierten Arylgruppen, Trialkylsilylgruppen, Triarylsilylgruppen, Alkyldiarylsilylgruppen, Dialkylarylsilylgruppen, -C(=O)-R⁷-Gruppen, -S(=O)₂-R⁶-Gruppen, -P(=O)R⁶R⁷-Gruppen und -C(=NR⁶)-R⁷-Gruppen;
R⁶ ausgewählt ist aus substituierten und unsubstituierten Alkylgruppen, substituierten und unsubstituierten Alkenylgruppen, substituierten und unsubstituierten Cycloalkylgruppen, substituierten und unsubstituierten Arylgruppen, -OH-Gruppen, substituierten und unsubstituierten Alkoxygruppen, substituierten und unsubstituierten Aryloxygruppen, -NH(Alkyl)-gruppen, -NH(Aryl)-gruppen, -N(Aryl)₂-gruppen, -N(Alkyl)₂-gruppen, -N(Alkyl)-(aryl)-gruppen, -S-Alkylgruppen und S-Arylgruppen;
R⁷ ausgewählt ist aus substituierten und unsubstituierten Alkylgruppen, substituierten und unsubstituierten Alkenylgruppen, substituierten und unsubstituierten Cycloalkylgruppen, substituierten und unsubstituierten Arylgruppen, -OH-Gruppen, substituierten und unsubstituierten Alkoxygruppen, substituierten und unsubstituierten Aryloxygruppen, -NH(Alkyl)-gruppen, -NH(Aryl)-gruppen, -N(Aryl)₂-gruppen, -N(Alkyl)₂-gruppen, -N(Alkyl)-(aryl)-gruppen, -S-Alkylgruppen und S-Arylgruppen;
R⁶ und R⁷ Teil der gleichen Alkylgruppe, Alkenylgruppe oder Arylgruppe sein können, so dass R⁴ und R⁵ zusammen mit den beiden Stickstoffatomen des Diazaphosphacyclus einen Ring bilden; und
Y eine Verknüpfungsgruppe bedeutet, die ausgewählt ist aus substituierten und unsubstituierten Cycloalkylgruppen, substituierten und unsubstituierten Arylgruppen, substituierten und unsubstituierten Alkenylgruppen, Silylgruppen, substituierten Alkylgruppen und Gruppen der Formel -(CH₂)ₙ-, wobei n aus 0, 1, 2 und 3 ausgewählt ist.

24. Diazaphosphacyclus nach Anspruch 23, wobei n den Wert 0 hat.

25. Diazaphosphacyclus nach Anspruch 24, wobei R⁴ und R⁵ beide die Bedeutung -H haben.

26. Diazaphosphacyclus nach Anspruch 24, wobei R⁴ eine -C(=O)-R⁶-Gruppe und R⁵ eine -C(=O)-R⁷-Gruppe bedeutet.

27. Diazaphosphacyclus nach Anspruch 26, wobei der Diazaphosphacyclus die Formel IX aufweist 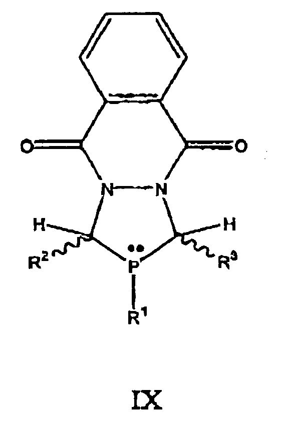 wobei der aromatische Benzolring in der Verbindung der Formel IX substituiert oder unsubstituiert sein kann.

28. Diazaphosphacyclus nach Anspruch 23, wobei Y eine Cycloalkylgruppe bedeutet, wobei eines der N-Atome an ein erstes Ringkohlenstoffatom der Cycloalkylgruppe gebunden ist und das andere N-Atom an ein zweites Ringkohlenstoffatom gebunden ist, das seinerseits an das erste Ringkohlenstoffatom gebunden ist.

29. Diazaphosphacyclus nach Anspruch 23, wobei Y die Formel 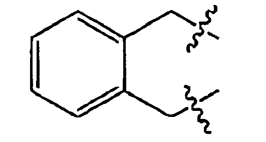 aufweist und der Benzolring von Y zusätzlich substituiert sein kann,

30. Diazaphosphacyclus nach Anspruch 23, wobei es sich beim Diazaphosphacyclus um eine Verbindung der Formel IIIA, der Formel IIIB oder um ein Gemisch davon handelt

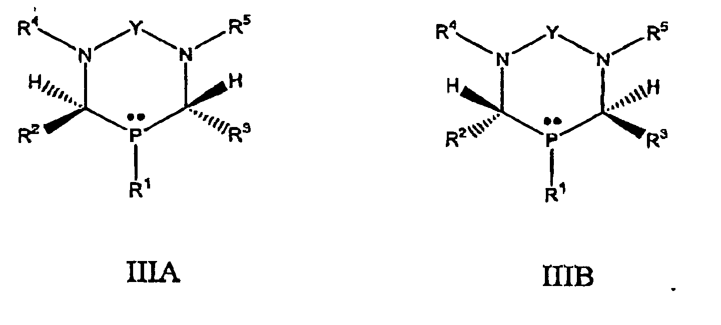

31. Übergangsmetallkomplex, umfassend den Diazaphosphacyclus nach einem der Ansprüche 23, 26 oder 30 und ein Übergangsmetall, wobei das Phosphoratom des Diazaphosphacyclus an das Übergangsmetall gebunden ist.

32. Übergangsmetallkomplex nach Anspruch 31, wobei das Übergangsmetall aus der Gruppe ausgewählt ist, die aus Rh, Ru, Pd, Pt, Ir, Ni, Co und Fe besteht.

33. übergangsmetallkomplex nach Anspruch 32, wobei der Übergangsmetallkomplex eine katalytische Aktivität aufweist.

34. Verfahren zum Katalysieren einer chemischen Reaktion, umfassend die Verwendung des Übergangsmetallkomplexes nach Anspruch 33 als ein Katalysator.

35. Diazaphosphacyclus nach Anspruch 23, wobei der Diazaphosphacyclus die Formel IIIC aufweist

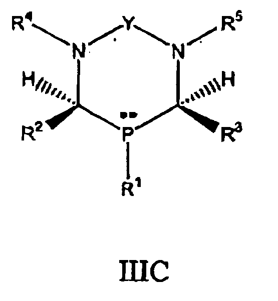

36. Diazaphosphacyclus nach Anspruch 23, wobei der Diazaphosphacyclus als ein Gemisch von Enantiomeren vorliegt.

37. Diazaphosphacyclus nach Anspruch 23, wobei der Diazaphosphacyclus die Formel X aufweist 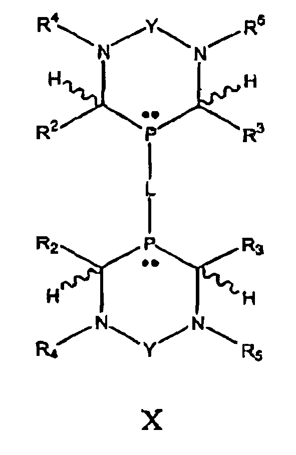 wobei L eine Verknüpfungsgruppe bedeutet, die aus substituierten und unsubstituierten Alkylgruppen, substituierten und unsubstituierten Alkenylgruppen, substituierten und unsubstituierten Arylgruppen und substituierten und unsubstituierten Ferrocenylgruppen ausgewählt ist.

38. Diazaphosphacyclus nach Anspruch 37, wobei L aus Ethan, Ethylen, Propan, Benzol, Anthracen, 9,10-Dihydroanthracen, Xanthen und Ferrocen ausgewählt ist.

39. Übergangsmetallkomplex, umfassend den Diazaphosphacyclus nach Anspruch 37 und ein Übergangsmetall, wobei mindestens eines der Phosphoratome des Diazaphosphacyclus an das Übergangsmetall gebunden ist.

40. Übergangsmetallkomplex nach Anspruch 39, wobei das Übergangsmetall aus der Gruppe ausgewählt ist, die aus Rh, Ru, Pd, Pt, Ir, Ni, Co und Fe besteht.

41. Übergangsmetallkomplex nach Anspruch 39, wobei zwei der Phosphoratome des Diazaphosphacyclus an das Übergangsmetall gebunden sind.

42. Verfahren zum Synthetisieren eines Diazaphosphacyclus-Übergangsmetall-Komplexes, umfassend das Umsetzen des Diazaphosphacyclus nach Anspruch 23 mit einem Ausgangs-Übergangsmetall-Komplex zur Bildung des Diazaphosphacyclus-Übergangsmetall-Komplexes, wobei der Ausgangs-übergangsmetall-Komplex mindestens einen Liganden umfasst, der durch den Diazaphosphacyclus ersetzt wird.

43. Verfahren nach Anspruch 42, wobei der durch den Diazaphosphacyclus ersetzte Ligand ausgewählt ist aus Phosphinen; Aminen; Diaminen; CO; Cl; Br; Nitrilen; 1,5-Cyclooctadien, Norbornadien und anderen Dienen; Alkenen; Arenen; Ketonen; Alkoholen; Ethern; Thiolen; und Sulfoxiden.

## Revendications

1. Procédé de synthèse d'un diazaphosphacyclane, lequel procédé comporte le fait de faire réagir une phosphine avec une diimine et avec, en option, un ou plusieurs équivalent(s) d'un halogénure d'acide, d'un halogénure de sulfonyle, d'un halogénure de phosphoryle ou d'un anhydride d'acide, pratiquement en l'absence d'oxygène, de manière à former un diazaphosphacyclane, et dans lequel procédé la phosphine est de formule I, la diimine est de formule II et le diazaphosphacyclane est de formule III : 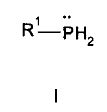 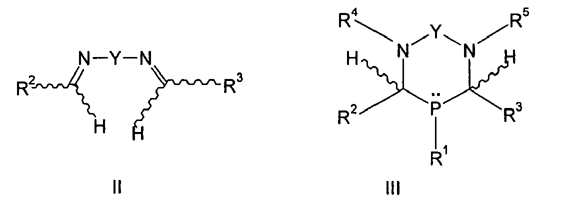 dans lesquelles formules :
- R¹ représente une entité choisie parmi les groupes aryle avec ou sans substituant(s), les groupes alkyle avec ou sans substituant(s), les groupes alcényle avec ou sans substituant(s), les groupes cycloalkyle avec ou sans substituant(s), et les groupes ferrocényle avec ou sans substituant(s) ;
- R² et R³ représentent des entités choisies indépendamment parmi les groupes aryle avec ou sans substituant(s), les groupes alkyle avec ou sans substituant(s), les groupes cycloalkyle avec ou sans substituant(s), les groupes hétérocyclyle avec ou sans substituant(s), et les groupes ferrocényle avec ou sans substituant(s) ;
- R⁴ représente une entité choisie parmi un atome d'hydrogène, les groupes alkyle avec ou sans substituant(s), les groupes cycloalkyle avec ou sans substituant(s), les groupes aryle avec ou sans substituant(s), les groupes trialkyl-silyle, triaryl-silyle, alkyl-diaryl-silyle et dialkyl-arylsilyle, et les groupes de formules -C(=O)R⁶, -S(=O)₂R⁶, -P(=O)R⁶R⁷ et -C(=NR⁶)R⁷ ;
- R⁵ représente une entité choisie parmi un atome d'hydrogène, les groupes alkyle avec ou sans substituant(s), les groupes cycloalkyle avec ou sans substituant(s), les groupes aryle avec ou sans substituant(s), les groupes trialkyl-silyle, triaryl-silyle, alkyl-diaryl-silyle et dialkyl-arylsilyle, et les groupes de formules -C(=O)R⁷ -S(=O)₂R⁶, -P(=O)R⁶R⁷ et -C(=NR⁶)R⁷ ;
- R⁶ représente une entité choisie parmi les groupes alkyle avec ou sans substituant(s), les groupes alcényle avec ou sans substituant(s), les groupes cycloalkyle avec ou sans substituant(s), les groupes aryle avec ou sans substituant(s), un groupe hydroxyle, les groupes alcoxy avec ou sans substituant(s), les groupes aryloxy avec ou sans substituant(s) et les groupes alkylamino, arylamino, diarylamino, dialkylamino, N-alkylarylamino, alkylthio et arylthio ;
- R⁷ représente une entité choisie parmi les groupes alkyle avec ou sans substituant(s), les groupes alcényle avec ou sans substituant(s), les groupes cycloalkyle avec ou sans substituant(s), les groupes aryle avec ou sans substituant(s), un groupe hydroxyle, les groupes alcoxy avec ou sans substituant(s), les groupes aryloxy avec ou sans substituant(s) et les groupes alkylamino, arylamino, diarylamino, dialkylamino, N-alkylarylamino, alkylthio et arylthio ;
- des entités représentées par R⁶ et R⁷ pouvant faire partie du même groupe alkyle, alcényle ou aryle, de telle façon que les entités représentées par R⁴ et R⁵ forment un cycle, conjointement avec les deux atomes d'azote du diazaphosphacyclane ;
- et Y représente un groupe de raccord choisi parmi les groupes cycloalkyle avec ou sans substituant(s), les groupes aryle avec ou sans substituant(s), les groupes alcényle avec ou sans substituant(s), les groupes silyle, les groupes alkyle avec substituant(s), et les groupes de formule -(CH2)n- où l'indice n vaut 0, 1, 2 ou 3.

2. Procédé conforme à la revendication 1, dans lequel l'indice n est nul.

3. Procédé conforme à la revendication 1, dans lequel Y représente un groupe cycloalkyle et l'un des atomes d'azote de la diimine est lié à un premier atome de carbone, chaînon du cycle de ce groupe cycloalkyle, tandis que l'autre atome d'azote de la diimine est lié à un deuxième atome de carbone chaînon du cycle qui est lui-même lié audit premier atome de carbone chaînon de cycle.

4. Procédé conforme à la revendication 1, dans lequel Y représente un groupe de formule : 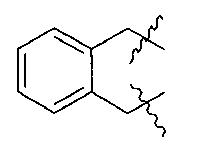 dont le cycle benzénique peut porter un susbtituant supplémentaire.

5. Procédé conforme à la revendication 1, dans lequel R² et R³ représentent des entités identiques, mais qui ne font pas partie du même groupe.

6. Procédé conforme à la revendication 1, dans lequel le diazaphosphacyclane est choisi parmi les composés de formule IIIA et les composés de formule IIIB, ainsi que les mélanges de tels composés :

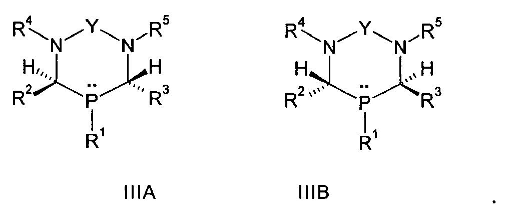

7. Procédé conforme à la revendication 6, dans lequel l'indice n est nul.

8. Procédé conforme à la revendication 1, dans lequel le diazaphosphacyclane est un composé de formule IIIC :

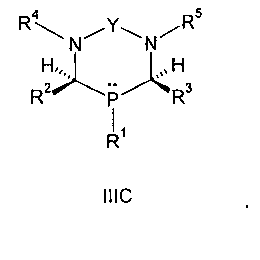

9. Procédé conforme à la revendication 8, dans lequel l'indice n est nul.

10. Procédé conforme à la revendication 1, dans lequel on fait réagir la phosphine et la diimine en présence d'un acide.

11. Procédé conforme à la revendication 1, dans lequel on fait réagir la phosphine et la diimine en présence de l'halogénure d'acide, de l'halogénure de sulfonyle, de l'halogénure de phosphoryle ou de l'anhydride d'acide, et au moins l'un des symboles R⁴ et R⁵ ne représente pas un atome d'hydrogène.

12. Procédé conforme à la revendication 1, dans lequel on fait réagir la phosphine et la diimine en présence de l'halogénure d'acide, et en outre, R⁴ représente un groupe de formule -C(=O)R⁶ et R⁵ représente un groupe de formule -C(=O)R⁷.

13. Procédé conforme à la revendication 1, dans lequel on fait réagir la phosphine et la diimine en présence de dichlorure de phtaloyle ou de dibromure de phtaloyle.

14. Procédé conforme à la revendication 1, dans lequel l'entité représentée par R¹ comporte un ou plusieurs groupes de formule -PH₂, si bien que la phosphine est une polyphosphine.

15. Procédé conforme à la revendication 14, dans lequel la polyphosphine est choisie parmi les composés suivants : 1,2-diphosphinoéthane, 1,2-diphosphinoéthylène, 1,3-diphosphinopropane, 1,2-diphosphinobenzène avec ou sans substituant(s), 1,8-diphosphinoanthracène avec ou sans substituant(s), 1,8-diphosphino-9,10-dihydroanthracène avec ou sans substituant(s), 1,8-diphosphinoxanthène avec ou sans substituant(s), et 1,1'-diphosphinoferrocène avec ou sans substituant(s).

16. Procédé conforme à la revendication 1, dans lequel on fait réagir la phosphine, la diimine et le cas échéant, l'halogénure d'acide dans un solvant sensiblement désoxygéné, comprenant un éther, un alcool, de l'eau ou du dichloroéthane, ou une combinaison de tels solvants.

17. Procédé conforme à la revendication 1, par lequel on produit, grâce à une méthode de chimie combinatoire, une bibliothèque de différents diazaphosphacyclanes.

18. Procédé conforme à la revendication 1, qui comporte en outre le fait de faire réagir un halogénure d'acide, un anhydride d'acide, un halogénure de phosphoryle ou un halogénure de sulfonyle avec le diazaphosphacyclane, afin d'obtenir un deuxième diazaphosphacyclane, et dans lequel procédé les symboles R⁴ et R⁵ représentent tous les deux des atomes d'hy-drogène dans le diazaphosphacyclane alors que, dans le deuxième diaza-phosphacyclane, au moins l'un des symboles R⁴ et R⁵ ne représente pas un atome d'hydrogène.

19. Procédé conforme à la revendication 1, qui comporte :
a) le fait de faire réagir une diimine avec un halogénure d'acide, un dihalogénure de diacide, un halogénure de sulfonyle, un dihalogénure de disulfonyle, un halogénure de phosphoryle ou un dihalogénure de diphosphoryle, pour former un composé intermédiaire dihalogéné,
b) et le fait de faire réagir ce composé intermédiaire dihalogéné avec une phosphine de formule R¹-PH₂, pratiquement en l'absence d'oxygène, de manière à former le diazaphosphacyclane,
et dans lequel procédé R¹ représente une entité choisie parmi les groupes aryle avec ou sans substituant(s), les groupes alkyle avec ou sans substituant(s), les groupes alcényle avec ou sans substituant(s), les groupes cycloalkyle avec ou sans substituant(s), et les groupes ferrocényle avec ou sans substituant(s), et la diimine est un composé de formule IV : 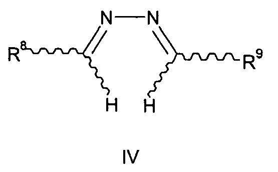 dans laquelle R⁸ et R⁹ représentent des entités choisies indépendamment parmi les groupes aryle avec ou sans substituant(s), les groupes alkyle avec ou sans substituant(s), les groupes cycloalkyle avec ou sans substituant(s), les groupes hétérocyclyle avec ou sans substituant(s), et les groupes ferrocényle avec ou sans substituant(s).

20. Procédé conforme à la revendication 19, dans lequel on fait réagir la diimine avec un dihalogénure de diacyle, lequel dihalogénure de diacyle est un composé de formule V ou VI : 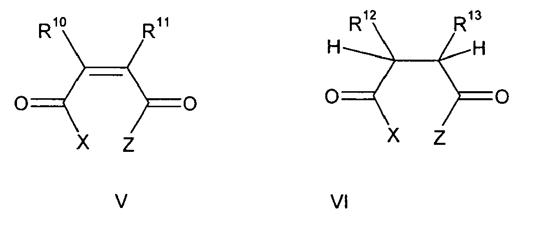 et le diazaphosphacyclane est un composé de formule VII ou VIII : 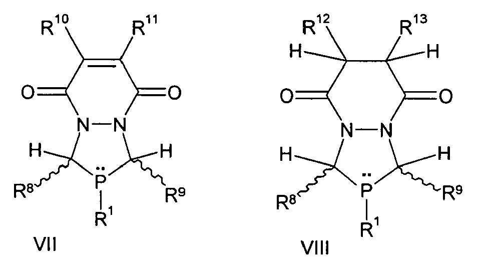 dans lesquelles formules :
- R¹⁰, R¹¹, R¹² et R¹³ représentent des entités indépendamment choisies parmi un atome d'hydrogène, les groupes alkyle avec ou sans substituant(s), les groupes cycloalkyle avec ou sans substituant(s) et les groupes aryle avec ou sans substituant(s),
- mais R¹⁰ et R¹¹ peuvent aussi représenter des entités qui, raccordées ensemble, forment un groupe aryle avec ou sans substituant(s) ou un groupe cycloalcényle avec ou sans substituant(s),
- et R¹² et R¹³ peuvent aussi représenter des entités qui, raccordées ensemble, forment un groupe cycloalcényle avec ou sans substituant(s) ou un groupe cycloalkyle avec ou sans substituant(s),
- et X et Z représentent des entités indépendamment choisies parmi les atomes de chlore et de brome.

21. Procédé conforme à la revendication 20, dans lequel les symboles R⁸ et R⁹ représentent des entités identiques, qui ne font pas partie du même groupe et qui sont des groupes aryle avec ou sans substituant(s).

22. Procédé conforme à la revendication 20, dans lequel le dihalogénure de diacyle est du dichlorure de phtaloyle.

23. Diazaphosphacyclane de formule III, ainsi que les sels d'un tel composé : 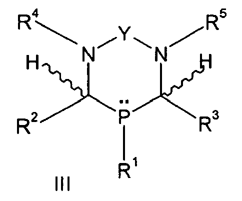 dans laquelle
- R¹ représente une entité choisie parmi les groupes aryle avec ou sans substituant(s), les groupes alkyle avec ou sans substituant(s), les groupes alcényle avec ou sans substituant(s), les groupes cycloalkyle avec ou sans substituant(s), et les groupes ferrocényle avec ou sans substituant(s) ;
- R² et R³ représentent des entités choisies indépendamment parmi les groupes aryle avec ou sans substituant(s), les groupes alkyle avec ou sans substituant(s), les groupes cycloalkyle avec ou sans substituant(s), les groupes hétérocyclyle avec ou sans substituant(s), et les groupes ferrocényle avec ou sans substituant(s) ;
- R⁴ représente une entité choisie parmi un atome d'hydrogène, les groupes alkyle avec ou sans substituant(s), les groupes cycloalkyle avec ou sans substituant(s), les groupes aryle avec ou sans substituant(s), les groupes trialkyl-silyle, triaryl-silyle, alkyl-diaryl-silyle et dialkyl-arylsilyle, et les groupes de formules -C(=O)R⁶, -S(=O)₂R⁶, -P(=O)R⁶R⁷ et -C(=NR⁶)R⁷ ;
- R⁵ représente une entité choisie parmi un atome d'hydrogène, les groupes alkyle avec ou sans substituant(s), les groupes cycloalkyle avec ou sans substituant(s), les groupes aryle avec ou sans substituant(s), les groupes trialkyl-silyle, triaryl-silyle, alkyl-diaryl-silyle et dialkyl-arylsilyle, et les groupes de formules -C(=O)R⁷, -S(=O)₂R⁶, -P(=O)R⁶R⁷ et -C(=NR⁶)R⁷;
- R⁶ représente une entité choisie parmi les groupes alkyle avec ou sans substituant(s), les groupes alcényle avec ou sans substituant(s), les groupes cycloalkyle avec ou sans substituant(s), les groupes aryle avec ou sans substituant(s), un groupe hydroxyle, les groupes alcoxy avec ou sans substituant(s), les groupes aryloxy avec ou sans substituant(s) et les groupes alkylamino, arylamino, diarylamino, dialkylamino, N-alkylarylamino, alkylthio et arylthio ;
- R⁷ représente une entité choisie parmi les groupes alkyle avec ou sans substituant(s), les groupes alcényle avec ou sans substituant(s), les groupes cycloalkyle avec ou sans substituant(s), les groupes aryle avec ou sans substituant(s), un groupe hydroxyle, les groupes alcoxy avec ou sans substituant(s), les groupes aryloxy avec ou sans substituant(s) et les groupes alkylamino, arylamino, diarylamino, dialkylamino, N-alkylarylamino, alkylthio et arylthio ;
- des entités représentées par R⁶ et R⁷ pouvant faire partie du même groupe alkyle, alcényle ou aryle, de telle façon que les entités représentées par R⁴ et R⁵ forment un cycle, conjointement avec les deux atomes d'azote du diazaphosphacyclane ;
- et Y représente un groupe de raccord choisi parmi les groupes cycloalkyle avec ou sans substituant(s), les groupes aryle avec ou sans substituant(s), les groupes alcényle avec ou sans substituant(s), les groupes silyle, les groupes alkyle avec substituant(s), et les groupes de formule -(CH₂)ₙ- où l'indice n vaut 0, 1, 2 ou 3.

24. Diazaphosphacyclane conforme à la revendication 23, dans lequel l'indice n est nul.

25. Diazaphosphacyclane conforme à la revendication 24, dans lequel les deux symboles R⁴ et R⁵ représentent des atomes d'hydrogène.

26. Diazaphosphacyclane conforme à la revendication 24, dans lequel R⁴ représente un groupe de formule -C(=O)R⁶ et R⁵ représente un groupe de formule -C(=O)R⁷.

27. Diazaphosphacyclane conforme à la revendication 26, lequel diazaphosphacyclane est un composé de formule IX : 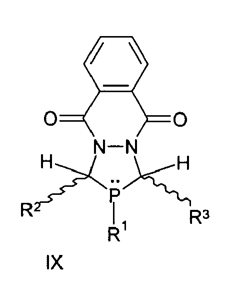 dans lequel composé de formule IX le cycle aromatique de type benzène peut porter un ou des susbtituant(s) ou ne porter aucun substituant.

28. Diazaphosphacyclane conforme à la revendication 23, dans lequel Y représente un groupe cycloalkyle et l'un des atomes d'azote est lié à un premier atome de carbone, chaînon du cycle de ce groupe cycloalkyle, tandis que l'autre atome d'azote est lié à un deuxième atome de carbone chaînon du cycle qui est lui-même lié audit premier atome de carbone chaînon de cycle.

29. Diazaphosphacyclane conforme à la revendication 23, dans lequel Y représente un groupe de formule : 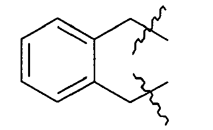 dont le cycle benzénique peut porter un susbtituant supplémentaire.

30. Diazaphosphacyclane conforme à la revendication 23, lequel diazaphosphacyclane est un composé de formule IIIA ou de formule IIIB, ou un mélange de tels composés :

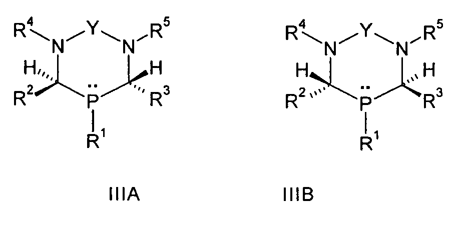

31. Complexe de métal de transition, comprenant un diazaphosphacyclane conforme à la revendication 23, 26 ou 30 et un métal de transition, dans lequel complexe l'atome de phosphore du diazaphosphacyclane est lié à un atome du métal de transition.

32. Complexe de métal de transition, conforme à la revendication 31, dans lequel le métal de transition est choisi dans l'ensemble formé par les suivants : rhodium, ruthénium, palladium, platine, iridium, nickel, fer et cobalt.

33. Complexe de métal de transition, conforme à la revendication 32, lequel complexe de métal de transition possède une activité catalytique.

34. Procédé de catalyse d'une réaction chimique, qui comporte le fait d'employer comme catalyseur un complexe de métal de transition, conforme à la revendication 33.

35. Diazaphosphacyclane conforme à la revendication 23, lequel diazaphosphacyclane est un composé de formule IIIC :

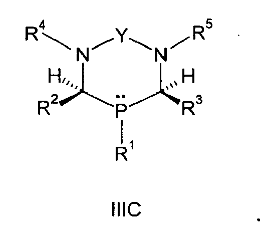

36. Diazaphosphacyclane conforme à la revendication 23, lequel diazaphosphacyclane se présente sous forme d'un mélange d'énantiomères.

37. Diazaphosphacyclane conforme à la revendication 23, lequel diazaphosphacyclane est un composé de formule X : 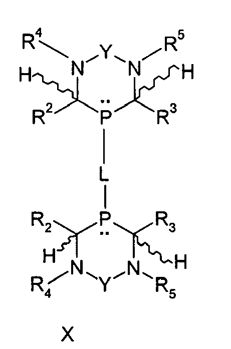 dans lequel L représente un groupe de raccord choisi parmi les groupes alkyle avec ou sans substituant(s), les groupes alcényle avec ou sans substituant(s), les groupes aryle avec ou sans substituant(s), et les groupes ferrocényle avec ou sans substituant(s)

38. Diazaphosphacyclane conforme à la revendication 37, dans lequel L représente un groupe choisi parmi ceux qui dérivent de l'éthane, de l'éthylène, du propane, du benzène, de l'anthracène, du 9,10-dihydroanthracène, du xanthène ou du ferrocène.

39. Complexe de métal de transition, comprenant un diazaphosphacyclane conforme à la revendication 37 et un métal de transition, dans lequel complexe au moins l'un des atomes de phosphore du diazaphosphacyclane est lié à un atome du métal de transition.

40. Complexe de métal de transition, conforme à la revendication 39, dans lequel le métal de transition est choisi dans l'ensemble formé par les suivants : rhodium, ruthénium, palladium, platine, iridium, nickel, fer et cobalt.

41. Complexe de métal de transition, conforme à la revendication 39, dans lequel les deux atomes de phosphore du diazaphosphacyclane sont liés à un atome du métal de transition.

42. Procédé de synthèse d'un complexe de diazaphosphacyclane et de métal de transition, qui comporte le fait de faire réagir un diazaphosphacyclane, conforme à la revendication 23, avec un complexe de métal de transition de départ, de manière à obtenir le complexe de diazaphosphacyclane et de métal de transition, et dans lequel le complexe de métal de transition de départ contient au moins un ligand qui est remplacé par le diazaphosphacyclane.

43. Procédé conforme à la revendication 42, dans lequel le ligand remplacé par le diazaphosphacyclane est choisi parmi les phosphines, les amines, les diamines, les ligands de formules CO, C1 et Br, les nitriles, le 1,5-cyclooctadiène, le norbornadiène et les autres diènes, les alcènes, les arènes, les cétones, les alcools, les éthers, les thiols et les sulfoxydes.
